(19) Europäisches Patentamt
European Patent Office
Office européen des brevets

(11) EP 0 586 690 B1

(12) **EUROPEAN PATENT SPECIFICATION**

(45) Date of publication and mention of the grant of the patent:
**04.03.1998 Bulletin 1998/10**

(21) Application number: **93908882.9**

(22) Date of filing: **31.03.1993**

(51) Int. Cl.$^6$: **A23L 3/3445**, A23L 3/3409, A23B 7/152, A23B 4/16, A23B 5/10, A23B 9/18, A23B 9/22, A23D 9/06

(86) International application number:
**PCT/EP93/00806**

(87) International publication number:
**WO 93/19629 (14.10.1993 Gazette 1993/25)**

(54) **METHOD OF PRESERVING FOODS USING NOBLE GASES**
VERFAHREN ZUR BEWAHRUNG VON LEBENSMITTELN MITTELS EDELGASEN
PROCEDE DE CONSERVATION DE DENREES ALIMENTAIRES A L'AIDE DE GAZ NOBLES

(84) Designated Contracting States:
**CH DE ES FR GB IT LI**

(30) Priority: **03.04.1992 US 863172**
**27.11.1992 US 982464**
**27.11.1992 US 982492**

(43) Date of publication of application:
**16.03.1994 Bulletin 1994/11**

(60) Divisional application:
**97201846.9 / 0 815 745**

(73) Proprietor:
**L'AIR LIQUIDE, SOCIETE ANONYME POUR L'ETUDE ET L'EXPLOITATION DES PROCEDES GEORGES CLAUDE**
**75321 Paris Cédex 07 (FR)**

(72) Inventors:
- **SPENCER, Kevin, C.**
  **Hinsdale, IL 60521 (US)**
- **ROJAK, Patricia, A.**
  **Wheaton, IL 60187 (US)**

(74) Representative:
**Le Moenner, Gabriel et al**
**L'AIR LIQUIDE, Société Anonyme pour l'étude et l'exploitation des procédés Georges Claude**
**75, Quai d'Orsay**
**75321 Paris Cédex 07 (FR)**

(56) References cited:
**EP-A- 0 289 777** **EP-A- 0 346 201**
**DE-A- 3 446 829** **US-A- 3 183 171**

- **DATABASE WPIL Derwent Publications Ltd., London, GB; AN 85-181496**
- **DATABASE WPIL Derwent Publications Ltd., London, GB; AN 88-363951**
- **DATABASE WPI Derwent Publications Ltd., London, GB; AN 77-73631**
- **PATENT ABSTRACTS OF JAPAN vol. 8, no. 30 (C-209)8 February 1984**
- **SCHWEIZERISCHE MILCHWIRTSCHAFTLICHEFORSCHUNG vol. 21, no. 1, 1992, pages 6 - 11 COLLOMB ET AL. 'Optimisation des conditions d'entreposage des echantillons de fromage en laboratoire à l'aide d'analyses chimiques'**

Remarks:
Divisional application 97201846.9 filed on 17/06/97.

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 586 690 B1

Printed by Xerox (UK) Business Services
2.15.12/3.4

## Description

BACKGROUND OF THE INVENTION

### Field of the Invention

The present invention relates to a method of preserving vegetables using noble gases.

### Description of the Background

The ability of noble gases helium (He), neon (Ne), argon (Ar), krypton (Kr), xenon (Xe) and radon (Ra) to enter into chemical combination with other atoms is extremely limited. Generally, only krypton, xenon and radon have been induced to react with other atoms, which are highly reactive such as fluorine and oxygen, and the compounds thus formed are explosively unstable. See Advanced Inorganic Chemistry, by F.A. Cotton and G. Wilkinson (Wiley, Third Edition). However, while the noble gases are, in general, chemically inert, xenon is known to exhibit certain physiological effects, such as anesthesia. Other physiological effects have also been observed with other inert gases such as nitrogen, which, for example, is known to cause narcosis when used under great pressure in deep-sea diving.

It has been reported in U.S. 3,183,171 to Schreiner that argon and other inert gases can influence the growth rate of fungi and argon is known to improve the preservation of fish or seafood. U.S. 4,946,326 to Schvester, JP 52105232, JP 80002271 and JP 77027699. However, the fundamental lack of understanding of these observations clearly renders such results difficult, if not impossible, to interpret. Moreover, the meaning of such observations is further obscured by the fact that mixtures of many gases, including oxygen, were used in these studies. Further, some of these studies were conducted at hyperbaric pressures and at freezing temperatures. At such high pressures, it is likely that the observed results were caused by pressure damage to cellular components and to the enzymes themselves.

For example, from 1964 to 1966, Schreiner documented the physiological effects of inert gases particularly as related to anesthetic effects and in studies relating to the development of suitable containment atmospheres for deep-sea diving, submarines and spacecraft. The results of this study are summarized in three reports, each entitled: "Technical Report. The Physiological Effects of Argon, Helium and the Rare Gases," prepared for the Office of Naval Research, Department of the Navy. Contract Nonr 4115(00), NR: 102-597. Three later summaries and abstracts of this study were published.

One abstract, "Inert Gas Interactions and Effects on Enzymatically Active Proteins," Fed. Proc. 26:650 (1967), restates the observation that the noble and other inert gases produce physiological effects at elevated partial pressures in intact animals (narcosis) and in microbial and mammalian cell systems (growth inhibition).

A second abstract, "A Possible Molecular Mechanism for the Biological Activity of Chemically Inert Gases," In: Intern. Congr. Physiol. Sci., 23rd, Tokyo, restates the observation that the inert gases exhibit biological activity at various levels of cellular organization at high pressures.

Also, a summary of the general biological effects of the noble gases was published by Schreiner in which the principal results of his earlier research are restated. "General Biological Effects of the Helium-Xenon Series of Elements," Fed. Proc. 27:872-878 (1968).

However, in 1969, Behnke et al refuted the major conclusions of Schreiner. Behnke et al concluded that the effects reported earlier by Schreiner are irreproducible and result solely from hydrostatic pressure, i.e., that no effects of noble gases upon enzymes are demonstrable. "Enzyme-Catalyzed Reactions as Influenced by Inert Gases at High Pressures." J. Food Sci. 34:370-375.

In essence, the studies of Schreiner were based upon the hypothesis that chemically inert gases compete with oxygen molecules for cellular sites and that oxygen displacement depends upon the ratio of oxygen to inert gas concentrations. This hypothesis was never demonstrated as the greatest observed effects (only inhibitory effects were observed) were observed with nitrous oxide and found to be independent of oxygen partial pressure. Moreover, the inhibition observed was only 1.9% inhibition per atmosphere of added nitrous oxide.

In order to refute the earlier work of Schreiner, Behnke et al independently tested the effect of high hydrostatic pressures upon enzymes, and attempted to reproduce the results obtained by Schreiner. Behnke et al found that increasing gas pressure of nitrogen or argon beyond that necessary to observe a slight inhibition of chymotrypsin, invertase and tyrosinase caused no further increase in inhibition, in direct contrast to the finding of Schreiner.

The findings of Behnke et al can be explained by simple initial hydrostatic inhibition, which is released upon stabilization of pressure. Clearly, the findings cannot be explained by the chemical-$O_2$/inert gas interdependence as proposed by Schreiner. Behnke et al concluded that high pressure inert gases inhibit tyrosinase in non-fluid (i.e., gelatin) systems by decreasing oxygen availability, rather than by physically altering the enzyme. This conclusion is in direct contrast to the findings of Schreiner.

In addition to the refutation by Behnke et al, the results reported by Schreiner are difficult, if not impossible, to interpret for other reasons as well.

First, all analyses were performed at very high pressure, and were not controlled for hydrostatic pressure effects.

Second, in many instances, no significant differences were observed between the various noble gases, nor between the noble gases and nitrogen.

Third, knowledge of enzyme mode of action and inhibition was very poor at the time of these studies, as were the purities of enzymes used. It is impossible to be certain that confounding enzyme activities were not present or that measurements were made with a degree of resolution sufficient to rank different gases as to effectiveness. Further, any specific mode of action could only be set forth as an untestable hypothesis.

Fourth, solubility differences between the various gases were not controlled, nor considered in the result.

Fifth, all tests were conducted using high pressures of inert gases superimposed upon 1 atmosphere of air, thus providing inadequate control of oxygen tension.

Sixth, all gas effects reported are only inhibitions.

Seventh, not all of the procedures in the work have been fully described, and may not have been experimentally controlled. Further, long delays after initiation of the enzyme reaction precluded following the entire course of reaction, with resultant loss of the highest readable rates of change.

Eighth, the reported data ranges have high variability based upon a small number of observations, thus precluding significance.

Ninth, the levels of inhibition observed are very small even at high pressures.

Tenth, studies reporting a dependence upon enzyme concentration do not report significant usable figures.

Eleventh, all reports of inhibitory potential of inert gases at low pressures, i.e., <203 kPa (<2 atm.), are postulated based upon extrapolated lines from high pressure measurements, not actual data.

Finally, it is worthy of reiterating that the results of Behnke et al clearly contradict those reported by Schreiner in several crucial respects, mainly that high pressure effects are small and that hydrostatic effects, which were not controlled by Schreiner, are the primary cause of the incorrect conclusions made in those studies.

Additionally, although it was reported by Sandhoff et al., FEBS Letters, vol. 62, no. 3 (March, 1976) that xenon, nitrous oxide and halothane enhance the activity of particulate sialidase, these results are questionable due to the highly impure enzymes used in this study and are probably due to inhibitory oxidases in the particles.

To summarize the above patents and publications and to mention others related thereto, the following is noted.

Behnke et al (1969), disclose that enzyme-catalyzed reactions are influenced by inert gases at high pressures. J. Food Sci. 34: 370-375.

Schreiner et al (1967), describe inert gas interactions and effects on enzymatically, active proteins. Abstract No. 2209. Fed. Proc. 26:650.

Schreiner, H.R. 1964, Technical Report, describes the physiological effects of argon, helium and the rare gases. Contract Nonr 4115 (00), NR: 102-597. Office of Naval Research, Washington, D.C.

Schreiner, H.R. 1965, Technical Report, describes the physiological effects of argon, helium and the rare gases. Contract Nonr 4115 (00), NR: 102-597. Office of Naval Research, Washington, D.C.

Schreiner, H.R. 1966, Technical Report, describes the physiological effects of argon, helium and the rare gases. Contract Nonr 4115 (00), NR: 102-597. Office of Naval Research, Washington, D.C.

Doebbler, G.F. et al, Fed. Proc. Vol. 26, p. 650 (1967) describes the effect of pressure or of reduced oxygen tension upon several different enzymes using the gases Kr, Xe, $SF_6$, $N_2O$, He, Ne, Ar and $N_2$. All gases were considered equal in their effect.

Colten et al, Undersea Biomed Res. 17(4), 297-304 (1990) describes the combined effect of helium and oxygen with high pressure upon the enzyme glutamate decarboxylase. notably, only the hyperbaric inhibitory effect of both helium and oxygen and the chemical inhibitory effect of oxygen was noted.

Nevertheless, at present, it is known that enzyme activities can be inhibited in several ways. For example, many enzymes can be inhibited by specific poisons that may be structurally related to their normal substrates. Alternatively, many different reagents are known to be specific inactivators of target enzymes. These reagents generally cause chemical modification at the active site of the enzyme to induce loss of catalytic activity, active-site-directed irreversible inactivation or affinity labeling. See Enzymatic Reaction Mechanisms by C. Walsh (W. H. Freeman & Co., 1979). Alternatively, certain multi-enzyme sequences are known to be regulated by particular enzymes known as regulatory or allosteric enzymes. See Bioenergetics, by A.L. Leninger (Benjamin/Cummings Publishing Co., 1973).

Gas packaging of foods for preservation is well known, and a general description of this technique may be found in A. L. Brody, Controlled/Modified Atmosphere/Vacuum Packaging of Foods, Food & Nutrition Press, Trumbull, CT 01989. A description of important consumer quality perception parameters is presented in J.J. Jen, Quality Factors of Fruits and Vegetables, Chemistry and Technology, ACS Symposium Series No. 405, American Chemical Society, Washington, D.C., 1989, and a description of the biochemical and chemical reactions important in foods may be found in N. A. Michael Eskin, Biochemistry of Foods, second ed., Academic Press, New York NY, 1990.

It is evident from these sources that a large preponderance of modern and past gas packaging methodologies have relied primarily upon the use of carbon dioxide, nitrogen, and oxygen, along or in mixtures. Generally, nitrogen is used as an inerting or non-reactive gas, to displace oxygen in order to prevent oxidation or limit respiration. Generally, carbon dioxide is used as a microbiocidal or microbiostatic agent, or as in the case of certain beverages, to provide an effervescent effect. Carbon dioxide is often used as an inerting gas. Generally, oxygen is used as such or as the active component in the inclusion of air to permit aerobic respiration or to prevent the development of anaerobic conditions which might permit the growth of pathogenic microorganisms.

For example, U.S. 4454723 describes a refrigerated trailer cooled by sprinkler water with concomitant release of inerting nitrogen from a cryogenic source, for inerting the respiration of produce.

CH 573848 also describes the inerting activity of nitrogen in the preparation of coffee packages.

Irisawa, 1974, describes the use of a nitrogen atmosphere or liquid in the preservation of strawberries, salmon, and fish.

Kocys and Veskevicius, 1970, describe the storage in nitrogen.

Lapin and Koburger, 1974 describe the storage of shrimp in N2, showing improved control of bacteria.

Moor, 1984 describe storage of malting barley in a N2 atmosphere.

Niu and Su, 1969, describe effective storage of bananas in N2.

Lebedeva et al., 1984, describe the utility of nitrogen in storage of sunflower seeds preserved in a nitrogen atmosphere as due to a change in oxidative metabolism, that is, respiratory rates.

U.S. 4515266 exemplifies the importance of package type in gas packaging applications. A modified atmosphere packaging high barrier film is used in the packaging, and a preservative atmosphere is introduced into the package. The essence of the packaging process is that it allows preservative gases, such as nitrogen gas for inerting, to be introduced, but at the same time prevents air from getting into the package which would allow oxygen to contact the food and which would then cause degradative oxidation of the food product.

U.S. 4522835 shows that gases whose molecules contain oxygen can often be reactive in food systems, herein including oxygen, carbon dioxide and carbon monoxide. Preservation of color in poultry, fish is claimed by reducing oxygen content to produce myoglobin/hemoglobin versus the ordinary oxidized states of oxymyoglobin/hemoglobin, and finally adding carbon monoxide to produce carboxymyoglobin/carboxyhemoglobin, then storing under carbon dioxide to maintain the thus improved color. Storage under inert nitrogen is possible, as is further reoxidation using oxygen.

EP 354337 claims the use of carbon dioxide as an antibacterial agent in the preservation of foods.

SU 871363 illustrates the complexity of gas packaging methodologies, as specific regimes of preparation and gas applications are often recommended. This patent describes the storage of plums in nitrogen, oxygen and carbon dioxide mixtures in three separate steps. 1st, 2-2.5 wks at 0°C in 78-82% nitrogen + 10-12% oxygen + 8-10% carbon dioxide; 2nd, for next 2.5-3 wks at -1°C in 93-95% nitrogen + 3-5% oxygen + 2-4% carbon dioxide; 3rd, remainder of storage period at -2°C in 90-92% nitrogen + 2.5-3.5% oxygen + 4.5-5.5% carbon dioxide. The method claims 99.4 vs 91-94% good condition after 151 days. This marginal increase may be considered to be due primarily to more effective regulation of the respiratory gas exchange between oxygen and carbon dioxide, where nitrogen plays no real part except as an inert bond non-reactive carrier gas.

SU 1245284 reinforces such concepts of treatment. Here cherries are better kept under a limiting respiratory mixture of carbon dioxide 5-8% + oxygen 4.5-5.5% + nitrogen bal. It is important that the fruit be picked at the correct maturation stage, and kept chilled at 0 to -1°C, also to lower respiration.

WO 9015546, CA 2019602, AU 9059469 each describes the importance of the climacteric state of foods, that is the ethylene-induced maturation phase of the product. Each discloses improved preservation of food in a process using two gas separators, where first, unwanted gases, such as ethylene, oxygen, carbon dioxideand water vapor are removed, second, the preservative (inert or respiratory mix) gas is supplied.

JP 55029426 use a complex mixture of 20-99.5% nitrogen and/or carbon dioxide + 80-0.5% ethanol vapor where residual oxygen is 10%. In an impermeable package, this is claimed to prevent sticky-substance forming fungi growth.

Burgheimer et al., 1967 provides evidence of the chemical changes which occur during exposure to oxygen, here spinach in air versus in a controlled atmosphere of nitrogen undergoes considerable degradative changes in vitamin C and ascorbic acid contents.

Similarly, Consignado et al. 1976 compare the sugar content of stored coconuts under air versus nitrogen, and find that sugar content is not surprisingly correlated with availability of oxygen for respiration.

Thus, it is evident that the gases oxygen, carbon dioxide, and nitrogen alone or in mixtures have the well-established effects of oxidation, antimicrobial activity, and inerting, repectively. It is also evident that the balance of such gases in an atmosphere superimposed upon living systems may depress respiration and the resulting production or maintenance of chemical and other food quality parameters in basic and well-understood ways. It is also evident that oxidative and reactive gases will have destructive effects upon chemical and biological systems.

Although literature has appeared describing the use of argon for packaging, this literature generally describes the gas to be completely inert and equivalent to nitrogen or the other noble gases in their non-reactivity.

It is also clear from the following literature citations that argon is typically described or used as an inert o;r non-reactive gas equivalent not only to nitrogen and the other noble gases, but that carbon dioxide, nitrous oxide and hydrogen and other gases are considered inert as well. This is particularly the case for food gas packaging systems.

For example, JP 2010077 describes the use of a mixed gas source to supply a gas packaged product with a mixture of nitrogen:carbon dioxide:ethylene 60:30:1 where the small amount of argon present is inert.

Also, JP 3058778 (89192663) describes storage and maturation of alcoholic drinks in an argon headspace. Deterioration can be prevented and maturation can be promoted or delayed by regulating the packaging density of argon. The utility of the argon lies in its displacement of oxygen, i.e., inerting.

JP 58101667 (88019147) describes sealing of citrus drink in vessels under pressure using an inert gas such as argon, so that bubbles are released upon opening which then cling to pulp.

JP 60134823 discloses a process whereby packaging of liquid food by is accomplished by feeding sterile liquid into the package under pressure with an inert gas, either nitrogen or argon.

JP 62069947 (88051660) discloses long term preservation of shiitake mushrooms in the dark in a container in a mixture of nitrogen:carbon dioxide:argon:nitrous oxide. Argon is described therein as an inert gas.

JP 63273435 describes preserving roasted chestnuts in a permeable container in a mixture of argon, carbon dioxide, nitrogen and nitrous oxide. The container is permeable to argon, therefore, it can have no utility.

JP 7319947 (730618) claims fruit juice preservation with noble gases. However, argon, helium and nitrogen are described as inert gases.

JP 77027699 describes a process for freezing and storing under pressure, the pressure being applied as carbon dioxide or nitrogen or argon or hydrogen, all being considered equally inert.

U.S. 4054672 (JP 7169757) describes the defrosting of frozen foods under a pressure of 203-508 kPa (2-5 atmospheres), preferably under carbon dioxide or nitrogen or helium or argon, all being inert, non-reactive and non-oxidizing.

JP 89192663 claims preservation of alcoholic beverages with argon, specifically sake and wine in containers, wherein argon is considered as a superior inerting agent due to its higher solubility than nitrogen.

U.S. 3096181 describes a food processing method and apparatus used in gas-packaging of tomato juice or liquid food products or vegetable concentrates, wherein any inert gas from the group of nitrogen, argon, krypton, helium, or mixtures thereof, are equally inert and useful at or above ambient pressure, after steam sterilization.

U.S. 3128188 describes lager Ruh beer under an inert atmosphere.

U.S. 3442657 claims the preservation of hops in an inert atmosphere.

U.S. 3498798, CA 867629 describe a package for potato crisps which is impermeable and in which an inert gas is used to displace oxygen as the functionally useful step. It is disclosed that any of nitrogen or carbon dioxide or argon or neon may be used equivalently.

U.S. 3535124 discloses a process for fresh fruit juice preservation in a dispenser using carbon dioxide, wherein preferably the juice is sprayed through an inert atmosphere.

U.S. 3587203 describes the gas packaging of tossed salad cut and prepared ready to eat, where it is stored in an inert atmosphere in order to prevent oxidative discoloration.

U.S. 3715860 describes a method of gas packaging wherein inert fluid passage through an impermeable container functions to remove oxygen and prevent spoilage.

U.S. 4152464 describes a method and apparatus to sterilize packages which includes applying sterile any inert gas into an enclosed space.

U.S. 4205132 describes the storage of lyophilized bacteria. Storage requires the complete absence of oxygen, preferably using argon inerting because argon commercially contains very low levels of oxygen.

U.S. 4229544 describes the storage of dormant living microorganisms by gas packaging in nitrogen, argon or helium, where all are equivalent.

U.S. 4391080 describes a gas packaging machine in which the essence of the invention is the filling of the package through the machine with sterile inert gas.

U.S. 4524082 describes the preparation of concentrated egg white or salted whole egg product under inert atmospheres.

U.S. 4627336 also describes a gas packaging apparatus which requires the flushing of inert gases to replace air.

In U.S. 4803090, which concerns the preparation of cheese puffs in hot oil, it was not noticed that different inert gases produce any difference in the product.

Also, U.S. 4835937 describes a food packaging process involving flushing and filling with inert gas.

A similar process is claimed in U.S. 4870801.

U.S. 4901887 claims a beverage dispenser which is pressurized with an inert gas.

In U.S. 4919955 a gas packaging method for meat is described wherein inert gas is used to package and store the meat, and at a later stage oxygen is added to the package to permit oxygenation of the myoglobin to produce a red color.

Cooling of foods by direct injection of gases is described in DE 2147880, ZA 7106193, FR 2107946, GB 1371027, where any of nitrogen, oxygen, argon, or even Air may be used equivalently.

DE 2736282, WO 7900092, HU H2477, GB 2021070, DD 137571, DD 137571, EP 6888 describe a beer tank road tanker charging system which uses inert gas constituting any of carbon dioxide, nitrogen, or noble gas.

A process is claimed in EP 146510, SE 8306164, NO 8404468, FI 8404402, DK 8405347 for extrusion of porous foodstuffs by compression, heating and extrusion in an inert atmosphere, e.g. nitrogen or carbon dioxide.

EP 289777, AU 8814003, JP 1020056, US 4895729 claim the packaging of cut or segmented fresh fruit pieces by flushing with O2-containing gas, sealing, cold shocking, refrigerating, wherein the preferred mixture is 5-50% oxygen and the balance is any inert gas from the group nitrogen, helium, argon or hydrogen.

BE 881368, DE 2903300, NL 8000353, GB 2042320, FR 2447155, US 4289148, CA 1127037, CH 642519, NL 177974, IT 1130237 describe the improvement of packing capacity of tobacco by applying pressure using either nitrogen or argon then heating.

The pressurization of foods by sterile heat, followed by inert gas packaging is claimed in EP 368603, using either nitrogen or carbon dioxide. The factors of importance are water and oxygen content.

ES 8500634 discloses a method of vinification without using preservatives, using inert or non-reactive gas to displace oxygen to prevent aerobic microbial growth. Any of nitrogen, carbon dioxide, or the noble gases are deemed equally useful.

GB 1331533, FR 2089899, BE 765637, DE 2031068, CH 522734 describe a method of improving the keeping properties of alcoholic beverages produced by fermentation which prevents the destructive action of oxygen by displacing oxygen during or after fermentation and/or at any process stage and/or during storage under preferably nitrogen, but Ar or other noble gases may be used, all being equivalently inert.

IT 1190200 describes the use of an inert gas atmosphere upon agricultural products to prevent attack by aerobic microorganisms.

SU 249965 describes storage of brined meat e.g. ham under e.g. Ar as an inerting process.

SU 825619 describes a tank for storing wine in inert gas atm with filling controls. First the tank is filled with carbon dioxide, then wine is fed by pump or inert gas sprayer.

WO 8600503, DE 3425088, AU 8546026, EP 189442, DE 3448380 each disclose use of gas in the heating of liquid food products while maintaining pressure to prevent loss of aroma and prevent boiling. For milk and coffee prods, especially an inert gas and non-reactive such as nitrogen or a noble gas.

FR 2225095 describes the gas packaging of roasted coffee where the coffee is degassed in inert and non-reactive gas, preferably carbon dioxide, for 12-48 hrs, impermeable packets are filled with the coffee, a 50-90% partial vacuum is drawn, followed by injection of a preservative gas, where either argon or nitrogen at preferably less than 101 kPa (<1 atm) may be used equivalently. The effectiveness of such inerting is claimed as a ten-fold improvement in shelf life.

In FR 2621224 for avocado pulp or other, the grinding in inert gas, followed by adding other flavoring food product liquids is claimed.

Storage of refrigerated butter under an inert atmosphere is claimed in FR 2642275, where the gas may be nitrogen or others.

Rzhavskaya 1967 describes the utility of nitrogen in preventing oxidation of whale fats due to displacement of oxygen.

Shejbal, 1979a,b describes the use of nitrogen in preservation of cereals and oilseeds by inerting.

Terebulina et al., 1983 describes lipid oxidation of rice in air as controllable by displacement of oxygen to prevent repiration and oxidation.

Corey et al., 1983, in addressing storage issues, measured nitrogen and carbon dioxide diffusion rates through cucumber and found carbon dioxide was three times as soluble as nitrogen. Solubility was determined to be the critical factor in storage atmosphere choice. Argon was used as an inert gas control.

Fullerton et al., 1982 show improvement in storage of animal feeds under argon as inerting agent because of its solubility and lack of oxygen content.

Pichard et al., 1984 tested the enzymes of bacteria, specifically Pseudomanas proteases under carbon monoxide, carbon dioxide and nitrogen. Air and Ar as mixers and controls. Only carbon dioxide was found to have effects, which conflicted depending upon which protease was measured, and argon was specifically found not to have an effect on these enzymes.

Zee et al., 1984 studied the effects of carbon monoxide, carbon dioxide and nitrogen on bacterial growth on meat under gas packaging. They used argon as a fully inert control. It was found that argon and nitrogen were equivalent in inhibition of anaerobes, and acted as inerting agents in inhibiting aerobes. Specifically, 4 strict aerobes, 3 anaerobes, and 12 facultative anaerobes isolated from meat were grown under carbon dioxide, argon, nitrogen, carbon monoxide, where argon was "inert" containing 10-70% nitrogen, carbon dioxide or carbon monoxide. Ar effect was found to be due strictly due to the gases in which it was admixed.

In the medical area, the noble gases are described as being useful in the preservation of living organs, cells, and tissues, primarily due to the high solubility and penetrability of the gases. For example, Ikegami et al., 1979, compare sperm motility and viability in nitrogen, argon, helium and carbon dioxide, where thermal factors are most important.

SU 507187 discloses improved preservation of bone transplants in a mixture of argon and formalin. The function of the argon is claimed as inerting.

In U.S. 4008754, preservation of isolated organs is described wherein helium or nitrogen or helium + xenon or helium + xenon + sulfur hexafluoride function equally well in preserving tissues in cooling. Similar results are described in Voss et al., 1970; SU 1289437; Ruile et al., 1971; Braun et al., 1973 (for freezing); Poppert et al., 1973. In the latter, organ preservation in hyperbaric xenon is described.

Thus, it is evident from the above that argon is perceived of and has been clearly described in both patent and in literature citations to be an inert and non-reactive gas, capable of affecting biological systems, such as food products, medical tissues, chemical reactions, enzymes, and food storage parameters only by means of displacing more active gases, such as oxygen. Thus, argon has been conventionally considered to be the equivalent of nitrogen as an inert and non-reactive gas, and is presently differentiated for use in the food industry solely based upon such commercial factors as cost, availability, and purity.

While a few literature citations are known in which it has been even suggested that argon and other noble gases may have properties unique for application to biological systems or food, each of these citations are different and clearly fail to teach or even suggest the conclusion upon which the present invention is premised.

For example, JP 52105232, (80002271), 1059647 describe the use of a gas mixture containing argon for preserving roasted chestnuts by retarding the growth of anaerobic molds, and extends this preservation to include rice cakes, bread, cakes in 80-20:30:70 argon:carbon dioxide, describing that this prevents growth of molds and anaerobic microorganisms. However, the data provided are self-conflicting, holding that neither high nor low levels of argon have effects, but that intermediate values do, in a simple experiment in which significant data are not presented, no tests or controls for oxygen levels were conducted, and no demonstration of the described anaerobicity of the molds tested was made. In fact, the data do not show an improvement for argon, and may be interpreted as simply proposing the substitution of argon for nitrogen as an inert and non-reactive gas.

JP 55111755 describes the preservation of cereals or vegetables in nitrogen + carbon dioxide, optimally containing also helium or argon (1-10 preferably 4-6% in the mixture) in 5-70% carbon dioxide in 95-30% nitrogen. This description is made to allow for the inclusion of noble gases as contaminants in other gases, however, the disclosed benefit of the noble gases is demonstrably impossible as reducing the content of the noble gas in the mixture cannot and does not improve the possible benefit. Further, described improvement in storage of cereals and vegetables (rice, onions, potatoes) preserved for long periods manifested itself by the suppression of budding. Argon and helium are described specifically to help color and glossiness. At the levels described, no improvement is possible, and even repetition of these experiments can show no effect.

Further, Manchon, 1978 studied preservation of bread and pastry in controlled atmosphere packaging. Poor results were obtained using nitrogen or argon or nitrogen + carbon dioxide. Good results were obtained using nitrous oxide or ethylene oxide + carbon dioxide. However, nitrous oxide is a reactive gas, and experiments carried out as described could only have substantiated argon to be inert and non-reactive.

U.S. Patent 3183171 describes the control of fungal growth by noble gases. In particular, mixtures of carbon dioxide, carbon monoxide, oxygen, water vapor, or nitrogen with helium, xenon, krypton, neon, argon or a mixture of these, or a noble gas fraction constituting between three and ninety-five percent were used. Inhibition of growth rate is described for most mixes containing argon, xenon, krypton, or neon, while enhancement of growth rate is claimed when helium is added to certain mixtures. The very limited data were obtained solely for Neurospora crassa, as hyphal length increase over time.

U.S. Patent 3,183,171 is based upon data presented Neurospora crassa. This patent did not demonstrate that hypha growth is equivalent to growth of the organism. By contrast, in accordance with the present invention; as will be described hereinafter, it has been discovered that enzymes responsible for fungal growth are inhibited and it is evident that the data of U.S. Patent 3,183,171 describes effects for the control of hypha growth and not for the enzymatic control of microorganism growth. Thus, it is not possible from U.S. Patent 3,183,171 for the artisan to comprehend that effective control of microbial growth is possible with noble gases.

As proof thereof, it is noted that no application of practical utility in the control of microbial growth with noble gases has been made in the intervening twenty-five years.

Helium and high pressure application of various noble gases have been described as affecting the growth of bacteria (Fenn and Marquis, 1968, Thom and Marquis, 1979, Hegeman and Featherstone, 1969); protozoa (Sears et al., 1964), mammalian cells (Bruemmer et al.; 1967; Schreiner 1964, 1965, 1966 Nonr) and bacterial spore germination (Enfors and Molin, 1977). These results are cited in Schreiner, 1968 and Behnke et al., 1969). However, al of these reports provide inconclusive results and are difficult to interpret.

The use of nitrous oxide is described in US 3398001, where during preparation and packaging of frozen avocados, freezing in nitrous oxide or nitrogen, followed by packaging in nitrogen using and oxygen level of <2%, gave good preservational results.

A two-step treatment process for fresh fruits and vegetables is disclosed in EP 0422995 whereby nitrous oxide (10-100%) in admixture with oxygen and/or carbon dioxide is applied to vegetables for a time period in a first phase of treatment, followed by a separate second phase application of a gas mixture which contains nitrous oxide (10-99%) admixed with oxygen or carbon dioxide or nitrogen, which by action of the nitrous oxide then confers preservation. It is clearly described that nitrogen or argon are equally inert and non-reactive gases which may be freely used to complement in bulk any given gas mixture without effect.

Nitrous oxide has been shown to prevent ethylene formation and to provide significant fungistatic activity. For example, data are clearly presented in FR 2191850 proving the effective dissolution of nitrous oxide into the fruit/vegetable whereby it may be present to have an effect.

EP 0422995, AU 9063782, CA 2026847, ZA 9005704, FR 2652719, BR 9004977, JP 03206873, PT 95514 each describes a two-step treatment for preserving fresh vegetables by exposure at refrigeration temperature to an atmosphere of nitrous oxide and/or argon (other noble gases are specifically claimed to be inert) and optimally oxygen. Mixtures used variously include high titers of nitrous oxide, oxygen, carbon dioxide or nitrogen.

For packaging, a semipermeable membrane is described which has poor ability to retain argon. No controls were made, however, in the experiments for carbon dioxide or oxygen or nitrogen or argon, and no apparent action can be attributed to any gas except nitrous oxide.

The essence of each of these disclosures pertains to a two-step treatment process, not simple gas packaging, in which applied nitrous oxide or argon directly interferes with the production of ethylene by the fruit (tomatoes were tested). Argon is claimed to have specific utility in this regard, however, it is obvious from the data presented that the only effect of argon is to displace oxygen from the tissues of the fruit and thereby to limit respiration and thus ethylene production. The essential data presented in the figure purport to show a difference in ethylene production of air, nitrogen, argon and nitrous oxide which is precisely identical to their differences in solubility in the fruit (data given in EP 0422995 and below). In fact, this has been proven by duplicating the above experiment wherein adequate controls for solubility were made by inclusion of other gases, and finding that depression of ethylene is completely explained by oxygen displacement. Data are presented in Figure 1 of the present specification.

Thus, the above descriptions of uses of argon in food treatment demonstrate only the inertness or non-reactivity of argon and merely confirm its ability as a non-reactive gas to displace air.

Addition of argon to a known mixture of carbon dioxide + oxygen is claimed in Schvester & Saunders. US 4946326, EP 346201, PT 90762, AU 8936152, DK 8902755, BR 8902636, JP 2053435, ZA 8904258 to be effective in preservation of seafood and fish at 4°C. The mixture comprises in partial pressure 5-68% carbon dioxide + 5-20% oxygen + 27-45% argon (preferably 50:20:30 carbon dioxide:oxygen:argon). The text describes the mixture as slowing down enzymatic and chemical reactions at the surface and inside fish and seafood products, as well as growth of some microorganisms such as fungus. No such data are presented, and no claim is made thereto. Other studies on such mixtures and such products find opposite results.

The results disclosed are not generally reproducible, and, in fact, are due entirely to careful control of processing hygiene, and the effects of carbon dioxide on microbes. The results presented are generally not significant and do not control for the known effects of carbon dioxide, oxygen and nitrogen alone or in mixtures without noble gases. It is clearly not apparent from the data disclosed that any observed effect is in fact due to argon or to the specific mixture claimed. The effects may be rationally be concluded to be due to the other components alone or in partial combination.

Moreover, EP 354337 describes an effect of carbon dioxide upon bacterial systems. Such effects are widely known and understood as being caused by the depressive effect of carbon dioxide upon ordinary repiratory processes, which cannot be interpreted as being specifically antienzymatic. The observed results in US 4946326 can be largely attributed to the simple depression of respiration by carbon dioxide.

Additionally, JP 89/192663 describes the use of argon as an inert gas in the storage of liquors, while JP 88/51660 discloses the use of argon as an inert gas in the storage of mushrooms.

JP 87/108025 describes the use of a mixed gas including nitrogen, carbon dioxide, argon and nitrous oxide to store roasted chestnuts.

JP 70/66269 discloses a method of processing orange, lemon, group and pineapple juice and for preserving such juices by dissolving inert or non-reactive gases, such as nitrogen, argon and helium in the juice to a saturation level.

U.S. Patent No. 3,183,171 discloses the preparation of sausages using argon. However, this patent does not disclose or suggest the use of the gas mixtures of the present invention in preserving freshness of vegetables.

Derwent Abstract No. 85-181496 discloses a method of packing food such as cheese, fresh fruit, processed meats, fresh fish, fresh vegetables with a gas comprising of 50-100% carbon dioxide plus either nitrogen, argon, krypton, xenon or oxygen. The atmosphere of this reference therefore does not disclose a gaseous atmosphere consisting essentially of 80% to 95% volume of gaseous argon as claimed herein.

The reference entitled "Optimization des Conditions d'entreposage des échantillons de fromage en laboratoire à l'aide d'analyses chimiques", MILCHWIRTSCHAFTLICHEFORSCHUNG, vol. 21, no. 1, 1992, pages 6-11, COLLOMB et al. discloses cheese placed in an atmosphere of protective gas of argon or carbon dioxide for better conservation of the cheese. However this reference does not disclose the preservation of vegetables using the gas mixtures of the present invention.

Patent abstracts of Japan, vol. 8, no. 30, (C-209) 08/02/1984 discloses a method to breed taste and sterilize cocoa liquor, said liquor conventionally obtained by cacao beans. The cocoa liquor is placed in a container with an inert gas such as nitrogen, argon or carbon dioxide. Therefore, this reference does not disclose the process of the present invention for preserving vegetables using the gas mixtures as claimed herein.

Thus, a considerable volume of literature exists generally relating to the gas packaging or gas saturation of foods. Some of this literature relates to the use of noble gases and inert gases in food packaging, using such gases as inerting or non-reacting agents equivalent to nitrogen. However, it would be extremely advantageous if a means were attained by which food substances could be preserved directly and not indirectly by mere oxygen displacement.

It would be particularly advantageous if a means were attained by which certain widely used and particularly aromatic food substances such as cheese and chocolate could be preserved directly, and not indirectly by mere oxygen displacement, in order to improve the aroma and flavor thereof.

## SUMMARY OF THE INVENTION

Accordingly, it is an object of the present invention to provide a method of preserving vegetables using at least one noble gas.

It is also an object of the present invention to provide various gas mixtures for effecting the above method.

It is further, an object of the present invention to provide a method for inhibiting enzymes which cause microbial organisms to grow in vegetables and/or on vegetables.

It is also an object of the present invention to provide a method for inhibiting enzymes produced by vegetables which cause degradation thereof.

Moreover, it is an object of the present invention to provide a method for inhibiting enzymes secreted by spoilage microorganisms and/or on vegetables.

Further, it is an object of the present invention to provide a method for inhibiting enzymes in and/or on vegetables.

It is also an object of the present invention to provide a method for preserving color and/or appearance of vegetables.

Also, it is an object of the present invention to provide a method for inhibiting non-enzymatic chemical oxidation reactions of vegetables.

Moreover, it is an object of the present invention to provide a method for inhibiting chemical oxidative degradative reactions in vegetables.

It is also an object of the present invention to inhibit oxidative degration of color in vegetables.

Moreover, it is also an object of the present invention to provide a method for preserving vegetables without using technologies which result in undesired changes in vegetables, such as organoleptic, rheological, microbiological and nutritional changes.

Accordingly, the above objects and others which will become more apparent in view of the following disclosure are provided by a method of preserving vegetables by contacting the same with a noble gas, a mixture of noble gases or a gaseous mixture containing at least one noble gas.

## BRIEF DESCRIPTION OF THE DRAWINGS

Figure 1 illustrates weight change in tomatoes at room temperature due to gas uptake for different gases.

Figure 2 illustrates the effect of different gases as indicated on the enzyme tyrosinase at 25°C.

Figure 3 illustrates the effect of noble gas atmospheres upon the growth of *A. alternata*.

Figure 4 illustrates the effect of noble gas atmospheres upon the growth of *E. coli*.

Figure 5 illustrates the effect of different atmospheres as indicated upon the shelf-life of apples.

Figure 6 illustrates the effect of different atmospheres as indicated upon the microbial load for carrots stored at room temperature.

Figure 7 illustrates the effect of different atmospheres as indicated upon the microbial load for carrots stored at room temperature.

Figure 8 illustrates the effect of different atmospheres as indicated upon the microbial load for carrots stored at room temperature.

Figure 9 illustrates the effect of different atmospheres as indicated on the microbial load for refrigerated fish fillets.

Figure 10 illustrates the effect of different atmospheres as indicated on the microbial load for refrigerated fish fillets.

Figure 11 illustrates the effect of different atmospheres as indicated on the microbial load for refrigerated green beans.

Figure 12 illustrates the effect of different atmospheres as indicated on the microbial load for refrigerated green beans.

Figure 13 illustrates the effect of different atmospheres as indicated on the microbial load for refrigerated green beans.

Figure 14 illustrates the effect of different atmospheres as indicated on the microbial load for green beans stored at room temperature.

Figure 15 illustrates the effect of different atmospheres as indicated on the microbial load for green beans at room temperature.

Figure 16 illustrates the effect of different atmospheres as indicated on the microbial load for lettuce at room temperature.

Figure 17 illustrates the effect of different atmospheres as indicated on the microbial load for lettuce stored at room temperature.

Figure 18 illustrates the effect of different atmospheres as indicated on the microbial load for refrigerated mixed salad.

Figure 19 illustrates the effect of different atmospheres as indicated on the microbial load for refrigerated shrimp.

Figure 20 illustrates the effect of different atmospheres as indicated on the microbial load for refrigerated shrimp.

Figure 21 illustrates the effect of different atmospheres as indicated on the microbial load for refrigerated smelt.

Figure 22 illustrates the effect of different atmospheres as indicated on the microbial load for refrigerated smelt.

Figure 23 illustrates the effect of different atmospheres as indicated on the microbial load for strawberries at room temperature.

Figure 24 illustrates the effect of different atmospheres as indicated on the microbial load for strawberries at room temperature.

Figure 25 illustrates the effect of different atmospheres as indicated on the microbial load for strawberries at room temperature.

Figure 26 illustrates a process for making blue cheese.

Figure 27 illustrates a method of making cheddar cheese.

Figure 28 illustrates a process of making mozzarella cheese.

Figure 29 illustrates a process of making cottage cheese.

Figure 30 illustrates the effect of argon at different temperatures on the rennet/skim milk system.

Figure 31 illustrates the effect of oxygen at different temperatures on the rennet/skim milk system.

Figure 32 illustrates the effect of nitrogen on the rennet/skim milk system at different temperatures.

Figure 33 illustrates the effect of the present invention in enhancing the rennet/skim milk system at 30°C.

Figure 34 illustrates the effect of the gases of the present invention in enhancing the rennet/skim milk system at 35°C.

## DETAILED DESCRIPTION OF THE PREFERRED EMBODIMENTS

In accordance with the present invention, it has been surprisingly discovered that argon and the other noble gases, xenon, krypton, neon and helium, possess profound and significant properties in improving the preservation of vegetables in gas-packaging applications. These improvements are manifested at all levels, including the chemical, enzymatic, microbiological and consumer quality perception levels. In view of the following disclosure, it will now be clear to the artisan that the present invention has wide utility and application in preserving vegetables.

When compared to the use of conventional nitrogen/oxygen/carbon dioxide modified atmospheres, introduction of noble gases in the gaseous environment of packaged vegetable affords the extension of the shelf-life of those perishable products in a surprising manner. The gases and gas mixtures of the present invention act in at least three ways: 1) by controlling of endogenous (product origin) and exogenous (process origin and microbial origin) enzymes responsible for vegetable degradation, 2) by controlling of the growth of spoilage microorganisms, and 3) by controlling chemical oxidations and other chemical reactions.

What is described hereinafter represents a fundamental advancement in controlling microbial growth germane to the preservation of vegetable and secondary to a comprehensive demonstration of inhibition of growth regulating enzymes.

The present invention provides a method whereby any vegetable food may be contacted with any of argon and the other noble gases xenon, krypton, neon and helium during packaging or storage, preferably gas packaging or controlled atmosphere storage. The present method provides a surprisingly superior method of preservation as evidenced by superior control of degradative chemical and oxidative reactions, control of degradative and oxidative enzymatic reactions, and control of degradation of important consumer quality perception parameters.

The present invention provides the first demonstration that noble gases and noble gas-based mixtures significantly and quite surprisingly increase the shelf-life of a wide variety of vegetable food products through concerted action upon chemical, biochemical and microbial degradation parameters. Through the extensive empirical assay of numerous degradation parameters, including enzyme activity from within the vegetable food product, from external application during processing, from microbial secretion, and including microbial growth rate, and including oxidative chemical processes and certain other processes, it has been surprisingly discovered that noble gases or noble gas-containing mixtures can inhibit all of the above. It has further been discovered that noble gases or noble gas-containing mixtures can inhibit all of the above, even when applied at low pressures or in solution.

The present invention thus provides, in part, a method of gas packaging vegetable foods using noble gases or of storing of vegetable foods under noble gases, alone or in mixtures. It also provides a method for improved preservation of such foods.

The present invention thus has broad applicability to any problem or condition arising from vegetable product storage or processing where the limitation of degradation, oxidation, food spoilage or deterioration is desirable.

In accordance with the present invention, the term "noble gas" means neon, krypton, argon or xenon. Each of these gases may be used singly or in combination with each other. Because of its low solubility in water and its high volatility, however, helium is not preferably used. Radon is not generally useable because it is dangerously radioactive. However, any gas or gas mixture, including nitrogen, oxygen, carbon dioxide, nitrous oxide, carbon monoxide, or combinations of these gases may be used as supplementing gases or "carrier gases" in the atmosphere used. Notably, helium may be used as either a noble gas or a carrier gas. The composition of the appropriate gas mixture to use is determined by the nature of the product or process to be regulated, its most common spoilage flora and the packaging material of choice.

Depending on their concentration levels and on their physical properties, the present gases and gas mixtures can inhibit microbial enzymes, both endogenous and exogenous. The present gases and gas mixtures also inhibit the other enzymes present in the product, that is endogenous enzymes and enzymes introduced during the processing of the product. The present gases and gas mixtures also inhibit chemical oxidation and certain other degradative chemical processes. The combination of the above mentioned inhibitions surprisingly improves the shelf-life of the product.

In the case of living products, such as fresh horticultural commodities, a minimum level of oxygen is necessary to allow respiration and avoid anaerobic fermentation of product, responsible for the generation of off-flavors. In other products, oxygen significantly causes oxidative degradation to produce undesirable color changes and other substantive changes. Addition of noble gases to oxygen-containing atmospheres significantly alters the resultant effect of oxygen.

Additionally, however, the present invention also may be used to control the growth of microorganisms on vegetables.

The present invention also provides method of maintaining or improving the flavor, texture, color or appearance of vegetables.

In particular, the present invention provides a method of specifically maintaining or improving the color of vegetables, such as vegetables having vivid colors such as red, yellow, green, orange and purple. For example, the red color of radishes or the green color of beans or broccoli may be preserved in accordance with the present invention.

Moreover, the present invention also provides a method of preserving or maintaining pigmented compounds, such as caretenoids, flavenoids, anthocyanins or chlorophyll, whether in naturally occurring vegetables, synthetic vegetables or vegetables pigmented with these compounds or the compounds themselves.

Additionally, the present invention provides a method of inhibiting aerobic and anaerobic bacteria, yeast, mold and/or fungi growth on vegetables.

Generally, in accordance with the present invention, pressures are used of from near vacuum, i.e., 1.0 x $10^{-6}$ Pa ($10^{-8}$ torr), to 10, 130 kPa (100 atmospheres). However, it is generally preferred that a pressure be used between 0.1 to 300 kPa (0.001 to 3 atmospheres). Further, a range of temperatures may be used from 0°C to 120°C.

Generally, the present invention may be used to preserve all types of vegetables.

## DETAILED EXAMPLES OF THE INVENTION

### I. Preliminary Assay Protocols and Results:

#### Control of Enzymatic Activity Assay

Sealed cuvettes containing enzymes representative of and in fact important in food product degradation processes were thoroughly purged and filled with assay gases. Injection of gassed substrate solutions started the reactions, which were generally conducted under optimal conditions. These were monitored colorimetrically by scanning uv/vis spectrophotometry. All controls were conducted for oxygen, nitrogen and carbon dioxide. A range of temperatures and pressures were employed. An example protocol is appended. Results were expressed in real-time, and transformed to calculate yield and rate differences for the reaction. Over 50 exemplary enzymes were so assayed. Enzymes selected for examination from various products are assayed in precisely the same manner, but always in terms of relative activity in comparison with that product in air or another control gas or gas mixture.

The result below shows the inhibitory effect of noble gases upon tyrosinase.

Product Testing: Enzymes, Chemical Oxidation, Micobiral Growth and Consumer Preference Parameter

Many different products were assayed under a wide variety of temperatures and pressures, packaging treatments, and post-packaging handling. In the general experiment, sterile pouches of impermeable film were filled with freshly-obtained food products under recommended handling regimes. Each was then purged thoroughly with the gas mixture to be tested. Then sealed, the pouch was further treated by cooking, cold storage, or other parameter, or else was not. The sealed pouch was stored at room, cold, or freezing temperature, and periodically sampled for microorganism counts (total, aerobic, anaerobic, Pseudomonas, Lactobacilli). It was also studied for observable deterioration and scored. Some samples were subjected to appropriate chemical analysis. Others were sampled for specific enzyme activities as above. All told, the average experiment consisted of replicate samples of product being assayed for microbial counts, microbial identifications, enyzme activities, chemical oxidation, discoloration, odor and/or taste changes, and final carbon dioxide and oxygen concentrations.

Microbes and enzymes known to be important in the degradation of each individual product were selected for examination and scoring from the literature.

The results below show simple vacuum-formed pouch gas-packaging results as expressed for 11 parameters of observable degradation. Gases tested are: I-IX and identified in the key. In addition, microbial samples were taken and plated, and exemplary enzyme activities were scored. In this particular experiment, replicate packages of apportioned apples, bananas, carrots, tomatoes, green beans, strawberries, steak cuts, and whole fresh fish were prepared. Each product was cleaned in water under standard food-preparation conditions, was packaged in a vacuum-gas packaging machine, and was tested as above. A summary sheet of noble gas effects is given for this experiment in view of the observable parameters. A summary graph for apples and one for steak are also provided, showing clearly that both apple and steak shelf-life can be extended by noble gases.

Microbial Growth Rate Assay

26 microorganisms were assayed under at least 105 mixtures containing noble gases, and under 8 controls. The controls were 100% air, 100% carbon dioxide, 100% nitrogen, 100% oxygen, and commonly used gas-packaging mixtures made up of various fractions of nitrogen, oxygen, and carbon dioxide. These latter bracket the range of common application gas mixtures. The assay mixtures consisted of series of two-component ("A" + "B" ) mixtures of Ar, Xe, Kr, and Ne wherein each gas was made to constitute 0.1, 1.0, 5.0, or 100% of component "A", then another noble gas was used to constitute the rest of component "A", and then this first "A" component mixture was added to a base gas which constituted the second component "B" in the proportions 100:0, 95:5, 90:10, or 50:50. Base gases were various, but were most often argon; oxygen; nitrogen; or mixtures of nitrogen, carbon dioxide and oxygen in proportions commonly used in gas-packaging. Thus, one typical gas mixture would be Ar:Xe 99:1 (component "A") 95% of total, with air (component "B") 5% of total. Thus, a very large number of gas mixes were assayed for activity against microorganisms.

Each of the microorganisms was plated after dilution series to result in growth of single-colonies under sterile conditions. Standard ATCC cultures were employed and maintained as reccomended. Assays were conducted by inoculating 125 cc serum vials prepared with 25 cc of appropriate media after that vial had been gently evacuated and thoroughly purged with nitrogen to remove all residual gases, then thoroughly purged with the test gas. Appropriate controls were run for sterility and optimum growth conditions. Daily growth plate area coverage measurements were made, backed up by less frequent total cell counts. Results were interpreted as growth/day vs. air, overall growth/air for aerobic microorganisms, and vs. appropriate atmospheres for anaerobes. Periodic measurement of carbon dioxide and oxygen levels in the vials were also made.

Results below show daily counts for one vial of Alternaria alternata, and graphed growth area comparisons for one set of gases for A. alternata and one set for of Escherichia coli. The results clearly demonstrate selective effects of different gases in inhibiting the growth of each species. The results are generalizable across gases, but each species varies in its tolerance of quantitative amounts of gas. Gases are also clearly differentially effective depending upon their fractional composition in a mix, that is different mixes of gases show different effects upon the same microorganism. These mixes show effects that are synergistic with respect to the additive activity of their components.

It is important to realize that many parameters contribute to the variance in the obtained results of these assays including the concentration of oxygen, carbon dioxide, water vapor temperature and salt concentrations, for example.

DETAILED EXAMPLES OF THE INVENTION

Large-Scale Empirical Assay Results:

CHEMICAL REACTIONS

For chemical oxidation reactions it has been found that noble gases strongly inhibit oxidation, generally in the order Xe>Kr>Ar>Ne>He, having positive and unique utility in preventing oxidation even in the presence of oxygen, whereas nitrogen has no such ability excepting in the simple displacement of oxygen. Other oxygenated species, such as carbon dioxide are reactively destructive.

EFFECT OF GASES ON ENZYMES

Enzymes, both endogenous to the product or secreted by the microorganisms found in the product are often strongly inhibited by noble gases. The effect of the noble gases are summarized by class below. An example of this inhibition is in the very strong inhibition of oxidases.

The following Table summarizes the maximum inhibition of enzymes activity realized with various noble gases under various storage conditions.

Class I. Oxidoreductase (EC 1)

Tyrosinase EC 1.14.18.1

- at 25°C and optimal reaction conditions, simply saturation of solution with gas:

| Gas | Result |
|---|---|
| Xe | -73% (inhibition vs air) |
| Kr | -73% |
| Ar | -60% |
| Ne | -46.7% |
| 90:10 Xe:Kr mix | -50% |
| Ar:Xe 99:1 | -70% |
| N2 | 0% |
| CO2 | 0% |

Glucose oxidase EC 1.1.3.4

| Gas | Result |
|---|---|
| Xe | -91.6% (inhibition) |
| Kr | -92.7% |
| Ar | -85.8% |
| Ne | -61.7% |

Class II. Transferases (EC2)
Inhibited by noble gases depending upon active site characteristics.

Gamma-glutamyl transpeptidase EC 2.3.2.2

| Gas | Result |
|---|---|
| Xe | -7% (inhibition) |
| Kr | -8% |
| Ar | -5% |
| Ne | -3% |

Aspartate aminotransferase (EC 2.6.1.1)

| Gas | Result |
|---|---|
| Xe | -17% (inhibition) |
| Kr | -82% |
| Ar | -17% |
| Ne | -12% |

Class III. Hydrolases (EC3)

Lipase EC 3.1.1.3

Showed up to -20% inhibition with Argon and noble gases. Protease (α-Chymotrypsin EC 3.4.21.1) Showed up to -20 inhibition with Argon and noble gases depending on temperature.

With Lipase

| Gas | Result |
|---|---|
| Xe | -25.6% |
| Kr | -25% |
| Ne | -15% |
| Ar | -18% |

Class IV. Lyases (EC4)

Citrate synthase EC 4.1.3.7

Showed maximum inhibition of -27% at 25°C when measured as a coupled reaction with all gases.

Class V. Isomerases (EC 5)

| | |
|---|---|
| Ar | -37% |
| 90:10 Xe:Kr mix | -6.3% |

Phosphoglucose isomerase

| Gas | Result |
|---|---|
| Xe | -61% |
| Ne | -45% |

Class VI. Ligases (Synthetases) (EC 6)

Acetyl-CoA synthetase EC 6.2.1.1

| Gas | Result |
|---|---|
| Xe | -18% |
| Kr | -16% |
| Ar | -75% |
| Ne | -15% |

QUALITY FACTORS OF FRUITS AND VEGETABLES

I. LIGHTLY PROCESSED FRUITS AND VEGETABLES:

Examples are fresh apple slices and shredded lettuce.

- Quality factors:

  color
  flavor
  texture
  appearance

- Relative importance of these 3 factors vary between products.
- microbiological quality
- Nutritional quality

a. Flavor: most difficult quality factor to maintain.

. Maintain the original aroma quality
. avoid off-flavor development
The enzymes involved in off-flavor formation in fruits and vegetables seem to be peroxidases and lipoxygenases.

b. Texture: quality factor that differentiates fresh from processed foods.

- Fresh fruits and vegetables: "crisp", "firm": high "turgor"
- Processed foods: "soft", "chewy". Processing stress results in loss of turgor. Enzyme catalyzed reactions cause depolymerization of cell membranes and cell walls.
  Loss of texture:
- pectinesterase
- polygalacturonase
- pectine methyl esterase
- galacturonase

c. Appearance:

Discoloration of lightly processed fruits and vegetables is often the factor that determines their shelf-life. Enzyme catalyzed reactions which convert phenolic compounds, such as flavonoids, and derivatives of chlorogenic acid to brown melanins are the main causes of discoloration of lightly processed fruits and vegetables. When products are peeled, cut, cellular compartmentation is lost, enzymes and substrates come in contact with each other, and discoloration occurs. Carbon dioxide can influence phenolic metabolism.

Breakdown of chlorophyll: loss of appealing green color. As the chlorophyll is broken down, the carotenoids are exposed, giving rise to a yellowing of the products. The importance of color in green vegetables is demonstrated by USDA quality standards where as much as 60% of the total quality score is assigned to color.

The naturally existing chlorophyllases can convert chlorophylls to water-soluble chlorophyllides, but do not significantly alter the green color. Acidic conditions can make the chlorophylls into pheophytins. The pheophytins are brown in color and are normally undesirable in most foods. The loss of green color in green vegetables is an important problem in certain thermal processing operations.

The carotenoids most important in imparting color to fruits and vegetables are derivatives of $\alpha$- and $\beta$-carotenes and lycopene. Due to their unsaturated nature, they are generally susceptible to oxidation. Carotenes are important to nutrition, flavor and appearance as precursors of vitamin A, precursors of some flavor volatiles and as pigments. Lipoxygenase appears to catalyze the direct oxidation of certain unsaturated fatty acids with the concurrent bleaching of carotenoids.

Carotenoids are also sensitive to nonenzymatic oxidations with concurrent loss of color. Low oxygen and high relative humidity can be expected to preserve carotenes.

Carotenoids are extremely susceptible to nonenzymatic oxidation in dehydrated fruits and vegetables as water acts as a barrier to oxygen diffusion.

Anthocyanins: flavonoid, phenolic-based, water-soluble compounds.

low pH red

intermediate pH colorless

higher pH blue

Polyphenol oxidases can degrade anthocyanins in the presence of other phenolic compounds such as catechol or chlorogenic acid.

d. Nutritional quality:

Ascorbic acid degradation

1 to 4% oxygen generally slows ascorbic acid degradation, presumably through prevention of oxidation (lettuce, green beans, apples).

Elevated carbon dioxide can accelerate ascorbic acid degradation.

e. Microbial quality:

- Plant pathogens:

  Botrytis (strawberries)
  Monolinia
  Geotrichum candidum
  Aspergillus
  Aspergillus flavus
  Penicillium

- Human pathogens:

  Clostridium botulinum (packaged mushrooms)
  Listeria monocytogenes (enhanced by elevated $CO_2$) on fresh vegetables
  Aeromonas hydrophila (MA chilled products)

It is important to note that low oxygen or excessive carbon dioxide can cause fermentative metabolism leading to accumulation of ethanol and acetaldehyde.

Respiratory activity:

- Climacteric fruits:
- Apples
- Banana
- Nonclimacteric fruits:
- Strawberries

Generally, in the following section, various products an the parameters of their preservation are analyzed. Sections A-D represent the four parameters of spoilage: microbes, enzymes, chemical, reactions and quality parameters for customer perception: Sections E-H are the responses provided for each of sections A-D, respectively.

1. Product: Carrots

A. List of Microorganisms:

Spoilage microorganisms

Erwinia carotovora
(bacterial soft rot)
Erwinia carotovora (Jones) Holland
Pseudomonads similar to Pseudomonas marginalis
(bacterial soft rot)
Botrytis cinerea
(gram mold rot)
B. cinerea Pers. ex Fr.
Geotrichum candidum
(sour rot (watery soft rot))
Rhizopus stolonifer
(Rhizopus soft rot)
Sclerotinia sclerotiorum
(watery soft rot)
S. sclerotiorum (Lib.) de Bary

B. List of Enzymes:

Endogenous enzymes:

Peroxidase EC 1.11.1.7
Carrot has a medium peroxidase activity.
Catalase EC 1.11.1.6
Causes off-flavor. A correlation exists between the storage stability of the vegetables and the activity of catalase and peroxidase. Carrot has a high catalase activity.
Phenolase EC 1.10.3.1
ACC synthase
prime factor controlling the rate of ethylene biosynthesis
Lipoxygenase EC 1.13.11.12
Activity can increase ethylene production
Oxidation by lipoxygenase can bleach carotenoids.
cellulase complex:

- EC 3.2.1.4
- EC 3.2.1.21

degradation of cellulose

Microorganism enzymes:

Laccase EC 1.10.3.2 Endopolygalacturonase EC 3.2.1.15 (extracellular)

C. List of Chemical Reactions of Importance:

Carotenoid degradation during processing and storage:

unsaturated nature ⇒ susceptible to isomerization and oxidation.

D. Quality Parameters of Importance:

Ethylene induced formation of bitter isocoumarins in carrots.
α-carotenes
β-carotenes

E. Table I. Effect of Gases on Microbes:

1. Microassays

a. Ervinia carotovora (ATCC 15713)

| 95% GAS MIXES IN AIR | |
|---|---|
| 95% $CO_2$ | 100% |
| 95% $N_2$ | 0% |
| 95% Ar | 2% |

| 3 best gas mixes: | |
|---|---|
| 95% Ar:Ne 95:5 | 24% |
| 95% Ar:Kr 99:1 | 20% |
| 95% Ar:Ne 99:1 | 18% |

| 90% GAS MIXES IN AIR | |
|---|---|
| 90% $CO_2$ | 100% |
| 90% $N_2$ | 0% |
| 90% Ar | 2% |

| 3 best gas mixes: | |
|---|---|
| 90% Ar:Xe 99:1 | 21% |
| 90% Ar:Kr 99:1 | 20% |
| 90% Ar:Ne 99:1 | 16% |

| 50% GAS MIXES IN AIR | |
|---|---|
| 50% $CO_2$ | 100% |
| 50% $N_2$ | 0% |
| 50% Ar | 0% |

| Other best gas mixes: | |
|---|---|
| 50% Kr | 12% |

b. Pseudomonas marginalis (ATCC 10844)

| 95% GAS MIXES IN AIR | |
|---|---|
| 95% $CO_2$ | 100% |
| 95% $N_2$ | 93% |
| 95% Ar | 100% |

| 3 best gas mixes: | |
|---|---|
| 95% Ar:Ne 99:1 | 100% |
| 95% Ar:Ne 95:5 | 100% |
| 95% Ar:Xe/Kr 99.9:0.1 | 100% |

| 90% GAS MIXES IN AIR | |
|---|---|
| 90% $CO_2$ | 100% |
| 90% $N_2$ | 81% |
| 90% Ar | 85% |

| 3 best gas mixes: | |
|---|---|
| 90% Ar:Xe/Kr 99.9:0.1 | 100% |
| 90% Ar:Xe 95:5 | 43% |
| 90% Ar:Ne 95:5 | 43% |

| 50% GAS MIXES IN AIR | |
|---|---|
| 50% $CO_2$ | 100% |
| 50% $N_2$ | 0% |
| 50% Ar | 10% |

| 3 best gas mixes: | |
|---|---|
| 50% Ar:Kr 99:1 | 11% |
| 50% Ar:Ne 95:5 | 9% |
| 50% Xe | 16% |

Table 1b. Effect of Gases on Total Microorganisms from Product Trials.

| Aerobes: | | |
|---|---|---|
| Gas/Gas Mix: | % | %Inhibition Compared to 100% Air |
| 1. $Co_2$ | 100 | 24% |
| 2. Ar | 100 | 33% |
| 3. (Ar:Kr):$O_2$ | [9:1]:9 | 17% |

| Anaerobes: | | |
|---|---|---|
| Gas/Gas Mix: | % | %Inhibition Compared to 100% $CO_2$ |
| 1. Air | 100 | 31% |
| 2. Ar | 100 | 9% |
| 3. (Ar:Kr):$O_2$ | [9:1]:9 | 42% |
| 4. (Ar:Ne):$CO_2$ | [9:1]:9 | 32% |
| 5. (Ar:Ne):$O_2$ | [9:1]:9 | 33% |

| Yeasts: | | |
|---|---|---|
| Gas/Gas Mix: | % | %Inhibition Compared to 100% Air |
| 1. $Co_2$ | 100 | 35% |
| 2. Ar | 100 | 49% |

| Molds: | | |
|---|---|---|
| Gas/Gas Mix: | % | %Inhibition Compared to 100% Air |
| 1. $Co_2$ | 100 | 3% |
| 2. Ar | 100 | 20% |
| 3. Ar:$CO_2$ | 9:1 | 17% |

F. Effect of Gases on Enzymes:

Class I. Oxidoreductase (EC 1)

Tyrosinase EC 1.14.18.1

- at 25° and optimal reaction conditions, simple saturation of solution with gas:

| Gas | Result |
|---|---|
| Xe | -73% (inhibition) |
| Kr | -73% |
| Ar | -60% |
| Ne | -46.7% |
| 90:10 Xe:Kr | -50% |
| Ar:Xe 99:1 | -70% |

Glucose oxidase EC 1.1.3.4

| Gas | Result |
|---|---|
| Xe | -91.6% (inhibition) |
| Kr | -92.7% |
| Ar | -85.8% |
| Ne | -61.7% |

G. Effect of Gases on Chemical Reactions:

For carrots, oxidation of color components is inhibited and degrative chemical oxidations are also strongly inhibited.
For example:

1. Color: The carotenoids that are most important in imparting color to fruits are derivatives of $\alpha$- and $\beta$-carotenes and lycopene. Due to their unsaturated nature, they are generally susceptible to oxidation. It has been found that noble gases effect oxidation in the order Xe>Kr>Ar>Ne>He in having a positive and unique utility in preventing oxidation even in the presence of oxygen.
Carotenoids are extremely susceptible to nonenzymatic oxidation in dehydrated fruits and vegetables (water acts as a barrier to oxygen diffusion).
2. Degradative chemical oxidation:

Lipoxygenase EC 1.13.11.12 Lipoxygenase appears to catalyze the direct oxidation of certain unsaturated fatty acids with the concurrent bleaching of carotenoids. Carotenoids are also sensitive to nonenzymatic oxidations with concurrent loss of color.
It has been found that color can be maintained well beyond the point where the product becomes microbiologically unexceptable.

Peroxidase EC 1.11.1.7
Decolorizing anthocyanins
Note: See Effect of Gases on Enzymes above for quantification of the inhibitory effect of noble gases on enzymes.

H. Summary:

Generally, exposure of carrots to the gases and gas mixtures of the present invention results in the improvement of color. Oxidation reactions and oxidase reactions are controlled.

In general, binary mixtures of Ar:Ne are preferably used in the relative amount of 80 to 99 volume % Ar and 1 to 20 volume % Ne. More preferably, 85 to 97 volume % Ar and 3 to 15 volume % of Ne is used. Most preferably, 95 volume % of Ar and 5 volume % of Ne is used.

Additionally, up to 10 volume % of $O_2$, air $CO_2$ may be used.

2. Product: Green Beans, Refrigerated

A. List of Microorganisms:

Spoilage microorganisms

Corynebacterium flacuumfaciens
[bacterial wilt]
Corynebacterium michiganese
[bacterial canker]
Erwinia carotovora
[bacterial soft rot]
Pseudomonads similar to Pseudomonas marginalis
[bacterial soft rot]
Pseudomonas phaseolicola
[halo blight]
Xanthomonas phaseoli
[common blight]
Botrytis cinerea
[gray mold rot]
Colletotrichum coccodes
[anthracnose (spotting)]
Geotrichum candidum
[sour rot (watery soft rot)]
Rhizopus stolonifer
[Rhizopus soft rot]

B. List of Enzymes:

Endogenous enzymes:

ACC synthase
prime factor controlling the rate of ethylene biosynthesis
Lipoxygenase EC 1.13.11.12
activity can increase ethylene production
Chlorophyllase EC 3.1.1.14
Peroxidase
cellulase complex:

- EC 3.2.1.4

- EC 3.2.1.21

degradation of cellulose

Microorganism enzymes:

Laccase EC 1.10.3.2 (Botrytis cinerea)
Endopolygalacturonase EC 3.2.1.15 (extracellular, Rhizopus stolonifer)

C. List of Chemical Reactions of Importance:
D. Quality Parameters of Importance:

- Ascorbic acid retention
- Chlorophyll retention

E. Table I. Effect of Gases on Microbes:

1. Microassays:

a. Erwinia carotovora (ATCC 15713)

| 95% GAS MIXES IN AIR | |
|---|---|
| 95% $CO_2$ | 100% |
| 95% $N_2$ | 0% |
| 95% Ar | 2% |

| 3 best gas mixes: | |
|---|---|
| 95% Ar:Ne 95:5 | 24% |
| 95% Ar:Kr 99:1 | 20% |
| 95% Ar:Ne 99:1 | 18% |

| 90% GAS MIXES IN AIR | |
|---|---|
| 90% $CO_2$ | 100% |
| 90% $N_2$ | 0% |
| 90% Ar | 2% |

| 3 best gas mixes: | |
|---|---|
| 90% Ar:Xe 99:1 | 21% |
| 90% Ar:Kr 99:1 | 20% |
| 90% Ar:Ne 99:1 | 16% |

| 50% GAS MIXES IN AIR | |
|---|---|
| 50% $CO_2$ | 100% |
| 50% $N_2$ | 0% |
| 50% Ar | 0% |

| Other best gas mixes: | |
|---|---|
| 50% Kr | 12% |

b. Pseudomonas marginalis (ATCC 10844)

| 95% GAS MIXES IN AIR | |
|---|---|
| 95% $CO_2$ | 100% |
| 95% $N_2$ | 93% |
| 95% Ar | 100% |

| 3 best gas mixes: | |
|---|---|
| 95% Ar:Ne 99:1 | 100% |
| 95% Ar:Ne 95:5 | 100% |
| 95% Ar:Xe/Kr 99.9:0.1 | 100% |

| 90% GAS MIXES IN AIR | |
|---|---|
| 90% $CO_2$ | 100% |
| 90% $N_2$ | 81% |
| 90% Ar | 85% |

| 3 best gas mixes: | |
|---|---|
| 90% Ar:Xe/Kr 99.9:0.1 | 100% |
| 90% Ar:Xe 95:5 | 43% |
| 90% Ar:Ne 95:5 | 43% |

| 50% GAS MIXES IN AIR | |
|---|---|
| 50% $CO_2$ | 100% |
| 50% $N_2$ | 0% |
| 50% Ar | 10% |

| 3 best gas mixes: | |
|---|---|
| 50% Ar:Kr 99:1 | 11% |
| 50% Ar:Ne 95:5 | 9% |
| 50% Xe | 16% |

Table 1b. Effect of Gases on Total Microorganisms from Product Trials.

| Aerobes: | | |
|---|---|---|
| Gas/Gas Mix: | % | % Inhibition Compared to 100% Air : |
| 1. CO2 | 100 | 26% |
| 2. Ar | 100 | 11% |
| 3. [Ar:Kr]:$CO_2$ | [9:1]:9 | 32% |

| Anaerobes: | | |
|---|---|---|
| Gas/Gas Mix: | % | % Inhibition Compared to 100% $CO_2$ |
| 1. Air | 100 | 66% |
| 2. Ar | 100 | 61% |
| 3. [Ar:Kr]$O_2$ | [9:1]:9 | 31% |

| Yeasts: | | |
|---|---|---|
| Gas/Gas Mix: | % | % Inhibition Compared to 100% Air |
| 1. $CO_2$ | 100 | 55% |
| 2. Ar | 100 | 20% |
| 3. Ar:$CO_2$ | 9:1 | 41% |
| 4. Ar:Kr | 9:1 | 20% |

| Molds: | | |
|---|---|---|
| Gas/Gas Mix: | % | % Inhibition Compared to 100% Air |
| 1. $CO_2$ | 100 | 2% |
| 2. Ar | 100 | 25% |
| 3. Ar:Kr | 9:1 | 31% |

F. Table II. Effect of Gases on Enzymes:

Class I. Oxidoreductase (EC 1)
Tyrosinase EC 1.14.18.1

- at 25° and optimal reaction conditions, simple saturation of solution with gas:

| Gas | Result |
|---|---|
| Xe | -73% (inhibition) |
| Kr | -73% |
| Ar | -60% |
| Ne | -46.7% |
| 90:10 Xe:Kr | -50% |
| Ar:Xe 99:1 | -70% |

Glucose oxidase EC 1.1.3.4.

| Gas | Result |
|---|---|
| Xe | -91.6% (inhibition) |
| Kr | -92.7% |
| Ar | -85.8% |
| Ne | -61.7% |

Class III. Hydrolases (EC3)

Lipase EC 3.1.1.3

Showed up to -20% inhibition with Argon and noble gases.

Protease (α-Chymotrypsin EC 3.4.21.1)

Showed up to -20 inhibition with Argon and noble gases depending on temperature.

G. Effect of Gases on Chemical Reactions: For green beans, oxidation of color components is inhibited and degrative chemical oxidations are also strongly inhibited.
For example:

1. Color: The oxidation of chlorophyll is the primary color change. As the chlorophyll is broken down, the carotenoids are exposed, giving rise to a yellowing of the products. It has been found that noble gases effect oxidation in the order Xe>Kr>Ar>Ne>He in having a positive and unique utility in preventing oxidation even in the presence of oxygen.

Ascorbic acid degradation: maintaining a minimum of 1 to 4% $O_2$ generally slows ascorbic acid degradation by preventing oxidation. it has been found that noble gases effect oxidation in the order Xe>Kr>Ar>Ne>He in having a positive and unique utility in preventing oxidation even in the presence of oxygen.
Elevated $CO_2$ levels accelerate ascorbic acid degradation.
It has been found that color can be maintained well beyond the point where the product becomes microbiologically unexceptable.

2. Degradative chemical oxidations:

Lipoxygenase EC 1.13.11.12 activity can increase ethylene production
Chlorophyllase EC 3.1.1.14
Peroxidase
cellulase complex:

- EC 3.2.1.4
- EC 3.2.1.21

degradation of cellulose
Note: See Effect of Gases on Enzymes above for quantification of the inhibitory effect of noble gases on enzymes.

H. Summary:

Generally, mixtures of Ar:Kr or Xe in relative amounts of 80-95:5-20 volume % is preferable. More preferably, relative amounts of 85-95:5-15 volume % is used. It is still more preferable to use a mixture of Ar:Kr or Xe of 9:1 relative in volume %.

However, if each of the above mixtures, generally 1-15 volume % of $O_2$, preferably 2-10 volume % of $O_2$ is included.

3. Product: Green Beans, Room Temperature

A. List of Microorganisms:

<u>Spoilage microorganisms</u>

Corynebacterium flacuumfaciens
[bacterial wilt]
Corynebacterium michiganese
[bacterial canker]
Erwinia carotovora
[bacterial soft rot]
Pseudomonads similar to Pseudomonas marginalis
[bacterial soft rot]
Pseudomonas phaseolicola
[halo blight]
Xanthomonas phaseoli
[common blight]
Botrytis cinerea
[gray mold rot]
Colletotrichum coccodes
[anthracnose (spotting)]
Geotrichum candidum
[sour rot (watery soft rot)]

Rhizopus stolonifer
[Rhizopus soft rot]

B. List of Enzymes:

Endogenous enzymes:

ACC synthase

prime factor controlling the rate of ethylene biosynthesis

Lipoxygenase EC 1.13.11.12

activity can increase ethylene production

Chlorophyllase EC 3.1.1.14
Peroxidase
cellulase complex:

- EC 3.2.1.4
- EC 3.2.1.21

degradation of cellulose

Microorganism enzymes:

Laccase EC 1.10.3.2 (Botrytis cinerea)
Endopolygalacturonase EC 3.2.1.15 (extracellular, Rhizopus stolonifer)

C. List of Chemical Reactions of Importance:
D. Quality Parameters of Importance:

- Ascorbic acid retention
- Chlorophyll retention

E. Table I. Effect of Gases on Microbes:

1. Microassays:
a. Erwinia carotovora (ATCC 15713)

| 95% GAS MIXES IN AIR | |
|---|---|
| 95% $CO_2$ | 100% |
| 95% $N_2$ | 0% |
| 95% Ar | 2% |

| 3 best gas mixes: | |
|---|---|
| 95% Ar:Ne 95:5 | 24% |
| 95% Ar:Kr 99:1 | 20% |
| 95% Ar:Ne 99:1 | 18% |

| 90% GAS MIXES IN AIR | |
|---|---|
| 90% $CO_2$ | 100% |
| 90% $N_2$ | 0% |
| 90% Ar | 2% |

| 3 best gas mixes: | |
|---|---|
| 90% Ar:Xe 99:1 | 21% |
| 90% Ar:Kr 99:1 | 20% |
| 90% Ar:Ne 99:1 | 16% |

| 50% GAS MIXES IN AIR | |
|---|---|
| 50% $CO_2$ | 100% |
| 50% $N_2$ | 0% |
| 50% Ar | 0% |

| Other best gas mixes: | |
|---|---|
| 50% Kr | 12% |

b. Pseudomonas marginalis (ATCC 10844)

| 95% GAS MIXES IN AIR | |
|---|---|
| 95% $CO_2$ | 100% |
| 95% $N_2$ | 93% |
| 95% Ar | 100% |

| 3 best gas mixes: | |
|---|---|
| 95% Ar:Ne 99:1 | 100% |
| 95% Ar:Ne 95:5 | 100% |
| 95% Ar:Xe/Kr 99.9:0.1 | 100% |

| 90% GAS MIXES IN AIR | |
|---|---|
| 90% $CO_2$ | 100% |
| 90% $N_2$ | 81% |
| 90% Ar | 85% |

| 3 best gas mixes: | |
|---|---|
| 90% Ar:Xe/Kr 99.9:0.1 | 100% |
| 90% Ar:Xe 95:5 | 43% |
| 90% Ar:Ne 95:5 | 43% |

| 50% GAS MIXES IN AIR | |
|---|---|
| 50% $CO_2$ | 100% |
| 50% $N_2$ | 0% |
| 50% Ar | 10% |

| 3 best gas mixes: | |
|---|---|
| 50% Ar:Kr 99:1 | 11% |
| 50% Ar:Ne 95:5 | 9% |
| 50% Xe | 16% |

Table 1b. Effect of Gases on Total Microorganisms from Product Trials.

| Aerobes: | | |
|---|---|---|
| Gas/Gas Mix: | % | % Inhibition Compared to 100% Air |
| 1. $CO_2$ | 100 | 10% |
| 2. Ar | 100 | 2% |
| 3. Ar:Ne | 9:1 | 2% |

| Yeasts: | | |
|---|---|---|
| Gas/Gas Mix: | % | % Inhibition Compared to 100% Air |
| 1. $CO_2$ | 100 | 19% |
| 2. Ar | 100 | 10% |
| 3. (Ar:Ne):$O_2$ | (9:1):9 | 10% |
| 4. (Ar:Ke):$CO_2$ | (9:1):9 | 9% |

| Molds: | | |
|---|---|---|
| Gas/Gas Mix: | % | % Inhibition Compared to 100% Air |
| 1. $CO_2$ | 100 | 3% |
| 2. Ar | 100 | 15% |
| 3. (Ar:Ne):$CO_2$ | [9:1]:9 | 9% |
| 4. Ar:$O_2$ | 9:1 | 1% |

F. Effect of Gases on Enzymes:

Class I. Oxidoreductase (EC 1)

Tyrosinase EC 1.14.18.1

- at 25° and optimal reaction conditions, simple saturation of solution with gas:

| Gas | Result |
|---|---|
| Xe | -73% (inhibition) |
| Kr | -73% |
| Ar | -60% |
| Ne | -46.7% |
| 90:10 Xe:Kr | -50% |
| Ar:Xe 99:1 | -70% |

Glucose oxidase EC 1.1.3.4

| Gas | Result |
|---|---|
| Xe | -91.6% (inhibition) |
| Kr | -92.7% |
| Ar | -85.8% |
| Ne | -61.7% |

Class III. Hydrolases (EC3)

Lipase EC 3.1.1.3

Showed up to -20% inhibition with Argon and noble gases.

Protease (α-Chymotrypsin EC 3.4.21.1)

showed up to -20 inhibition with Argon and noble gases depending on temperature.

G. Effect of Gases on Chemical Reactions:

For green beans, oxidation of color components is inhibited and degrative chemical oxidations are also strongly inhibited.
For example:

1. Color: The oxidation of chlorophyll is the primary color change. As the chlorophyll is broken down, the carotenoids are exposed, giving rise to a yellowing of the products. It has been found that noble gases effect oxidation in the order Xe>Kr>Ar>Ne>He in having a positive and unique utility in preventing oxidation even in the presence of oxygen.

Ascorbic acid degradation: maintaining a minimum of 1 to 4% oxygen generally slows ascorbic acid degradation by preventing oxidation. It has been found that noble gases effect oxidation in the order Xe>Kr>Ar>Ne>He in having a positive and unique utility in preventing oxidation even in the presence of oxygen.
Elevated carbon dioxide levels accelerate ascorbic acid degradation.
It has been found that color can be maintained well beyond the point where the product becomes microbiologically unexceptable.

2. Degradative chemical oxidations:

Lipoxygenase EC 1.13.11.12

activity can increase ethylene production

Chlorophyllase EC 3.1.1.14
Peroxidase
cellulase complex:

- EC 3.2.1.4
- EC 3.2.1.21

degradation of cellulose
Note: See Effect of Gases on Enzymes above for quantification of the inhibitory effect of noble gases on enzymes.

H. Summary:
Generally, the most effective mixtures are those as described in the previous section for green beans, including gases, gas mixtures and relative amounts of each.
4. Product: Lettuce

A. List of Microorganisms:

<u>Spoilage microorganisms</u>

Ervinia carotovora
(bacterial soft rot)
Pseudomonads similar to Pseudomonas marginalis

(bacterial soft rot)
Pseudomonas marginalis (Brown) Stevens
(side slime)
Pseudomonas cichorii
(bacterial zonate spot)
Botrytis cinerea
(gray mold rot)

B. cinerea Pers. ex Fr.

Geotrichum candidum
(sour rot (watery soft rot))

B. List of Enzymes:

Endogenous enzymes:

ACC synthase

prime factor controlling the rate of ethylene biosynthesis

Lipoxygenase EC 1.13.11.12

activity can increase ethylene production

Chlorophyllase EC 3.1.1.14
Peroxidase
cellulase complex:

- EC 3.2.1.4
- EC 3.2.1.21

degradation of cellulose

Microorganism enzymes:

Laccase EC 1.10.3.2 (Botrytis cinerea)

C. List of Chemical Reactions of Importance:
D. Quality Parameters of Importance:

- Texture
- Appearance

Ascorbic degradation is associated with wilting in green leafy vegetables.
Carotene is a precursor to vitamin A. Carotenes are subject to oxidation and to degradation associated with wilting of leafy vegetables.
Yellowing of leafy vegetables (lettuce) during senescence: loss of chlorophyll.

E. Table I. Effect of Gases on Microbes:

1. Microassays:

a. Ervinia carotovora (ATCC 15713)

| 95% GAS MIXES IN AIR | |
|---|---|
| 95% $CO_2$ | 100% |
| 95% $N_2$ | 0% |
| 95% Ar | 2% |

| 3 best gas mixes: | |
|---|---|
| 95% Ar:Ne 95:5 | 24% |
| 95% Ar:Kr 99:1 | 20% |
| 95% Ar:Ne 99:1 | 18% |

| 90% GAS MIXES IN AIR | |
|---|---|
| 90% $CO_2$ | 100% |
| 90% $N_2$ | 0% |
| 90% Ar | 2% |

| 3 best gas mixes: | |
|---|---|
| 90% Ar:Xe 99:1 | 21% |
| 90% Ar:Kr 99:1 | 20% |
| 90% Ar:Ne 99:1 | 16% |

| 50% GAS MIXES IN AIR | |
|---|---|
| 50% $CO_2$ | 100% |
| 50% $N_2$ | 0% |
| 50% Ar | 0% |

| Other best gas mixes: | |
|---|---|
| 50% Kr | 12% |

b. Pseudomonas marginalis (ATCC 10844)

| 95% GAS MIXES IN AIR | |
|---|---|
| 95% $CO_2$ | 100% |
| 95% $N_2$ | 93% |
| 95% Ar | 100% |

| 3 best gas mixes: | |
|---|---|
| 95% Ar:Ne 99:1 | 100% |
| 95% Ar:Ne 95:5 | 100% |
| 95% Ar:Xe/Kr 99.9:0.1 | 100% |

| 90% GAS MIXES IN AIR | |
|---|---|
| 90% $CO_2$ | 100% |
| 90% $N_2$ | 81% |
| 90% Ar | 85% |

| 3 best gas mixes: | |
|---|---|
| 90% Ar:Xe/Kr 99.9:0.1 | 100% |
| 90% Ar:Xe 95:5 | 43% |
| 90% Ar:Ne 95:5 | 43% |

| 50% GAS MIXES IN AIR | |
|---|---|
| 50% $CO_2$ | 100% |
| 50% $N_2$ | 0% |
| 50% Ar | 10% |

| 3 best gas mixes: | |
|---|---|
| 50% Ar:Kr 99:1 | 11% |
| 50% Ar:Ne 95:5 | 9% |
| 50% Xe | 16% |

Table 1b. Effect of Gases on Total Microorganisms from Product Trials.

| Aerobes: | | |
|---|---|---|
| Gas/Gas Mix: | % | % Inhibition Compared to 100% Air |
| 1. $CO_2$ | 100 | 9% |
| 2. Ar | 100 | 0.4% |
| 3. Ar:$O_2$ | 9:1 | 0.1% |

| Anaerobes: | | |
|---|---|---|
| Gas/Gas Mix: | % | % Inhibition Compared to 100% Air |
| 1. Ar | 100 | 16% |
| 2. Ar:Ne | 9:1 | 7% |

| Yeasts: | | |
|---|---|---|
| Gas/Gas Mix: | % | % Inhibition Compared to 100% Air |
| 1. $Co_2$ | 100 | 4% |
| 2. Ar | 100 | 28% |
| 3. Ar:$O_2$ | 9:1 | 20% |

| Molds: | | |
|---|---|---|
| Gas/Gas Mix: | % | % Inhibition Compared to 100% Air |
| 1. $Co_2$ | 100 | 2% |
| 2. Ar | 100 | 4% |
| 3. Ar:$CO_2$ | 9:1 | 10% |
| 4. Ar:Kr | 9:1 | 7% |
| 5. [Ar:Ne]:$CO_2$ | [9:1]:9 | 8% |

F. Effect of Gases on Enzymes:

Class I. Oxidoreductase (EC 1)

Tyrosinase EC 1.14.18.1

- at 25° and optimal reaction conditions, simple saturation of solution with gas:

| Gas | Result |
|---|---|
| Xe | -73% (inhibition) |
| Kr | -73% |
| Ar | -60% |
| Ne | -46.7% |
| 90:10 Xe:Kr | -50% |
| Ar:Xe 99:1 | -70% |

Glucose oxidase EC 1.1.3.4

| Gas | Result |
|---|---|
| Xe | -91.6% (inhibition) |
| Kr | -92.7% |
| Ar | -85.8% |
| Ne | -61.7% |

Class III. Hydrolases (EC3)

Lipase EC 3.1.1.3

Showed up to -20% inhibition with Argon and noble gases.

Protease (α-Chymotrypsin EC 3.4.21.1)

Showed up to -20 inhibition with Argon and noble gases depending on temperature.

Class IV. Lyases(EC4)

Citrate synthase EC 4.1.3.7

Showed maximum inhibition of -27% at 25°C when measured as a coupled reaction with all gases.

G. Effect of Gases on Chemical Reactions:

For lettuce, oxidation of color components is inhibited and degrative chemical oxidations are also strongly inhibited.
For example:

1. Color: The oxidation of chlorophyll is the primary color change. As the chlorophyll is broken down, the carotenoids are exposed, giving rise to a yellowing of the products. It has been found that noble gases effect oxidation in the order Xe>Kr>Ar>Ne>He in having a positive and unique utility in preventing oxidation even in the presence of oxygen.

Ascorbic acid degradation:
maintaining a minimum of 1 to 4% $O_2$ generally slows ascorbic acid degradation by preventing oxidation. It has been found that noble gases effect oxidation in the order Xe>Kr>Ar>Ne>He in having a positive and unique utility in preventing oxidation even in the presence of oxygen.
Elevated $CO_2$ levels accelerate ascorbic acid degradation.

The carotenoids that are most important in imparting color to fruits are derivatives of α- and β-carotenes and lycopene. Due to their unsaturated nature, they are generally susceptible to oxidation. It has been found that noble gases effect oxidation in the order Xe>Kr>Ar>Ne>He in having a positive and unique utility in preventing oxidation even in the presence of oxygen.

Carotenoids are extremely susceptible to nonenzymatic oxidation in dehydrated fruits and vegetables (water acts as a barrier to oxygen diffusion).
It has been found that color can be maintained well beyond the point where the product becomes microbiologically unexceptable.

2. Degrative chemical oxidations:

ACC synthase

prime factor controlling the rate of ethylene biosynthesis

Lipoxygenase EC 1.13.11.12

activity can increase ethylene production

Chlorophyllase EC 3.1.1.14

converts chlorophylls to water-soluble chlorophyllides. Acidic conditions can make the chlorophylls into pheophytins. The pheophytins are brown in color and are normally undesirable in most foods. The loss of green color in green vegetables is an important problem in certain thermal processing operations.

Peroxidase
cellulase complex:

- E.C. 3.2.1.4
- E.C. 3.2.1.21

degradation of cellulose
Note: See Effect of Gases on Enzymes above for quantification of the inhibitory effect of noble gases on enzymes.

H. Summary:

Generally, a mixture of Ar:Ne of 80-95:5-20 volume % is preferable, with the mixture of 90-95:5-10 volume % being more preferable. Most preferable of all is a mixture of Ar:Ne/95:5.

Additionally, $O_2$ and $CO_2$ may be used in amounts of up to 5 volume %.

5. Product: Mixed Salad (Chef Salad)

- Lettuce (see above)
- Tomatoes (see above)
- Carrots (see above)
- Cucumbers
- Radishes
- Cheese, Chedder
- Meat; Ham, Turkey
- Eggs, Boiled
- Red Cabbage

A. List of Microorganisms:

1. Cucumbers

Spoilage microorganisms

Erwinia carotovora
(bacterial soft rot)
Pseudomonads similar to Pseudomonas marginalis
(bacterial soft rot)
Pseudomonas lachrymans
(angular leaf spot)
Botrytis cinerea
(gray mold rot)
Colletotrichum coccodes
(anthracnose (spotting))
Rhizopus stolonifer
(Rhizopus soft rot)

2. Radishes

Spoilage microorganisms

Erwinia carotovora
(bacterial soft rot)
Pseudomonads similar to Pseudomonas marginalis
(bacterial soft rot)
Botrytis cinerea
(gray mold rot)
Geotrichum candidum
(sour rot (watery soft rot))
Rhizopus stolonifer
(Rhizopus soft rot)

3. Cheese, Chedder
4. Eggs, Boiled
5. Cabbage, Red

Spoilage microorganisms

Listeria monocytogenes

6. Lettuce, tomatoes, and carrots: see above

B. List of Enzymes:

1. Cucumbers

Endogenous enzymes

Polygalacturonase EC 3.2.1.15

- Exopoloygalacturonases EC 3.2.1.67

De-esterification of cell wall galacturonans followed by polygalacturonase action.

Pectinesterase

Involoves in the preparation of the substate for polygalacturonases

Peroxidase (POD) EC 1.11.1.7

Stale, off-flavors.

Catalase EC 1.11.1.6

Adverse flavors.

Lipoxygenase EC 1.13.11.12

Activity required for the production of aldehydes typical of fresh cucumber flavor.

ACC synthase

prime factor controlling the rate of ethylene biosynthesis

Lipoxygenase EC 1.13.11.12

activity can increase ethylene production

cellulase complex:

- EC 3.2.1.4
- EC 3.2.1.21

degradation of cellulose

2. Radishes

Endogenous enzymes

ACC synthase

prime factor controlling the rate of ethylene biosynthesis

Lipoxygenase EC 1.13.11.12

activity can increase ethylene production

cellulase complex:

- EC 3.2.1.4
- EC 3.2.1.21

degradation of cellulose

3. Cheese, Chedder
4. Eggs, Boiled
5. Cabbage, Red

Endogenous enzymes

ACC synthase

prime factor controlling the rate of ethylene biosynthesis

Lipoxygenase EC 1.13.11.12

activity can increase ethylene production

cellulase complex:

- EC 3.2.1.4
- EC 3.2.1.21

degradation of cellulose

Microorganism enzymes:

Laccase EC 1.10.3.2 (Botrytis cinerea, cucumbers and radishes)

Endopolygalacturonase EC 3.2.1.15 (extracellular, Rhizopus stolonifer, cucumbers and radishes)

6. Lettuce, tomatoes, and carrots: see above

C. List of Chemical Reactions of Importance:
D. Quality Parameters of Importance:

Leafy vegetables: Lettuce and Red Cabage

- Texture
- Appearance

Ascorbic degradation is associated with wilting in green leafy vegetables.
Carotene is a precursor to vitamin A. Carotenes are subject to oxidation and to degradation associated with wilting of leafy vegetables.
intermediate respiration rates
Carrots

Ethylene induced formation of bitter isocoumarins in carrots.

Cucumbers

chilling injury

E. Table I. Effect of Gases on Microbes:

1. Microassays:

a. Erwinia carotovora (ATCC 15713)

| 95% GAS MIXES IN AIR | |
|---|---|
| 95% $CO_2$ | 100% |
| 95% $N_2$ | 0 |
| 95% Ar | 2 |

| 3 best gas mixes: | |
|---|---|
| 95% Ar:Ne 95:5 | 24% |
| 95% Ar:Kr 99:1 | 20% |
| 95% Ar:Ne 99:1 | 18% |

| 90% GAS MIXES IN AIR | |
|---|---|
| 90% $CO_2$ | 100% |
| 90% $N_2$ | 0 |
| 90% Ar | 2 |

| 3 best gas mixes: | |
|---|---|
| 90% Ar:Xe 99:1 | 21% |
| 90% Ar:Kr 99:1 | 20% |
| 90% Ar:Ne 99:1 | 16% |

| 50% GAS MIXES IN AIR | |
|---|---|
| 50% $CO_2$ | 100% |
| 50% $N_2$ | 0% |
| 50% Ar | 0% |

| Other best gas mixes: | |
|---|---|
| 50% Kr | 12% |

b. Pseudomonas marginalis (ATCC 10844)

| 95% GAS MIXES IN AIR | |
|---|---|
| 95% $CO_2$ | 100% |
| 95% $N_2$ | 93% |
| 95% Ar | 100% |

| 3 best gas mixes: | |
|---|---|
| 95% Ar:Ne 99:1 | 100% |
| 95% Ar:Ne 95:5 | 100% |
| 95% Ar:Xe/Kr 99.9:0.1 | 100% |

| 90% GAS MIXES IN AIR | |
|---|---|
| 90% $CO_2$ | 100% |
| 90% $N_2$ | 81% |
| 90% Ar | 85% |

| 3 best gas mixes: | |
|---|---|
| 90% Ar:Xe/Kr 99.9:0.1 | 100% |
| 90% Ar:Xe 95:5 | 43% |
| 90% Ar:Ne 95:5 | 43% |

| 50% GAS MIXES IN AIR | |
|---|---|
| 50% $CO_2$ | 100% |
| 50% $N_2$ | 0% |
| 50% Ar | 10% |

| 3 best gas mixes: | |
|---|---|
| 50% Ar:Kr 99:1 | 11% |
| 50% Ar:Ne 95:5 | 9% |
| 50% Xe | 16% |

c. Listeria monocytogenes (ATCC 984)

| Best inhibitory gases: | |
|---|---|
| 50% Ar:Ne 99.9:0.1 | 13% |
| 50% Ar:Ne 99:1 | 8% |
| 50% Ar:Ne | 8% |

Table 1b. Effect of Gases on Total Microorganisms from Product Trials.

| Aerobes: | | |
|---|---|---|
| Gas/Gas Mix: | % | % Inhibition Compared to 100% Air |
| 1. $CO_2$ | 100 | 2% |
| 2. Ar | 100 | 12% |
| 3. [Ar:Ne]:$CO_2$ | [9:1]:9 | 13% |

| Anaerobes: | | |
|---|---|---|
| Gas/Gas Mix: | % | % Inhibition Compared to 100% $CO_2$ |
| 1. Ar | 100 | 6% |
| 2. Ar | 100 | 1% |
| 3. Ar:$O_2$ | 9:1 | 5% |
| 4. Ar:Ne | 9:1 | 2% |

| Yeasts: | | |
|---|---|---|
| Gas/Gas Mix: | % | % Inhibition Compared to 100% Air |
| 1. $Co_2$ | 100 | 63% |
| 2. Ar | 100 | 47% |
| 3. Ar:Kr | 9:1 | 56% |
| 4. [Ar:Ne]:$CO_2$ | [9:1]:9 | 51% |

| Molds: | | |
|---|---|---|
| Gas/Gas Mix: | % | % Inhibition Compared to 100% Air |
| 1. $Co_2$ | 100 | 4% |
| 2. Ar | 100 | 2% |

F. Effect of Gases on Enzymes:

Class I. Oxidoreductase (EC 1)

Tyrosinase EC 1.14.18.1

- at 25° and optimal reaction conditions, simple saturation of solution with gas:

| Gas | Result |
|---|---|
| Xe | -73% (inhibition) |
| Kr | -73% |
| Ar | -60% |
| Ne | -46.7% |
| 90:10 Xe:Kr | -50% |
| Ar:Xe 99:1 | -70% |

Glucose oxidase EC 1.1.3.4

| Gas | Result |
|---|---|
| Xe | -91.6% (inhibition) |
| Kr | -92.7% |
| Ar | -85.8% |
| Ne | -61.7% |

Class III. Hydrolases (EC3)

Lipase EC 3.1.1.3

Showed up to -20% inhibition with Argon and noble gases.

Protease ($\alpha$-Chymotrypsin EC 3.4.21.1)

Showed up to -20 inhibition with Argon and noble gases depending on temperature.

Class IV. Lyases(EC4)

Citrate synthase EC 4.1.3.7

Showed maximum inhibition of -27% at 25°C when measured as a coupled reaction with all gases.

G. Effect of Gases on Chemical Reactions:

For mixed salads (chef salads), oxidation of color components is inhibited and degrative chemical oxidations are also strongly inhibited.
For example:

- Lettuce (see above)
- Tomatoes (see above)
- Carrots (see above)
- Cucumbers
  For cucumbers, oxidation of color components is inhibited and degrative chemical oxidations are also strongly inhibited.
  For example:

1. Color: The oxidation of chlorophyll is the primary color change. As the chlorophyll is broken down, the carotenoids are exposed, giving rise to a yellowing of the products. It has been found that noble gases effect oxidation in the order Xe>Kr>Ar>Ne>He in having a positive and unique utility in preventing oxidation even in the presence of oxygen.

Ascorbic acid degradation:
maintaining a minimum of 1 to 4% $O_2$ generally slows ascorbic acid degradation by preventing oxidation. It has been found that noble gases effect oxidation in the order Xe>Kr>Ar>Ne>He in having a positive and unique utility in preventing oxidation even in the presence of oxygen.
Elevated $CO_2$ levels accelerate ascorbic acid degradation.
It has been found that color can bemaintained well beyond the point where the product becomes microbiologically unexceptable.

2. Degrative chemical oxidations:

<u>Polygalacturonase EC 3.2.1.15</u>

- Exopoloygalacturonases EC 3.2.1.67
  De-esterification of cell wall galacturonans followed by polygalacturonase action.

Pectinesterase

Involoves in the preparation of the substate for polygalacturonases

Peroxidase (POD) EC 1.11.1.7

Stale, off-flavors.

Catalase EC 1.11.1.6

Adverse flavors.

Lipoxygenase EC 1.13.11.12

Activity required for the production of aldehydes typical of fresh cucumber flavor.

ACC synthase

prime factor controlling the rate of ethylene biosynthesis

cellulase complex:

- EC 3.2.1.4
- EC 3.2.1.21

degradation of cellulose
Note: See Effect of Gases on Enzymes above for quantification of the inhibitory effect of noble gases on enzymes.

- Radishes
  For radishes, oxidation of color components is inhibited and degrative chemical oxidations are also strongly inhibited.
  For example:

1. Color: The primary color changes are the oxidation of anthocyanins from purplish-red to off-white and the oxidation of flavanoids from bright red to brown. It has been found that noble gases effect oxidation of both the anthocyanins and flavanoids in the order Xe>Kr>Ar>Ne>He in having a positive and unique utility in preventing oxidation even in the presence of oxygen.

   It has been found that color can be maintained well beyond the point where the product becomes microbiologically unacceptable.

2. Degrative chemical oxidations:

ACC synthase

prime factor controlling the rate of ethylene biosynthesis

Lipoxygenase EC 1.13.11.12

activity can increase ethylene production

cellulase complex:

- EC 3.2.1.4

- EC 3.2.1.21

degradation of cellulose
Note: See Effect of Gases on Enzymes above for quantification of the inhibitory effect of noble gases on enzymes.

2. Degrative chemical oxidations:
Note: See Effect of Gases on Enzymes above for quantification of the inhibitory effect of noble gases on enzymes.

- Ham, Turkey (see above)
- Eggs, Boiled

1. Color: For hard boiled eggs, oxidation of color components is inhibited and degrative chemical oxidations are also strongly inhibited.

It has been found that color can be maintained well beyond the point where the product becomes microbiologically unexceptable.

2. Degrative chemical oxidations:
Note: See Effect of Gases on Enzymes above for quantification of the inhibitory effect of noble gases on enzymes.

- Red cabbage

For red cabbage, oxidation of color components is inhibited and degrative chemical oxidations are also strongly inhibited.
For example:

1. Color: The primary color changes are the oxidation of anthocyanins from purplish-red to off-white and the oxidation of flavanoids from bright red to brown. It has been found that noble gases effect oxidation of both the anthocyanins and flavanoids in the order Xe>Kr>Ar>Ne>He in having a positive and unique utility in preventing oxidation even in the presence of oxygen.

It has been found that color can be maintained well beyond the point where the product becomes microbiologically unexceptable.

2. Degrative chemical oxidations:

ACC synthase

prime factor controlling the rate of ethylene biosynthesis

Lipoxygenase EC 1.13.11.12

activity can increase ethylene production

cellulase complex:

- EC 3.2.1.4
- EC 3.2.1.21

degradation of cellulose
Note: See Effect of Gases on Enzymes above for quantification of the inhibitory effect of noble gases on enzymes.

H. Summary:
Generally, mixtures of $Ar:Kr:O_2$ or $Ar:Ne:CO_2$ work well in relative amounts of (8-9.5:2-0.5):5-10% each.

More preferably, however, relative amounts of (9:1):9% are used.

6. Product: Mushrooms

A. List of Microorganisms:

Clostridium botulinum

B. List of Enzymes:

Endogenous enzymes

Polyphenol oxidase (PPO) EC 1.14.18.1

ACC synthase

prime factor controlling the rate of ethylene biosynthesis

Lipoxygenase EC 1.13.11.12

activity can increase ethylene production

enzymatic browning reaction:

- Tyrosinase EC 1.14.18.1

  initiates browning reaction

- Catechol oxidase EC 1.10.3.2

Laccase EC 1.10.3.1

C. List of Chemical Reactions of Importance:

$$\text{phenolic compounds} \rightarrow \text{brown melanins}$$

D. Quality Parameters of Importance:

- Enzymatic browning:

  Tyrosinase
  Catechol oxidase

- Storage in 0% $O_2$ inhibits catechol oxidase activity and

  browning.

- Enzymatic Browning: Tyrosinase then Catechol oxidase

E. Table I. Effect of Gases on Microbes:

As for other vegetables.

F. Effect of Gases on Enzymes:

Class I. Oxdoseductase (EC 1)

Tyrosinase EC 1.14.18.1

- at 25° and optimal reaction conditions, simple saturation of solution with gas:

| Gas | Result |
|---|---|
| Xe | -73% (inhibition) |
| Kr | -73% |
| Ar | -60% |
| Ne | -46.7% |
| 90:10 Xe:Kr | -50% |
| Ar:Xe 99:1 | -70% |

Glucose oxidase EC 1.1.3.4

| Gas | Result |
|---|---|
| Xe | -91.6% (inhibition) |
| Kr | -92.7% |
| Ar | -85.8% |
| Ne | -61.7% |

G. Effect of Gases on Chemical Reactions:

For mushrooms, oxidation of color components is inhibited and degrative chemical oxidations are also strongly inhibited.
For example:

1. Color: the color changes in mushrooms is due to the oxidation of phenolic compounds to brown melanins. It has been found that noble gases effect oxidation in the order Xe>Kr>Ar>Ne>He in having a positive and unique utility in preventing oxidation even in the presence of oxygen.

$$\text{phenolic compounds} \xrightarrow{\text{air}} \text{brown melanins}$$

It has been found that color can be maintained well beyond the point where the product becomes microbiologically unexceptable.

2. Degrative chemical oxidations:

Enzymatic browning:

<u>Tyrosinase</u>
<u>Catechol oxidase</u>

- Storage in 0% $O_2$ inhibits catechol oxidase activity and browning.
Note: See Effect of Gases on Enzymes above for quantification of the inhibitory effect of noble gases on enzymes.

G. Table III. Effect of Gases on Chemical Reactions:
H. Summary:

Generally, fundamental improvements in color in mushrooms are observed with gas mixtures of 3-97 volume % of Ar and 17-3 volume % of any one of Ne, Kr, Xe or any combination thereof.

More preferably, however, it is desirable to use 5-90 volume % of Ar and 90-5 volume % of any one of Ne, Kr, Xe or any combination thereof.

7. Product: Tomatoes

A. List of Microorganisms:

<u>Spoilage microorganisms</u>
Erwinia carotovora
(bacterial soft rot)
Erwinia carotovora (Jones) Holland
Pseudomonads similar to Pseudomonas marginalis
(bacterial soft rot)
Pseudomonas tomato
(bacterial speck)
Xanthomonas vesicatoria
(bacterial spot)
Alternaria tenuis Auct.
(Alternaria rot)
Alternaria alteria
Botrytis cinerea
(gray mold rot)
B. cinerea Pers. ex Fr.
Colletotrichum coccodes
(anthracnose (spotting))
Fusarium
Geotrichum candidum
(sour rot (watery soft rot))
G. candidum Link ex Pers.
Phytophora spp.
(Phytophora rot (blight + rot))
Rhizopus stolonifer
(Rhizopus soft rot]0.3.2 (Botrytis cinerea))
R. stolonifer (Ehr. ex Fr.) Vuill.

B. List of Enzymes:

<u>Endogenous enzymes</u>
Cytokinin nucleosidases
in ripe tomato fruit. This enzyme system has a role in the metabolism of cytokinins in tomatoes. It may function to regulate the pool of active cytokinins (which govern growth, ripening and senescence processes).

ACC synthase

Prime factor controlling the rate of ethylene biosynthesis

Lipoxygenase EC 1.13.11.12

Activity can increase ethylene production. Involved in flavor biogenesis.
Oxidation by lipoxygenase can bleach carotenoids. Increase volatiles during maturation.

Polygalacturonases EC 3.2.1.15 (PG I and PG II)

in ripe tomatoes. Hydrolysis of glycosidic linkages in protopectin during ripening. Solubilization of uronic acid from pectinesterase-free tomato cell walls. PG II is about twice as effective as PG I in solubilizing cell walls. Polygalacturonase cleaves pectate randomly first to oligogalacturonates and ultimately to galacturonic acid, but the rate of hydrolysis decreases rapidly with decreasing chain length.

- Endopolygalacturonase EC

  Major role in ripe red tomatoes.

Pectinesterase EC 3.1.1.11

De-esterification of pectin: acts at both the reducing ends and interior loci on highly esterified pectin chains. Pectinesterase action must precede degradation of pectin by polygalacturonase, and in this way PE could exert regulation on the process of fruit softening. Tomatoes are a particularly rich source of the enzyme. The activity is high in green tomatoes and increases about 4-fold during ripening.

Cellulase EC 3.2.1.4

Degrades carboxymethylcellulose. Cellulase may be involved not only in tomato softening but also in cell enlargement during fruit development.

cellulase complex:

- EC 3.2.1.4
- EC 3.2.1.21

degradation of cellulose

Peroxidases EC 1.11.1.7

Peroxidase activities increase steadily throughout fruit development. The physiological function of peroxidase in fruit ripening processes seems to be auxin degradation.
Ethylene as a plant hormone has been known to trigger a variety of ripening processes such as the stimulation of polygalacturonase activity in tomatoes.

<u>Microorganism enzyme:</u>

Endopolygalacturonase EC 3.2.1.15 (extracellular, Rhizopus stolonifer)
Laccase EC 1.1
β-Galactosidase

Loss of galactose from cell walls during ripening.

C. List of Chemical Reactions of Importance: Carotenoid degradation during processing and storage:

unsaturated nature ⇒ susceptible to isomerization and oxidation.

D. Quality Parameters of Importance: lycopene

Lipoxygenase increases the volatiles during maturation of the fruit.

E. Table I. Effect of Gases on Microbes:

1. Microassays

a. Alternaria alternata (ATCC 13963)

| 95% GAS MIXES IN AIR | |
|---|---|
| 95% $CO_2$ | 100% |
| 95% $N_2$ | 44% |
| 95% Ar | 50% |

| Other best gas mixes: | |
|---|---|
| 95% Ne | 50% |

| 90% GAS MIXES IN AIR | |
|---|---|
| 90% $CO_2$ | 100% |
| 90% $N_2$ | 15% |
| 90% Ar | 23% |

| Other best gas mixes: | |
|---|---|
| 90% Ar:Xe 95:5 | 24% |

b. Ervinia carotovora (ATCC 15713)

| 95% GAS MIXES IN AIR | |
|---|---|
| 95% $CO_2$ | 100% |
| 95% $N_2$ | 0% |
| 95% Ar | 2% |

| 3 best gas mixes: | |
|---|---|
| 95% Ar:Ne 95:5 | 24% |
| 95% Ar:Kr 99:1 | 20% |
| 95% Ar:Ne 99:1 | 18% |

| 90% GAS MIXES IN AIR | |
|---|---|
| 90% $CO_2$ | 100% |
| 90% $N_2$ | 0% |
| 90% Ar | 2% |

| 3 best gas mixes: | |
|---|---|
| 90% Ar:Xe 99:1 | 21% |
| 90% Ar:Kr 99:1 | 20% |
| 90% Ar:Ne 99:1 | 16% |

| 50% GAS MIXES IN AIR | |
|---|---|
| 50% $CO_2$ | 100% |
| 50% $N_2$ | 0% |
| 50% Ar | 0% |

| Other best gas mixes: | |
|---|---|
| 50% Kr | 12% |

c. Pseudomonas marginalis (ATCC 10844)

| 95% GAS MIXES IN AIR | |
|---|---|
| 95% $CO_2$ | 100% |
| 95% $N_2$ | 93% |
| 95% Ar | 100% |

| 3 best gas mixes: | |
|---|---|
| 95% Ar:Ne 99:1 | 100% |
| 95% Ar:Ne 95:5 | 100% |
| 95% Ar:Xe/Kr 99.9:0.1 | 100% |

| 90% GAS MIXES IN AIR | |
|---|---|
| 90% $CO_2$ | 100% |
| 90% $N_2$ | 81% |
| 90% Ar | 85% |

| 3 best gas mixes: | |
|---|---|
| 90% Ar:Xe/Kr 99.9:0.1 | 100% |
| 90% Ar:Xe 95:5 | 43% |
| 90% Ar:Ne 95:5 | 43% |

| 50% GAS MIXES IN AIR | |
|---|---|
| 50% $CO_2$ | 100% |
| 50% $N_2$ | 0% |
| 50% Ar | 10% |

| 3 best gas mixes: | |
|---|---|
| 50% Ar:Kr 99:1 | 11% |
| 50% Ar:Ne 95:5 | 9% |
| 50% Xe | 16% |

Table 1b. Effect of Gases on Total Microorganisms from Product Trials.

| Aerobes: | | |
|---|---|---|
| Gas/Gas Mix: | % | % Inhibition Compared to 100% Air : |
| 1. $Co_2$ | 100 | 92% |
| 2. Ar | 100 | 96% |

| Anaerobes: | | |
|---|---|---|
| Gas/Gas Mix: | % | % Inhibition Compared to 100% $CO_2$ : |
| 1. Air | 100 | 34% |
| 2. Ar | 100 | 22% |
| 3. [Ar:Ne]:$CO_2$ | [9:1]:9 | 35% |

| Yeasts: | | |
|---|---|---|
| Gas/Gas Mix: | % | % Inhibition Compared to 100% Air : |
| 1. $Co_2$ | 100 | 80% |
| 2. Ar | 100 | 38% |
| 3. (Ar:Kr):$CO_2$ | [9:1]:9 | 56% |

| Molds: | | |
|---|---|---|
| Gas/Gas Mix: | % | % Inhibition Compared to 100% Air : |
| 1. $Co_2$ | 100 | 62% |
| 2. Ar | 100 | 51% |
| 3. Ar:Kr | 9:1 | 56% |
| 4. Ar:Ne | 9:1 | 55% |
| 5. (Ar:Ne):$CO_2$ | [9:1]:9 | 72% |

F. Effect of Gases on Enzymes: Class I. Oxidoreductase (EC 1)

Tyrosinase EC 1.14.18.1

- at 25° and optimal reaction conditions, simple saturation of solution with gas:

| Gas | Result |
|---|---|
| Xe | -73% (inhibition) |
| Kr | -73% |
| Ar | -60% |
| Ne | -46.7% |
| 90:10 Xe:Kr | -50% |
| Ar:Xe 99:1 | -70% |

Glucose oxidase EC 1.1.3.4

| Gas | Result |
|---|---|
| Xe | -91.6% (inhibition) |
| Kr | -92.7% |
| Ar | -85.8% |
| Ne | -61.7% |

Class III. Hydrolases (EC3)

Lipase EC 3.1.1.3

Showed up to -20% inhibition with Argon and noble gases.

Protease ($\alpha$-Chymotrypsin EC 3.4.21.1)

Showed up to -20 inhibition with Argon and noble gases depending on temperature.

Class IV. Lyases(EC4)

Citrate synthase EC 4.1.3.7

Showed maximum inhibition of -27% at 25°C when measured as a coupled reaction with all gases.

G. Effect of Gases on Chemical Reactions:

For tomatoes, oxidation of color components is inhibited and degrative chemical oxidations are also strongly inhibited.
For example:

1. Color: The carotenoids that are most important in imparting color to fruits are derivatives of α- and β-carotenes and lycopene. Due to their unsaturated nature, they are generally susceptible to oxidation. It has been found that noble gases effect oxidation in the order Xe>Kr>Ar>Ne>He in having a positive and unique utility in preventing oxidation even in the presence of oxygen.

Carotenoids are extremely susceptible to nonenzymatic oxidation in dehydrated fruits and vegetables (water acts as a barrier to oxygen diffusion).
It has been found that color can be maintained well beyond the point where the product becomes microbiologically unexceptable.

2. Degrative chemical oxidations:

<u>Cytokinin nucleosidases</u>

in ripe tomato fruit. This enzyme system has a role in the metabolism of cytokinins in tomatoes. It may function to regulate the pool of active cytokinins (which govern growth, ripening and senescence processes).

<u>ACC synthase</u>

Prime factor controlling the rate of ethylene biosynthesis

<u>Lipoxygenase EC 1.13.11.12</u>

Activity can increase ethylene production. Involved in flavor biogenesis.
Oxidation by lipoxygenase can bleach carotenoids.
Increase volatiles during maturation.

<u>Polygalacturonases EC 3.2.1.15 (PG I and PG II)</u>

in ripe tomatoes. Hydrolysis of glycosidic linkages in protopectin during ripening.
Solubilization of uronic acid from pectinesterase-free tomato cell walls. PG II is about twice as effective as PG I in solubilizing cell walls. Polygalacturonase cleaves pectate randomly first to oligogalacturonates and ultimately to galacturonic acid, but the rate of hydrolysis decreases rapidly with decreasing chain length.

- <u>Endopolygalacturonase EC</u>

Major role in ripe red tomatoes.

<u>Pectinesterase EC 3.1.1.11</u>

De-esterification of pectin: acts at both the reducing ends and interior loci on highly esterified pectin chains.

Pectinesterase action must precede degradation of pectin by polygalacturonase, and in this way PE could exert regulation on the process of fruit softening. Tomatoes are a particularly rich source of the enzyme.
The activity is high in green tomatoes and increases about 4-fold during ripening.

Cellulase EC 3.2.1.4

Degrades carboxymethylcellulose. Cellulase may be involved not only in tomato softening but also in cell enlargement during fruit development.
Cellulase complex:

- EC 3.2.1.4
- EC 3.2.1.21

degradation of cellulose

Peroxidases EC 1.11.1.7

Peroxidase activities increase steadily throughout fruit development. The physiological function of peroxidase in fruit ripening processes seems to be auxin degradation.
Note: See Effect of Gases on Enzymes above for quantification of the inhibitory effect of noble gases on enzymes.

Additionally, the experiment as described above was conducted to demonstrate the effect of different gases used in gas packaging on various foods. The results are described below.

Experiment

Diverse foods, such as apples, bananas, carrots, tomatoes, green beans, strawberries, steak and fish were subjected to gas packaging using various gases.
The bases used are described in Table A herein below, while the results of treatment after 1 week are described in Tables B and C herein below.

TABLE A

| GAS PACKAGING EXPERIMENT ON DIVERSE COMMODITIES | |
|---|---|
| TREATMENTS | |
| I | 100% $N_2$ |
| II | 100% AR |
| III | 95% AR + 5% XE |
| IV | 90% Ar + 5% XE + 5% $O_2$ |
| V | 100% XE |
| VI | 95% AR + 5% KR |
| VII | 90% AR + 5% KR + 5% $O_2$ |
| VIII | 100% KR |
| IX | 100% AIR |

TABLE B

| | I | II | III | IV | V | VI | VII | VIII | IX |
|---|---|---|---|---|---|---|---|---|---|
| APPLES | 1<br>9 | 1<br>9 | 1<br>8 | 1<br>8 | 1<br>8 | 1<br>9 | 1<br>9 | 1<br>9 | 1<br>8 |
| BANANAS | 5<br>8<br>9 | 5<br>8 | 5<br>8 | 5<br>8<br>9 | 5<br>8<br>10 | 5<br>8 | 5<br>8<br>* | 8<br>9<br>10 | 8<br>9 |
| CARROTS | 9<br>11 | 9 | 6<br>9<br>11 | 6<br>9 | 6<br>9<br>11 | 6<br>9<br>11 | 9 | 6<br>9 | 9 |
| TOMATOES | 1 | 1 | 1 | 1 | 1 | 4 | 1 | 4 | 1 |
| GREEN BEANS | 6<br>8 | 4<br>6 | 2 4<br>6 8 | 2 | 4<br>8<br>10 | 2<br>6<br>8 | 1 | 6<br>8 | 1 |
| STRAWBERRIES | 6<br>11 | 1 | 6 | 1 | 6 | 6 | 6 | 6 | 6 |
| STEAK | 6<br>8 | 6<br>8 | 6<br>8 | 6<br>8 | 6<br>8 | 6<br>8 | 6<br>8 | 6<br>8 | 6<br>6 |
| FISH | 4<br>6 | 6 | 6 | 5<br>6 | 4<br>6<br>9 | 5<br>6 | 6 | 6 | 5<br>6 |

**KEY =**
1. NO CHANGE
2. MOLD GROWTH
3. SOFTNESS
4. BACTERIAL GROWTH
5. SPLITTING
6. MOISTURE (JUICE PRODUCTION)
7. SHRIVELING
8. BROWNING
9. DRYING
10. ROTTING
11. POUCH EXPANDED *** BANANA SPLIT DURING THE PACKAGING**

TABLE C

| | TREATMENT WITH LESS DETERIORATION AFTER 1 WEEK | TREATMENT WITH MOST DETERIORATION AFTER 1 WEEK |
|---|---|---|
| APPLES | V - BROWNED AND DRIED SLOWEST; NO GROWTH OBSERVED | I - SOME ROTTING OBSERVED |
| BANANAS | VII- STILL SOME YELLOW AND MINIMAL AMOUNT OF JUICE SECRETED | 1 - SKINNED BLACKENED AND SOFTENED EARLIEST |
| CARROTS | VII- LEAST AMOUNT OF DRYING | VIII - VERY MOLDY AFTER ONE WEEK |
| TOMATOES | VII - LEAST AMOUNT OF MOLD ONE CORE AFTER ONE WEEK; NO JUICE SECRETED | V - MOST AMOUNT OF MOLD ON CORE; PEEL WAS CRACKING AND SECRETED A LOT OF JUICE |
| GREEN VII BEANS | - STAYED GREENEST THE LONGEST | IV - VERY MOLDY AFTER ONE WEEK |
| STRAWBERRIES | II - RETAINED ITS JUICE DURING OBSERVATIONS | VII - SOME MOLD OBSERVED AFTER ONE WEEK |
| STEAK | IX - BROWNED AND DRIED THE SLOWEST | V - MOST MOLD OBSERVED AFTER ONE WEEK |
| FISH | VII - LEAST MOLD AND ROTTING OBSERVED. RETAINED MOST OF ITS JUICE | VIII - MOST MOLD AND ROTTING OBSERVED |

Generally, any of the methods of the present invention may utilize a noble gas, mixture of noble gases or mixture containing at least one noble gas also containing one or more other gases, such as nitrogen, oxygen, air, carbon dioxide, nitrous oxide or carbon monoxide or any condition thereof.

Further, the present invention specifically contemplates the use of offstream gas mixtures, such as about 90:10(Kr/Xe).

Also, the present invention also specifically contemplates the use of mixtures of deoxygenated air, i.e., having generally less than about 15% by volume, preferably less than about 10% by volume, of air and at least one noble gas in an amount sufficient to offset the oxidizing effect of the oxygen therein.

Generally, the present gases and gas mixtures exhibit an improved food shelf-life at ambient, refrigeration, freezing or cooking temperatures, such as from about -190°C to about 260°C.

Moreover, the effect of the present invention may be obtained in conjunction with vacuum packaging with the atmosphere added thereafter.

The present gases or gas mixtures are demonstrated to increase shelf-life of these products when processed under high pressure of these atmospheres and then stabilized at 1 atm.

The present gases or gas mixtures are effective when the noble gas or mixture of gases is dissolved in liquid before, during or after processing.

The present gases or gas mixtures are effective when the noble gas or mixture is added as a liquid, especially as during a freezing under liquefied gas.

The present gases or gas mixtures act to control the activity of enzymes important in food product degradation, including enzymes endogenous in the food, endogenous to microbial metabolism, exogenously applied during processing of the food, and exogenously secreted by the microorganism.

The present gases or gas mixtures act to control oxidation of food products.

The present gases or gas mixtures act to increase the shelf-life of food products whether these are fresh, unprocessed, processed, cooked, smoked, canned, or salted.

The present invention is effective using any means allowing contact between the gas and the food product including: flushing; injecting; sparging; application of vacuum followed by gas flushing; pressurization; introduction into an impermeable or semipermeable film covered or formed container containing product and sealed; having gas continuously flushed through, on, or around a food product; under septic or sterile conditions; wherein the container is pressurized or not; wherein the container is of a bulk, shipping, or individual serving type; wherein the container is a formable pouch, injectable pouch, sealable pouch, formable tray, vacuum formable tray or pouch, heat formable tray or pouch, or film covered tray; wherein the container is frozen, refrigerated or kept at ambient temperature, or later cooked.

Generally, the present invention provides a process for controlling the enzymes which cause microbe to grow in food and/or food by contacting said food with noble gas and/or mixtures of noble gases and/or noble gas-containing mixtures.

A process for controlling the enzymes "produced by the food itself which cause degradation of said food by contacting said food with a noble gas and/or mixtures of noble gas-containing mixtures.

A process for controlling enzymes secreted by spoilage microorganisms in and/or on food by contacting said food with a noble gas and/or mixtures of noble gases and/or noble gas-containing mixtures.

A process for controlling enzymes in and/or on food by contacting said food with a noble gas and/or mixtures of noble gases and/or noble gas-containing mixtures.

A process for preserving color and/or appearance of a food product by contacting said food with a noble gas and/or mixtures of noble gases and/or gas-containing mixtures.

A process for controlling the non-enzymatic chemical oxidation reactions of a food product by contacting said food with a noble gas and/or mixtures of noble gases and/or gas-containing mixtures.

## Claims

1. A process of preserving vegetables selected from the group consisting of carrots, green beans, lettuce, chef salad, mushrooms, tomatoes, and mixtures thereof, which is characterized by contacting said vegetable or mixture thereof with a gas mixture, the gas mixture being in accordance with the following:

| Food | Gas Mixtures |
|---|---|
| carrots | Binary mixtures or Ar:Ne are preferably used in the relative amount of 80 to 99 volume % Ar and -1 to 20 volume % Ne, more preferably, 85 to 97% volume % Ar and 3 to 15 volume % of Ne, most preferably, 95 volume % of Ar and 5 volume % of Ne, wherein additionally, up to 10 volume % of 02, air or Co2 may be used. |
| green beans | Mixtures of Ar:Kr or Xe in relative amounts of 80-95:5-20 volume % are preferable, more preferably, relative amounts of 85-95:5-15 volume %, more preferably a mixture of Ar:Kr or Xe of 9:1 relative in volume %, wherein about 1-15 volume % of O2, preferably 2-10 volume % of O2 is included. |
| lettuce | A mixture of Ar:Ne of 80-95:5-20 volume % is preferable, with the mixture of 90-95:5-10 volume % being more preferable, most preferable of all being a mixture of Ar:Ne/95:5, wherein additionally, O2 and CO2 may be used in amounts of up to 5 volume %. |
| mixed salad | A mixture of Ar:Kr:O2 or Ar:Ne:CO2 work well in relative amounts of (8-9.5:2-0.5):5-10% each, more preferably relative amounts of (9:1):9% being used. |
| mushrooms | Mixtures of 3-97 volume % of Ar and 17-3 volume % of any one of Ne, Kr, Xe or any combination thereof, more preferably 5-90 volume % of Ar and 90-5 volume % of any one of Ne, Kr, Xe or any combination thereof. |
| tomatoes | 90 volume percent Ar;<br>5 volume percent Kr;<br>5 volume percent $O_2$ |

2. The process of claim 1 further characterized by said gas mixture including a carrier gas selected from the group consisting of oxygen, nitrogen, air, carbon dioxide and mixtures thereof.

3. The process of any one of claims 1 and 2, further characterized by being effected at a temperature of between 0°C and 40°C.

4. The process of claim 3, further characterized by the temperature being between 10°C and 30°C.

5. The process of any one of claims 1-4, further characterized by said gas mixture being at a pressure of less than 10 atmospheres (1013 kPa).

6. The process of claim 5, further characterized by said gas mixture being in a pressure of less than 3 atmospheres (304 kPa).

7. The process of claim 6, further characterized by said gas mixture being at a pressure between 1 and 2 atmospheres (101 and 202 kPa).

8. The process of claim 7, further characterized by said gas mixture being at a pressure of 1 atmosphere (101 kPa).

**Patentansprüche**

1. Verfahren zur Haltbarmachung von Gemüse, ausgewählt aus der Gruppe, bestehend aus Karotten, grünen Bohnen, Salat, Chefsalat, Pilzen, Tomaten und Gemischen davon, dadurch gekennzeichnet, daß die Gemüse oder Gemische davon mit einem Gasgemisch in Kontakt gebracht werden, wobei das Gasgemisch dem folgenden entspricht:

| Lebensmittel | Gasgemische |
|---|---|
| Karotten | Binäre Gemische von Ar : Ne werden vorzugsweise in einer relativen Menge von 80 bis 99 Volumen-% Ar und 1 bis 20 Volumen-% Ne, weiter bevorzugt, 85 bis 97 Volumen-% Ar und 3 bis 15 Volumen-% Ne, am meisten bevorzugt 95 Volumen-% Ar und 5 Volumen-% Ne, wobei zusätzlich bis zu 10 Volumen-% $O_2$, Luft oder $CO_2$ verwendet werden können. |
| Grüne Bohnen | Mischungen von Ar : Kr oder Xe in relativen Mengen von 80 - 95 : 5 - 20 Volumen-% werden bevorzugt, weiter bevorzugt, relative Mengen von 85 - 95 : 5 - 15 Volumen-%, am meisten bevorzugt eine Mischung von Ar : Kr oder Xe von 9 : 1 relativ in Volumen-%, wobei etwa 1 - 15 Volumen-% $O_2$, vorzugsweise 2 - 10 Volumen-% $O_2$ eingeschlossen sind. |
| Salat | Eine Mischung von Ar : Ne von 80 - 95 : 5 - 20 Volumen-% ist bevorzugt, mit einer weiter bevorzugten Mischung von 90 - 95 : 5 - 10 Volumen-%, am meisten bevorzugt von allem eine Mischung von Ar : Ne / 95 : 5, wobei zusätzlich $O_2$ und $CO_2$ in Mengen von bis zu 5 Volumen-% verwendet werden können. |
| Gemischter Salat | Eine Mischung von Ar : Kr : $O_2$ oder Ar : Ne : $CO_2$ funktioniert gut, in relativen Mengen von jeweils (8 - 9,5 : 2 -0,5) : 5 - 10 %, weiter bevorzugt werden relative Mengen von (9 : 1) : 9 % eingesetzt. |
| Pilze | Mischungen von 3 bis 97 Volumen-% Ar und 17 - 3 Volumen-% von jeweils Ne, Kr, Xe oder jeglicher Kombination davon, weiter bevorzugt 5 - 90 Volumen-% von Ar und 90 -5 Volumen-% von jeweils Ne, Kr, Xe oder jeglicher Kombination davon. |
| Tomaten | 90 Volumen-% Ar;<br>5 Volumen-% Kr;<br>5 Volumen-% $O_2$ |

2. Verfahren nach Anspruch 1, weiterhin dadurch gekennzeichnet, daß das Gasgemisch ein Trägergas, ausgewählt aus der Gruppe bestehend aus Sauerstoff, Stickstoff, Luft, Kohlendioxid und Gemischen davon, einschließt.

3. Verfahren nach einem der Ansprüche 1 oder 2, weiterhin dadurch gekennzeichnet, daß es bei einer Temperatur von zwischen 0 °C und 40 °C durchgeführt wird.

4. Verfahren nach Anspruch 3, weiterhin dadurch gekennzeichnet, daß die Temperatur zwischen 10 °C und 30 °C liegt.

5. Verfahren nach einem der Ansprüche 1 bis 4, weiterhin dadurch gekennzeichnet, daß das Gasgemisch einen Druck von weniger als 10 Atmosphären (1013 kPa) aufweist.

6. Verfahren nach Anspruch 5, weiterhin dadurch gekennzeichnet, daß das Gasgemisch einen Druck von weniger als 3 Atmosphären (304 kPa) aufweist.

7. Verfahren nach Anspruch 6, weiterhin dadurch gekennzeichnet, daß das Gasgemisch einen Druck von zwischen 1 und 2 Atmosphären (101 und 202 kPa) aufweist.

8. Verfahren nach Anspruch 7, weiterhin dadurch gekennzeichnet, daß das Gasgemisch einen Druck von 1 Atmosphäre (101 kPa) aufweist.

## Revendications

1. Procédé de conservation de légumes choisis parmi le groupe constitué des carottes, des haricots verts, de la laitue, de la salade du chef, de champignons, de tomates, et de leurs mélanges, qui est caractérisé par la mise en contact dudit légume ou de son mélange avec un mélange gazeux, le mélange gazeux étant conforme à ce qui suit:

| Aliment | Mélanges gazeux |
|---|---|
| carottes | Des mélanges binaires de Ar:Ne sont de préférence utilisés en quantité relative de 80 à 99% en volume de Ar et de 1 à 20% en volume de Ne, plus préférablement, de 85 à 97% en volume de Ar et de 3 à 15% en volume de Ne, le plus préférablement, de 95% en volume de Ar et de 5% en volume de Ne, jusqu'à 10% en volume de $O_2$, d'air ou de $CO_2$ pouvant être en outre utilisés. |
| haricots verts | On préfère des mélanges de Ar:Kr ou Xe en quantités relatives de 80-95:5-20% en volume, plus préférablement en quantités relatives de 85-95:5-15% en volume, le plus préférablement un mélange de Ar:Kr ou Xe en quantité relative de 9:1% en volume, environ 1-15% en volume de $O_2$, de préférence 2-10% en volume de $O_2$ étant inclus. |
| laitue | On préfère un mélange de Ar:Ne de 80-95:5-20% en volume, un mélange de 90-95:5-10% en volume étant plus préféré, un mélange de Ar:Ne/95:5 étant le plus préféré, $O_2$ et $CO_2$ pouvant être en outre utilisés en des quantités allant jusqu'à 5% en volume. |
| salade mixte | Un mélange de Ar:Ke:$O_2$ ou de Ar:Ne:$CO_2$ donne de bons résultats en quantités relatives de (8-9,5:2-0,5):5-10%, des quantités relatives de (9:1):9% étant plus préférablement utilisées. |
| champignons | Mélanges de 3-97% en volume de Ar et 17-3% en volume de l'un quelconque parmi Ne, Kr, Xe ou d'une combinaison quelconque de ceux-ci, plus préférablement de 5-90% en volume de Ar et 90-5% en volume de l'un quelconque parmi Ne, Kr, Xe ou d'une combinaison quelconque de ceux-ci. |
| tomates | 90 pour cent en volume de Ar;<br>5 pour cent en volume de Kr;<br>5 pour cent en volume de $O_2$. |

2. Procédé selon la revendication 1, caractérisé en outre en ce que ledit mélange gazeux comprend un gaz vecteur choisi parmi le groupe constitué de l'oxygène, l'azote, l'air, le dioxyde de carbone et de leurs mélanges.

3. Procédé selon l'une quelconque des revendications 1 et 2, caractérisé en outre en ce qu'il est réalisé à une température comprise entre O°C et 40°C.

4. Procédé selon la revendication 3, caractérisé en outre en ce que la température est comprise entre 10°C et 30°C.

5. Procédé selon l'une quelconque des revendications 1-4, caractérisé en outre en ce que ledit mélange gazeux est à une pression inférieure à 10 atmosphères (1013 kPa).

6. Procédé selon la revendication 5, caractérisé en outre en ce que ledit mélange gazeux est à une pression inférieure à 3 atmosphères (304 kPa).

7. Procédé selon la revendication 6, caractérisé en outre en ce que ledit mélange gazeux est à une pression comprise entre 1 et 2 atmosphères (101 et 202 kPa).

8. Procédé selon la revendication 7, caractérisé en outre en ce que ledit mélange gazeux est à une pression de 1 atmosphère (101 kPa).

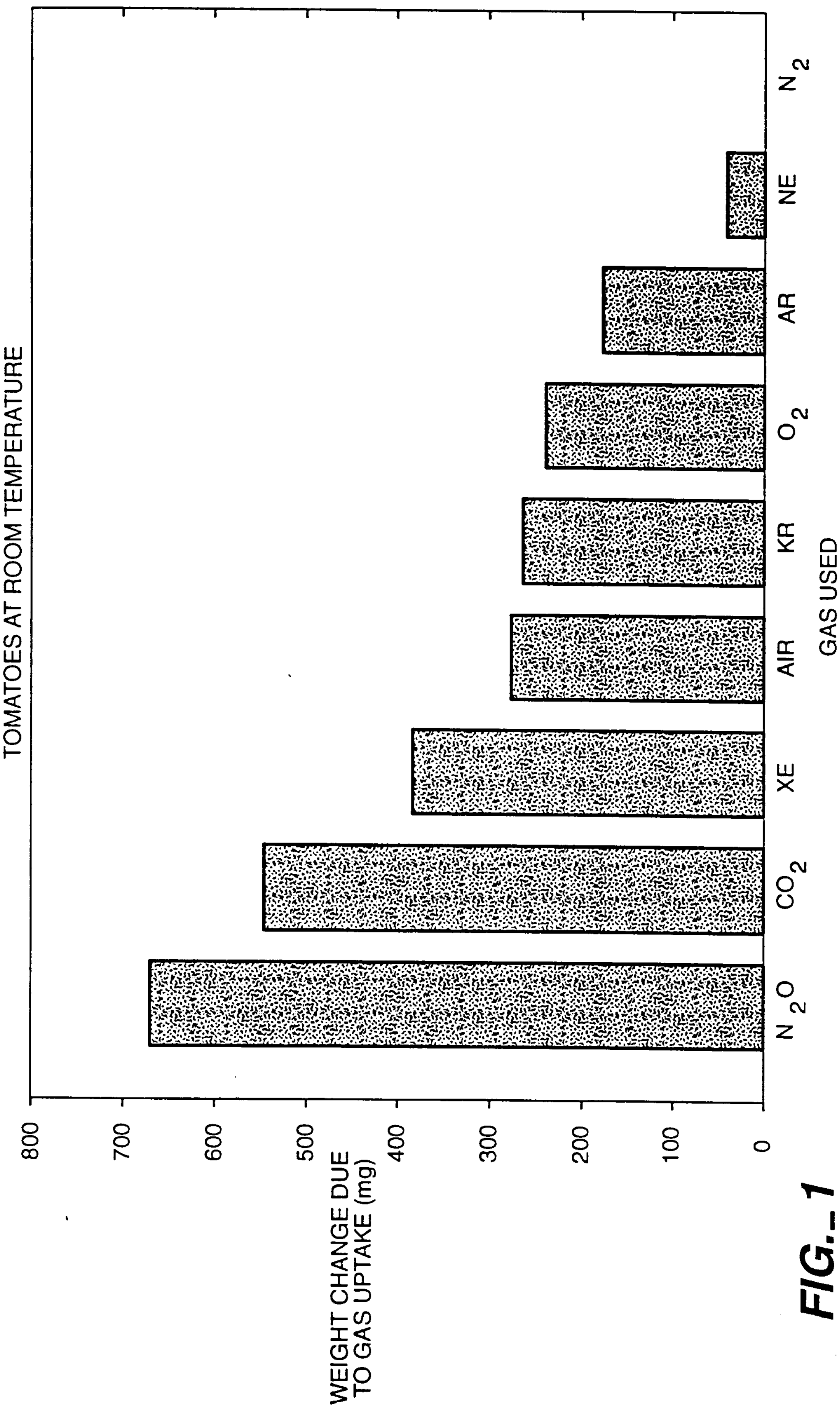
TOMATOES AT ROOM TEMPERATURE
WEIGHT CHANGE DUE TO GAS UPTAKE (mg)
0
100
200
300
400
500
600
700
800
$N_2O$
$CO_2$
XE
AIR
KR
$O_2$
AR
NE
$N_2$
GAS USED

*FIG._1*

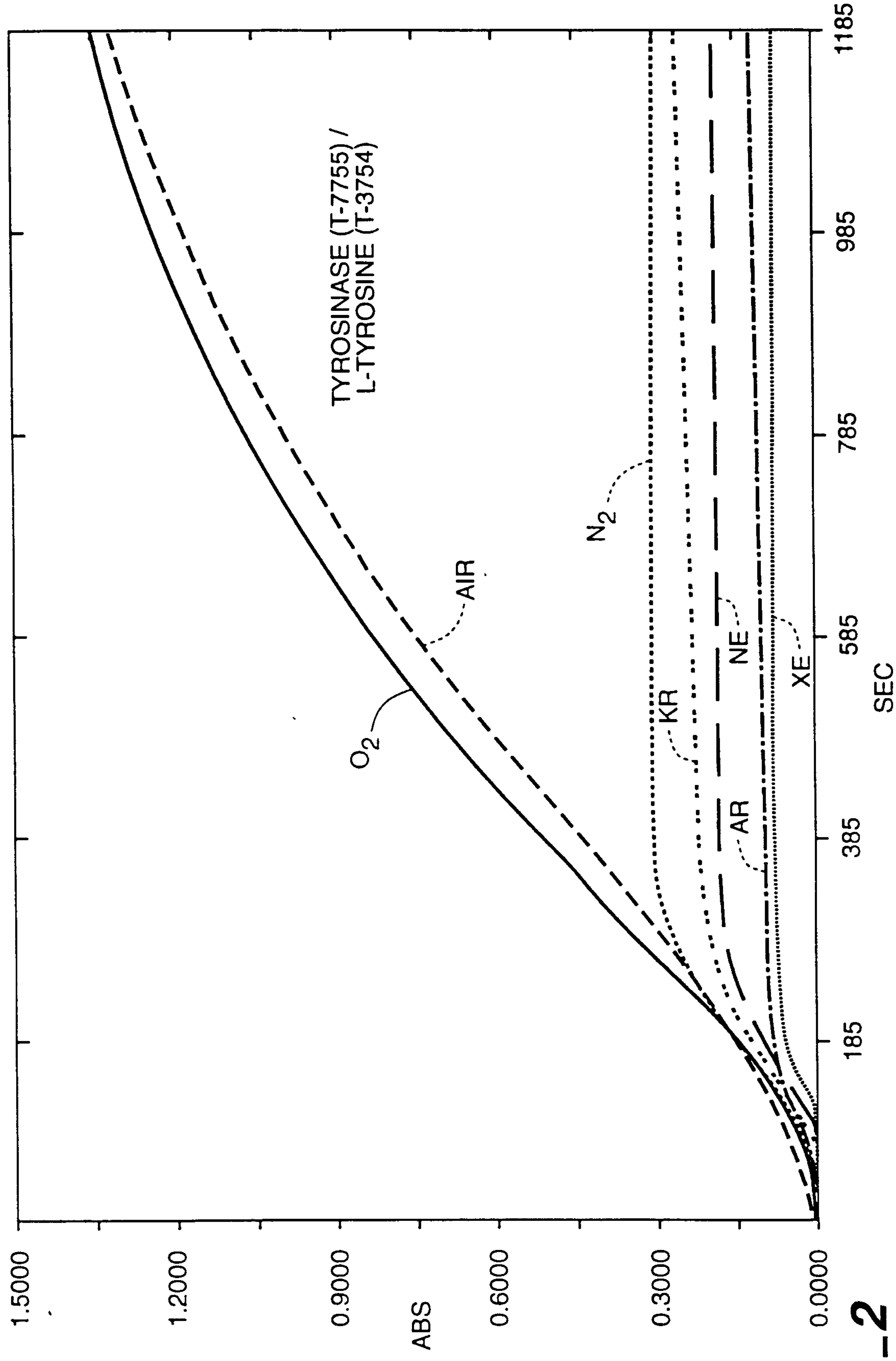

TYROSINASE (T-7755) /
L-TYROSINE (T-3754)
ABS
1.5000
1.2000
0.9000
0.6000
0.3000
0.0000
SEC
185
385
585
785
985
1185
$O_2$
AIR
$N_2$
KR
NE
AR
XE


FIG._2

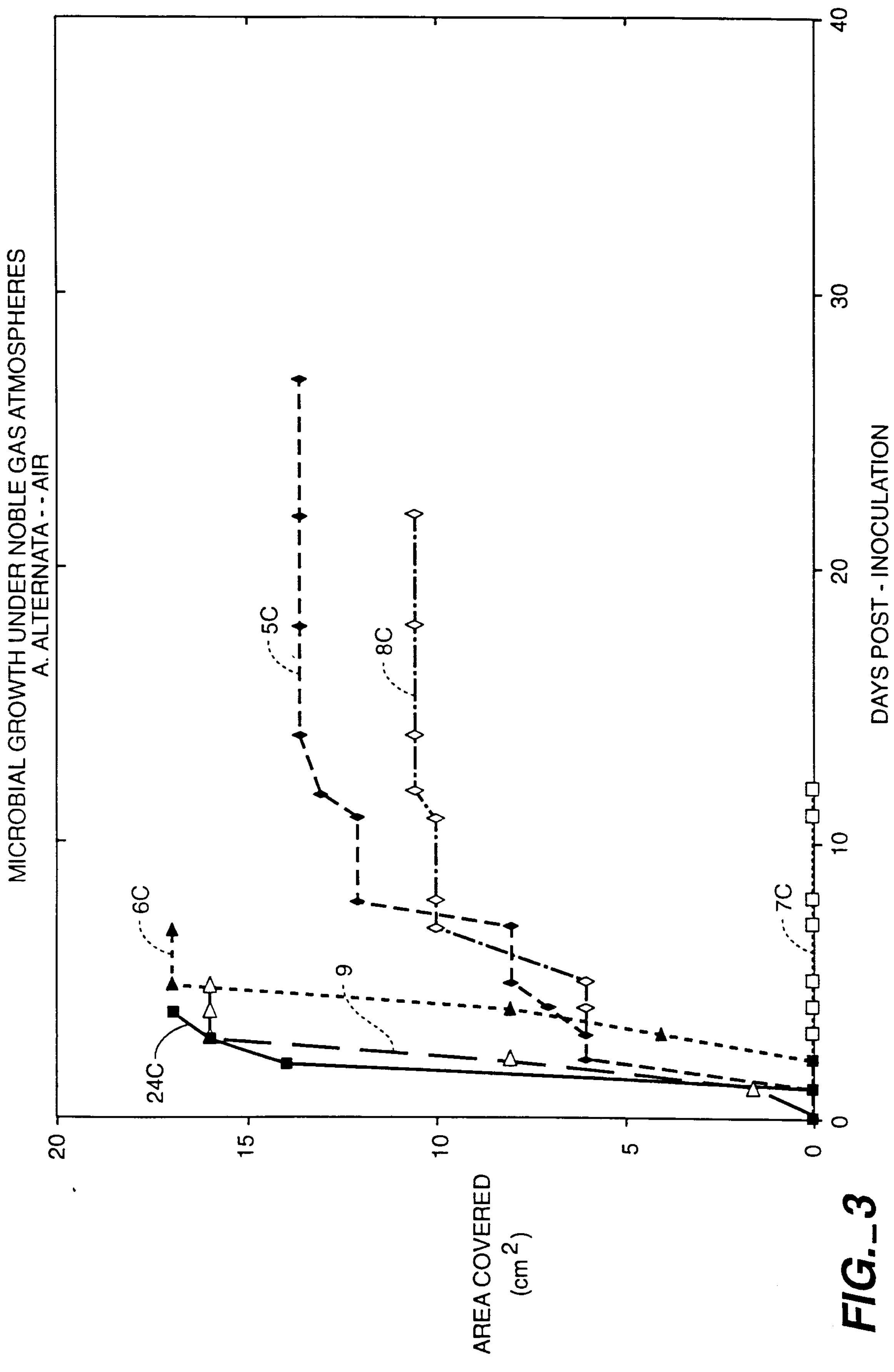
MICROBIAL GROWTH UNDER NOBLE GAS ATMOSPHERES
A. ALTERNATA - - AIR
AREA COVERED
($cm^2$)
DAYS POST - INOCULATION
0
5
10
15
20
0
10
20
30
40
24C
9
6C
5C
8C
7C

FIG._3

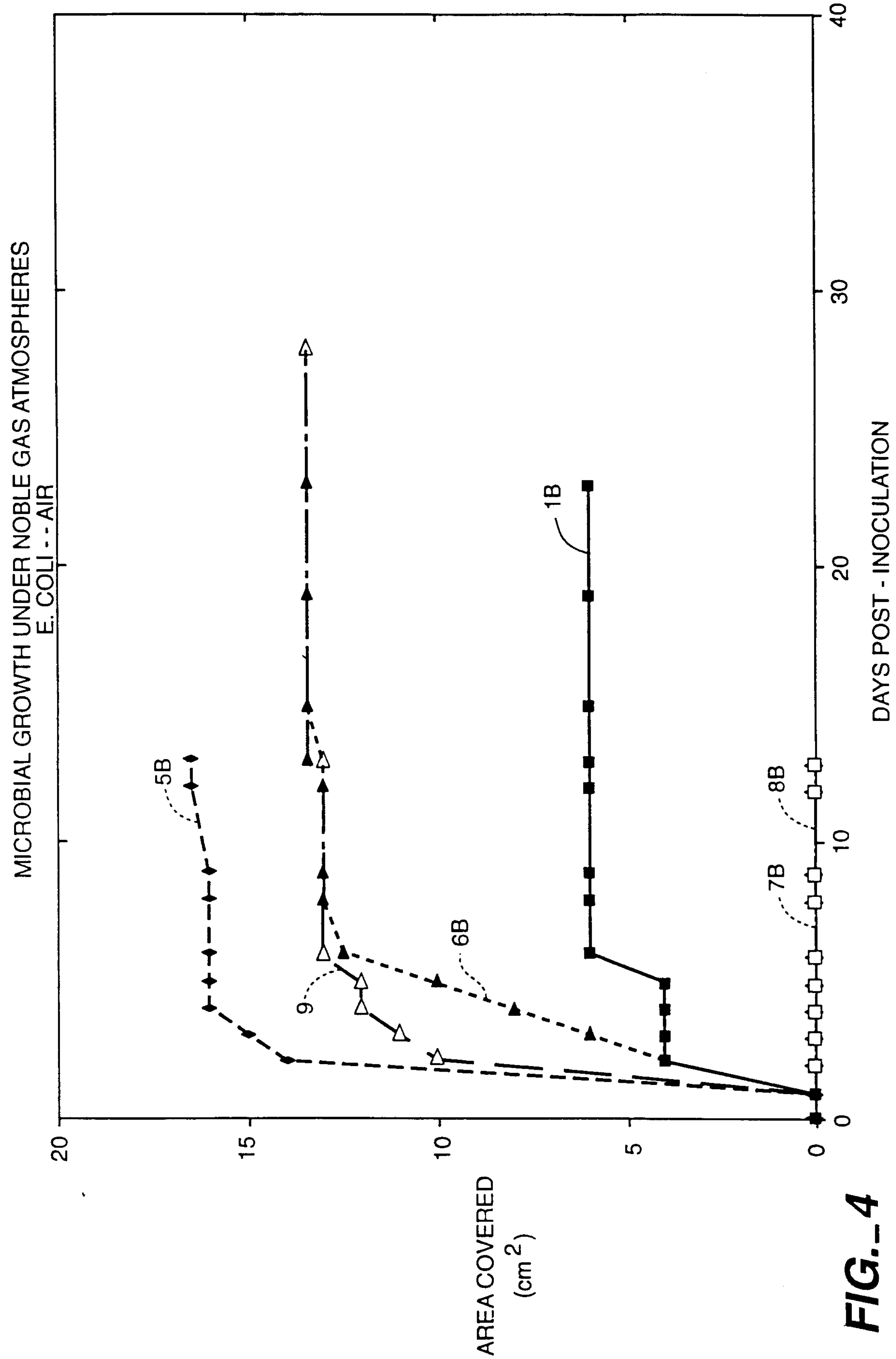
MICROBIAL GROWTH UNDER NOBLE GAS ATMOSPHERES
E. COLI - - AIR
AREA COVERED
(cm²)
DAYS POST - INOCULATION
0
5
10
15
20
0
10
20
30
40
5B
6B
9
1B
7B
8B

FIG._4

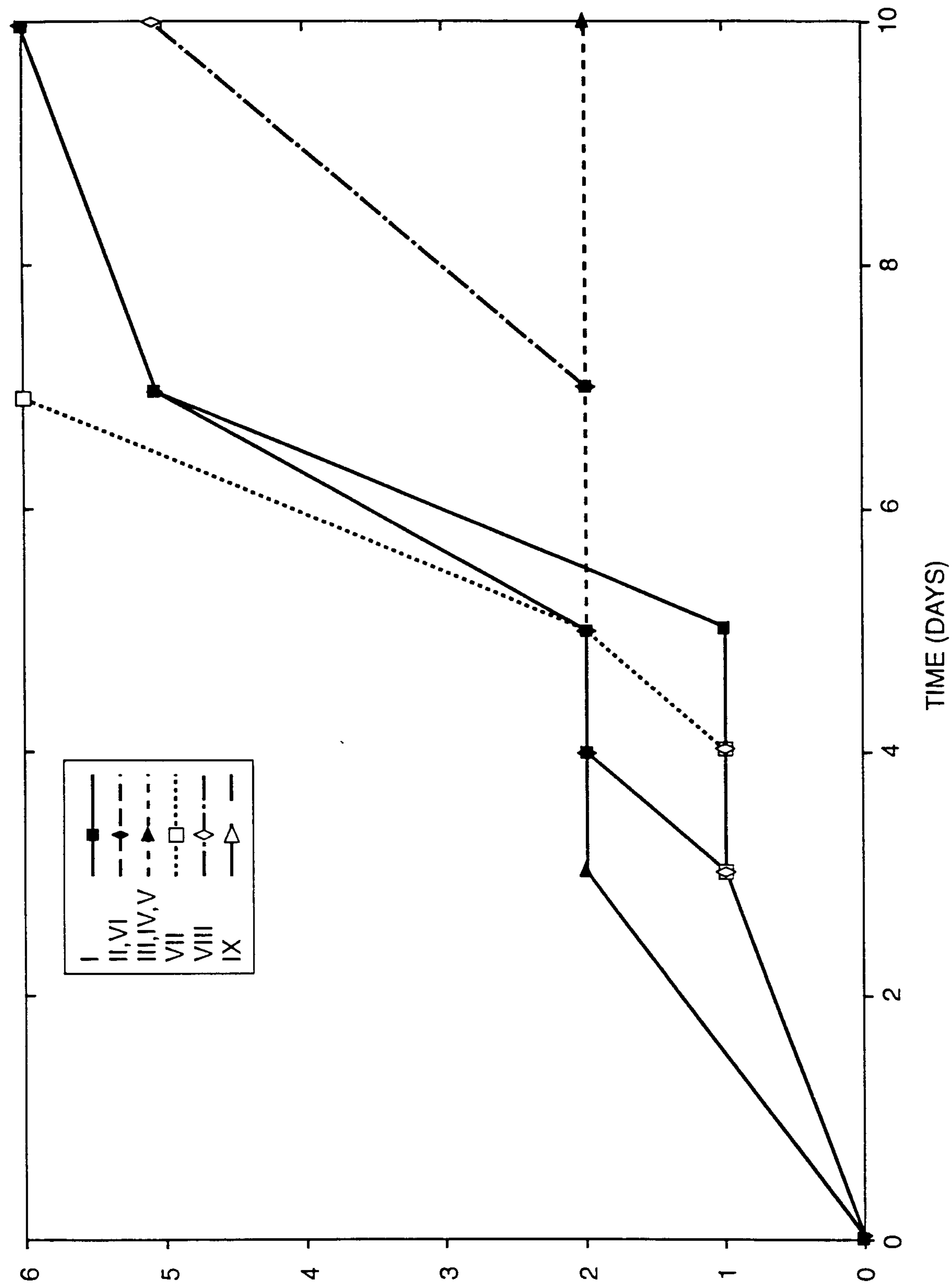


*FIG._5*

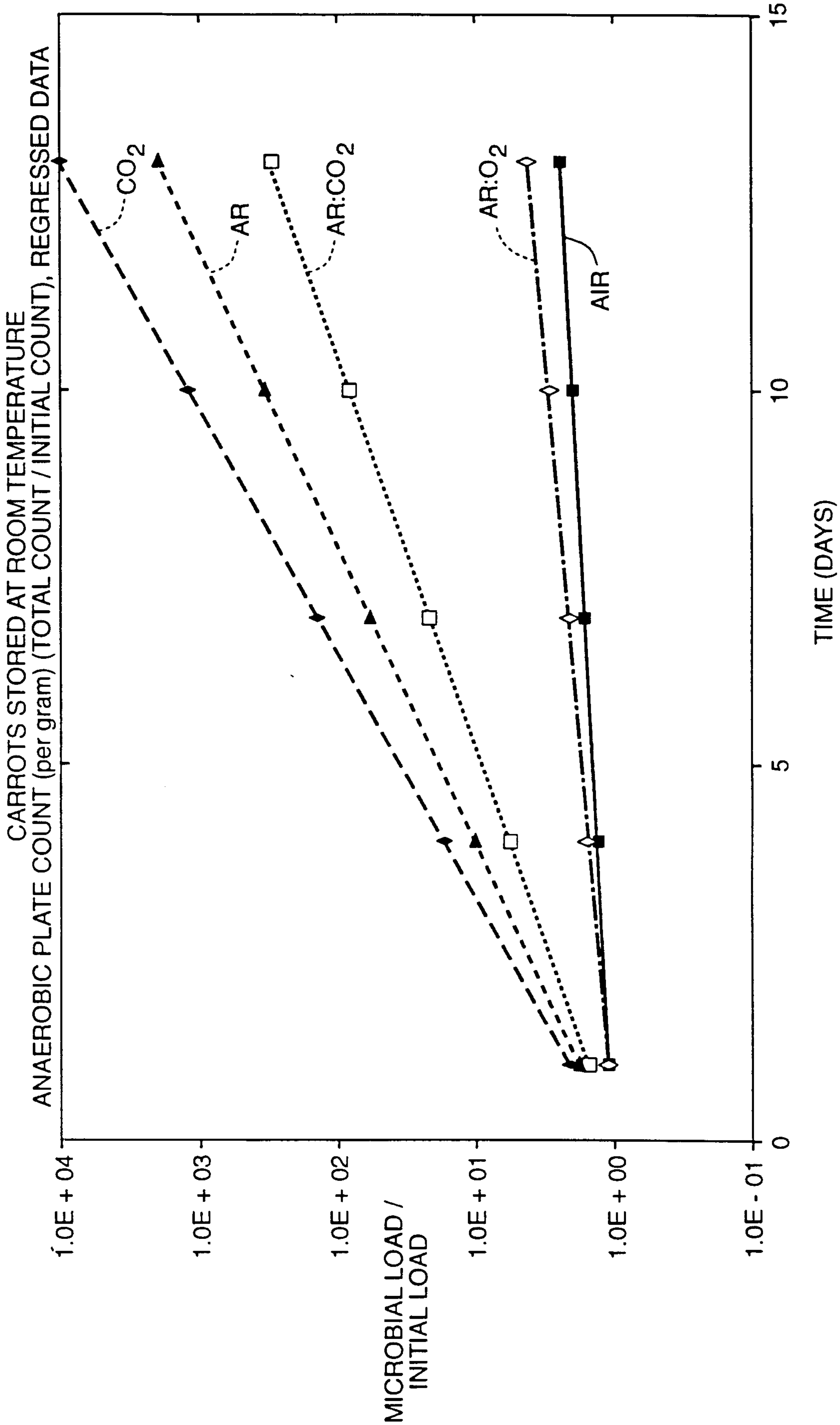
CARROTS STORED AT ROOM TEMPERATURE
ANAEROBIC PLATE COUNT (per gram) (TOTAL COUNT / INITIAL COUNT), REGRESSED DATA
MICROBIAL LOAD / INITIAL LOAD
1.0E + 04
1.0E + 03
1.0E + 02
1.0E + 01
1.0E + 00
1.0E - 01
0
5
10
15
TIME (DAYS)
$CO_2$
AR
$AR:CO_2$
$AR:O_2$
AIR

*FIG._6*

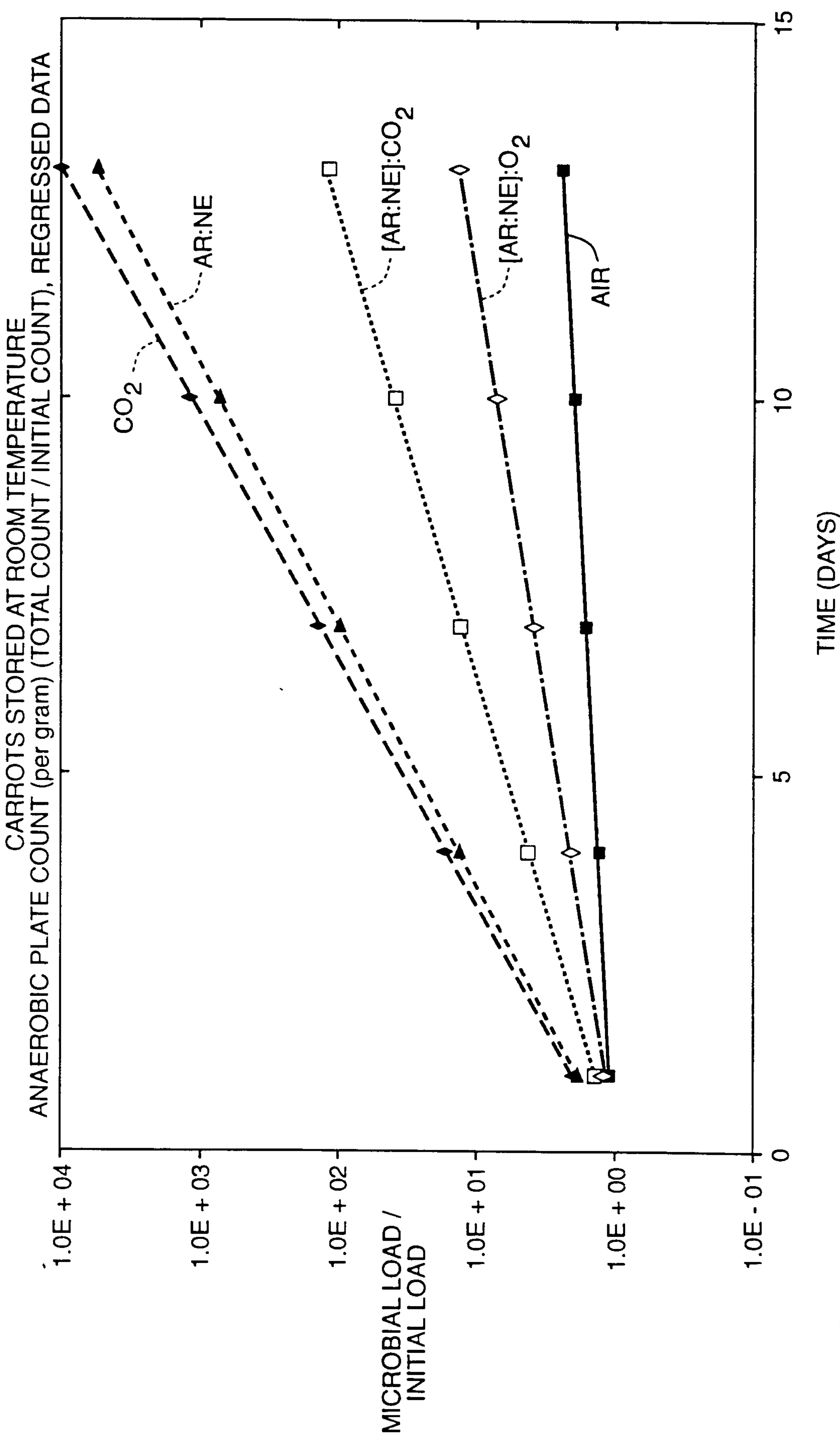
CARROTS STORED AT ROOM TEMPERATURE
ANAEROBIC PLATE COUNT (per gram) (TOTAL COUNT / INITIAL COUNT), REGRESSED DATA
MICROBIAL LOAD / INITIAL LOAD
1.0E + 04
1.0E + 03
1.0E + 02
1.0E + 01
1.0E + 00
1.0E - 01
0
5
10
15
TIME (DAYS)
$CO_2$
AR:NE
[AR:NE]:$CO_2$
[AR:NE]:$O_2$
AIR

FIG._7

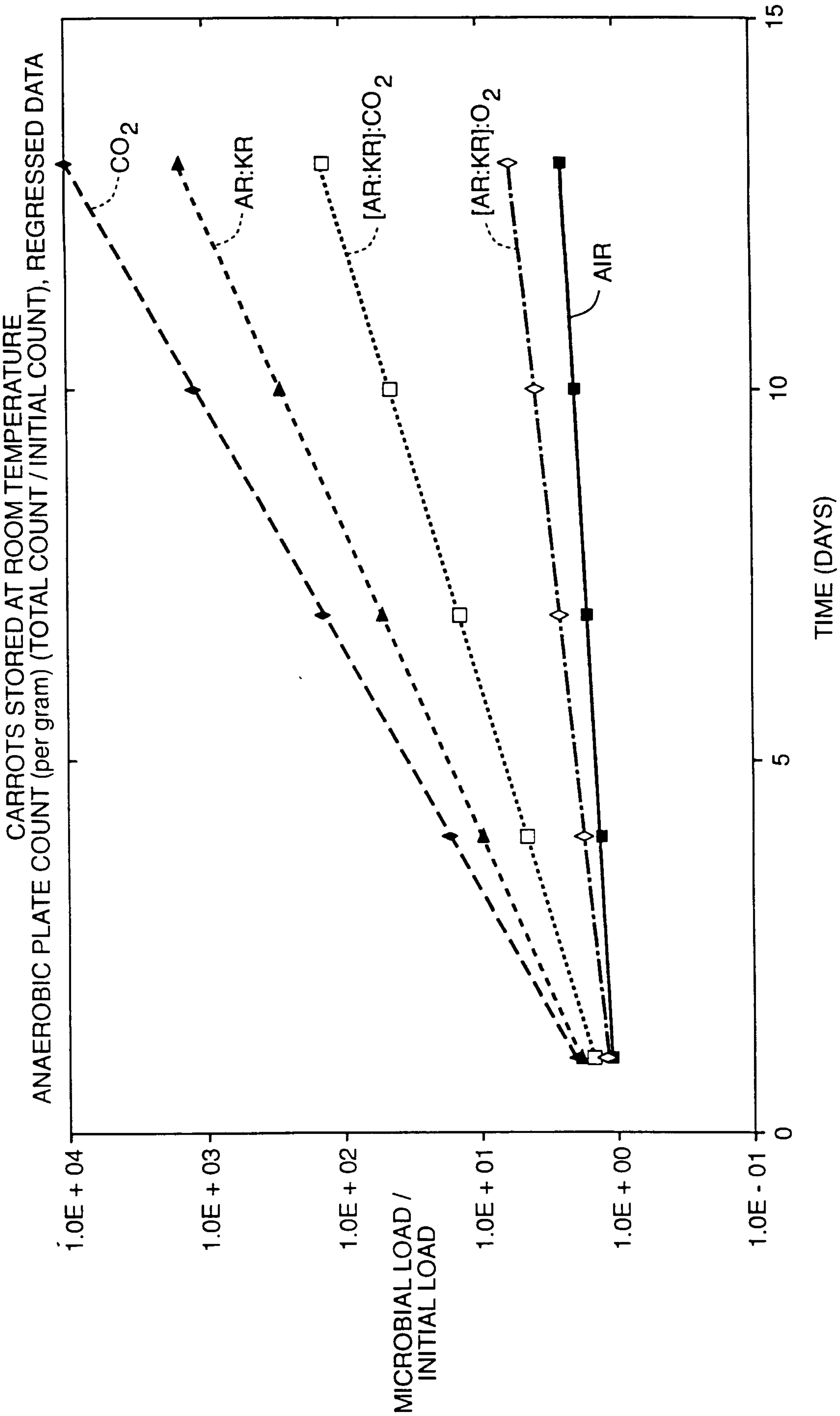
CARROTS STORED AT ROOM TEMPERATURE
ANAEROBIC PLATE COUNT (per gram) (TOTAL COUNT / INITIAL COUNT), REGRESSED DATA
MICROBIAL LOAD / INITIAL LOAD
1.0E + 04
1.0E + 03
1.0E + 02
1.0E + 01
1.0E + 00
1.0E - 01
0
5
10
15
TIME (DAYS)
$CO_2$
AR:KR
[AR:KR]:$CO_2$
[AR:KR]:$O_2$
AIR

FIG._8

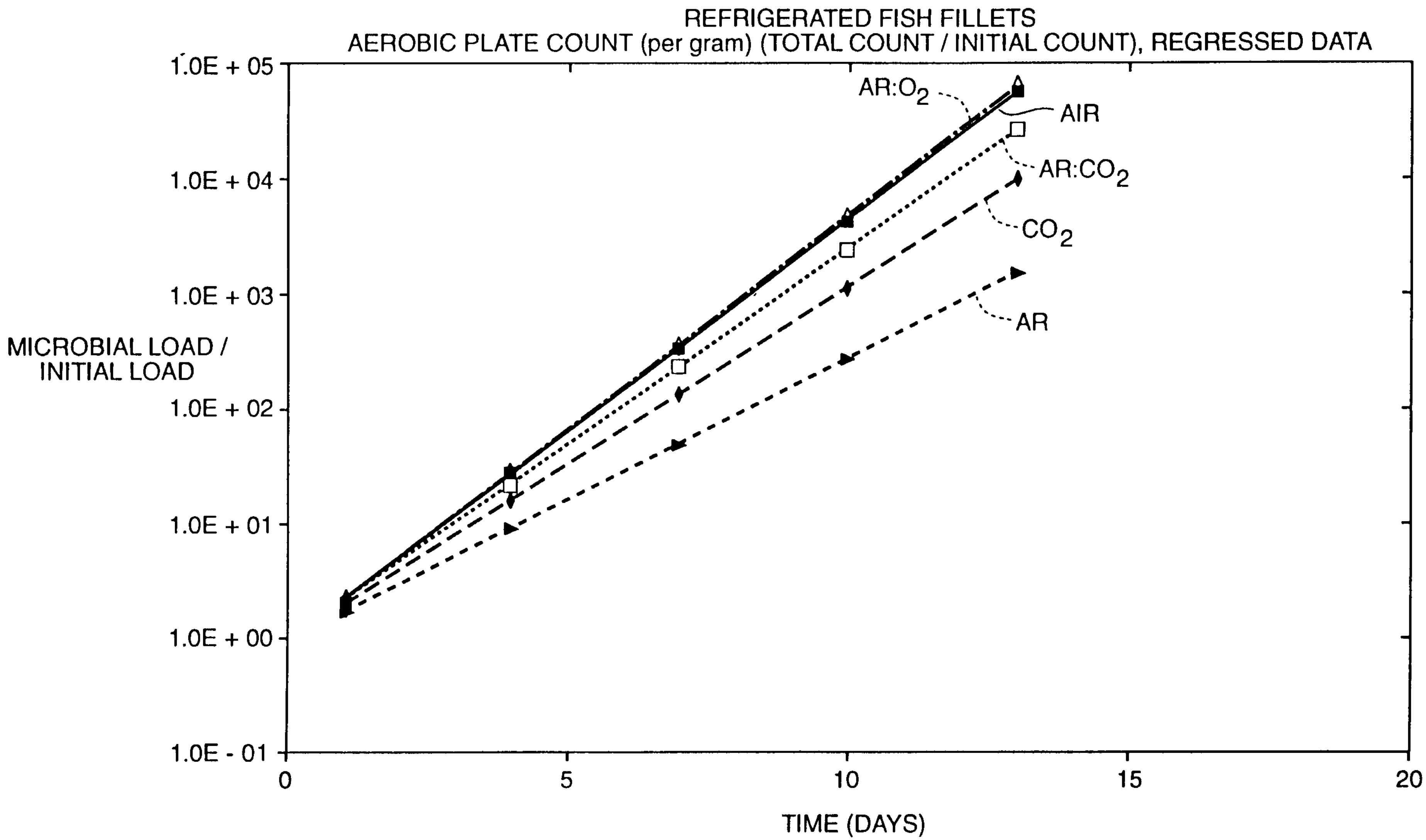
REFRIGERATED FISH FILLETS
AEROBIC PLATE COUNT (per gram) (TOTAL COUNT / INITIAL COUNT), REGRESSED DATA
MICROBIAL LOAD / INITIAL LOAD
1.0E + 05
1.0E + 04
1.0E + 03
1.0E + 02
1.0E + 01
1.0E + 00
1.0E - 01
0
5
10
15
20
TIME (DAYS)
AR:O2
AIR
AR:CO2
CO2
AR

FIG._9

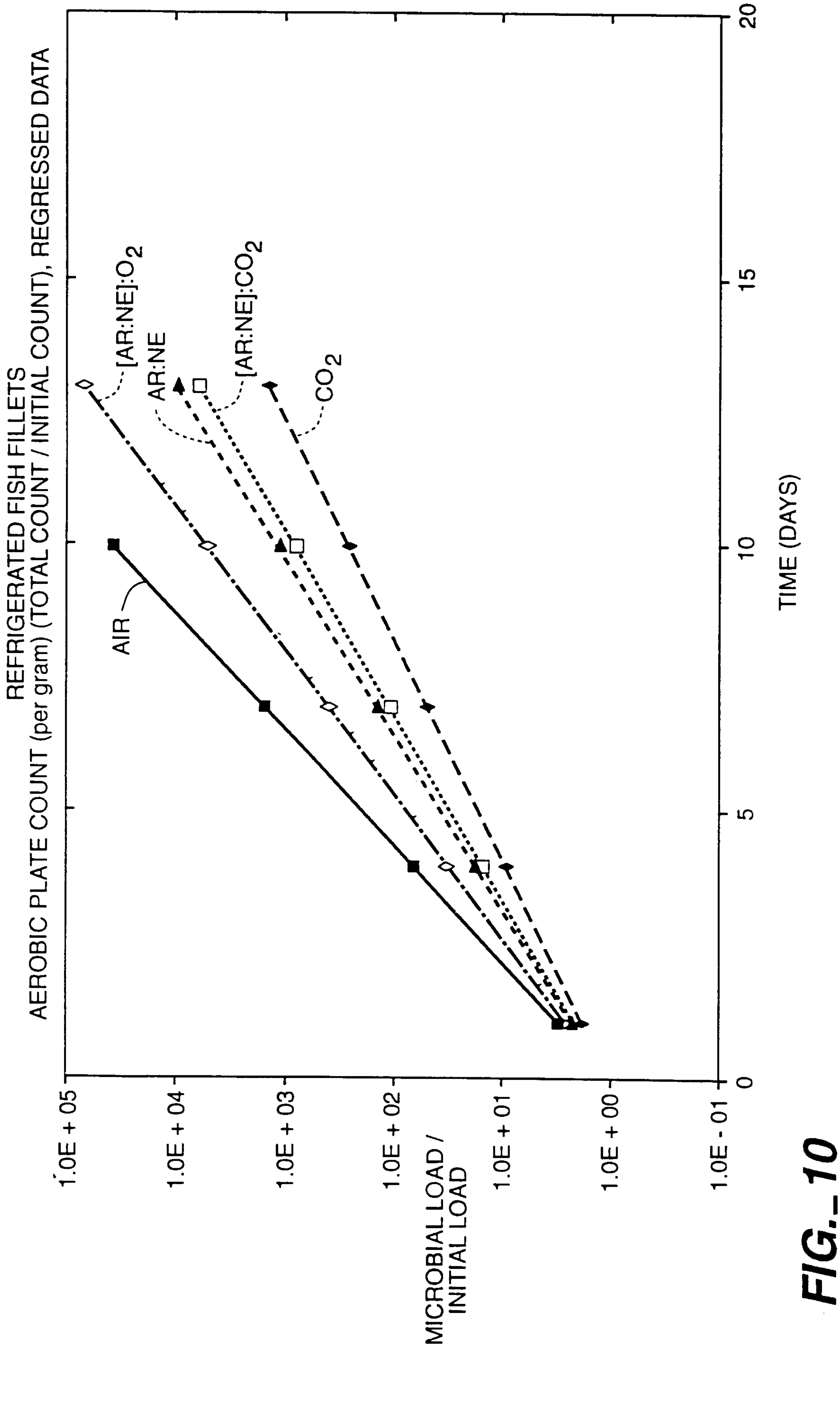
AEROBIC PLATE COUNT (per gram) (TOTAL COUNT / INITIAL COUNT), REGRESSED DATA
REFRIGERATED FISH FILLETS
MICROBIAL LOAD / INITIAL LOAD
1.0E + 05
1.0E + 04
1.0E + 03
1.0E + 02
1.0E + 01
1.0E + 00
1.0E - 01
0
5
10
15
20
TIME (DAYS)
AIR
[AR:NE]:O2
AR:NE
[AR:NE]:CO2
CO2

FIG._10

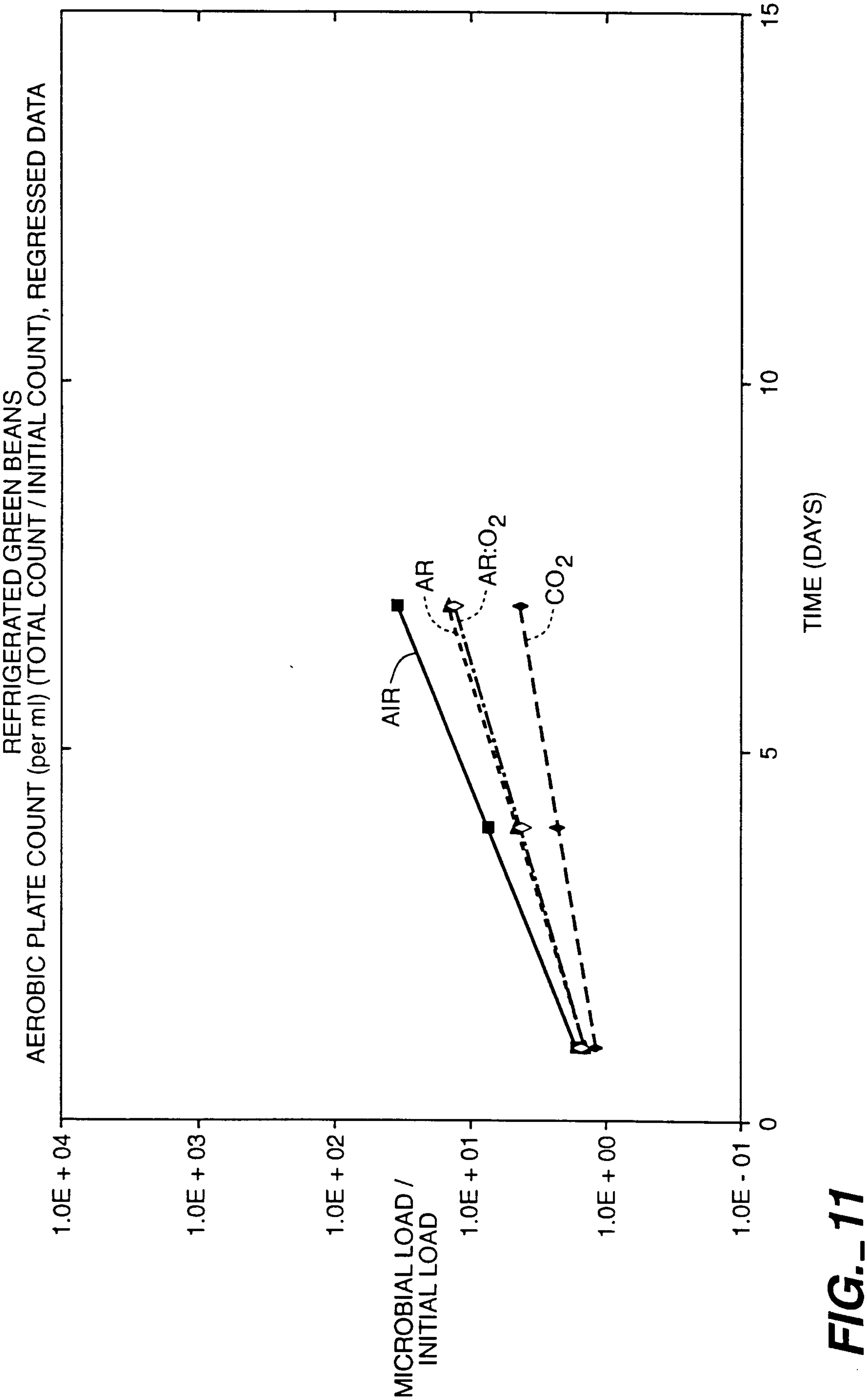
REFRIGERATED GREEN BEANS
AEROBIC PLATE COUNT (per ml) (TOTAL COUNT / INITIAL COUNT), REGRESSED DATA
MICROBIAL LOAD / INITIAL LOAD
1.0E + 04
1.0E + 03
1.0E + 02
1.0E + 01
1.0E + 00
1.0E - 01
0
5
10
15
TIME (DAYS)
AIR
AR
AR:O2
CO2

FIG._11

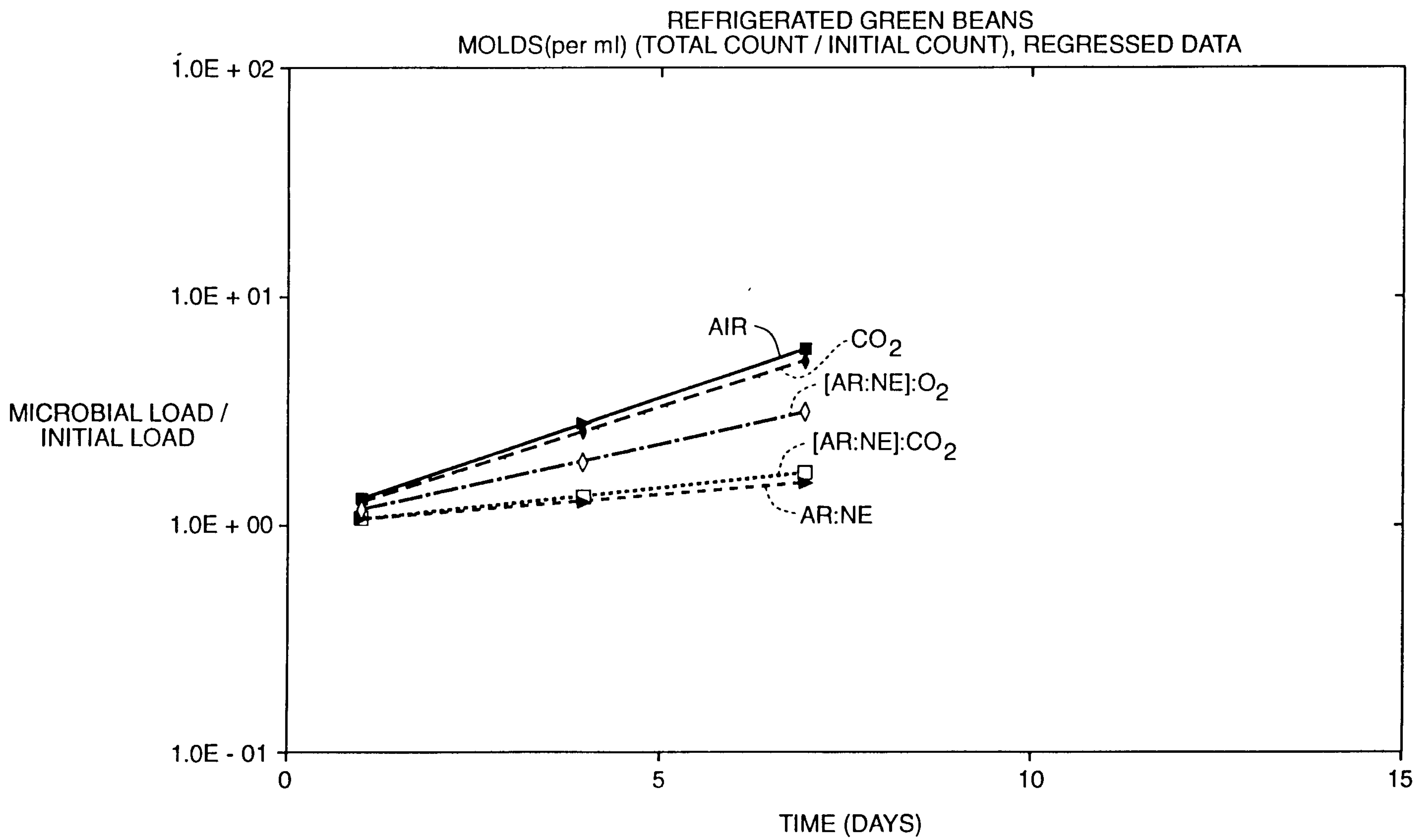
REFRIGERATED GREEN BEANS
MOLDS(per ml) (TOTAL COUNT / INITIAL COUNT), REGRESSED DATA
MICROBIAL LOAD / INITIAL LOAD
1.0E + 02
1.0E + 01
1.0E + 00
1.0E - 01
0
5
10
15
TIME (DAYS)
AIR
CO2
[AR:NE]:O2
[AR:NE]:CO2
AR:NE

FIG._12

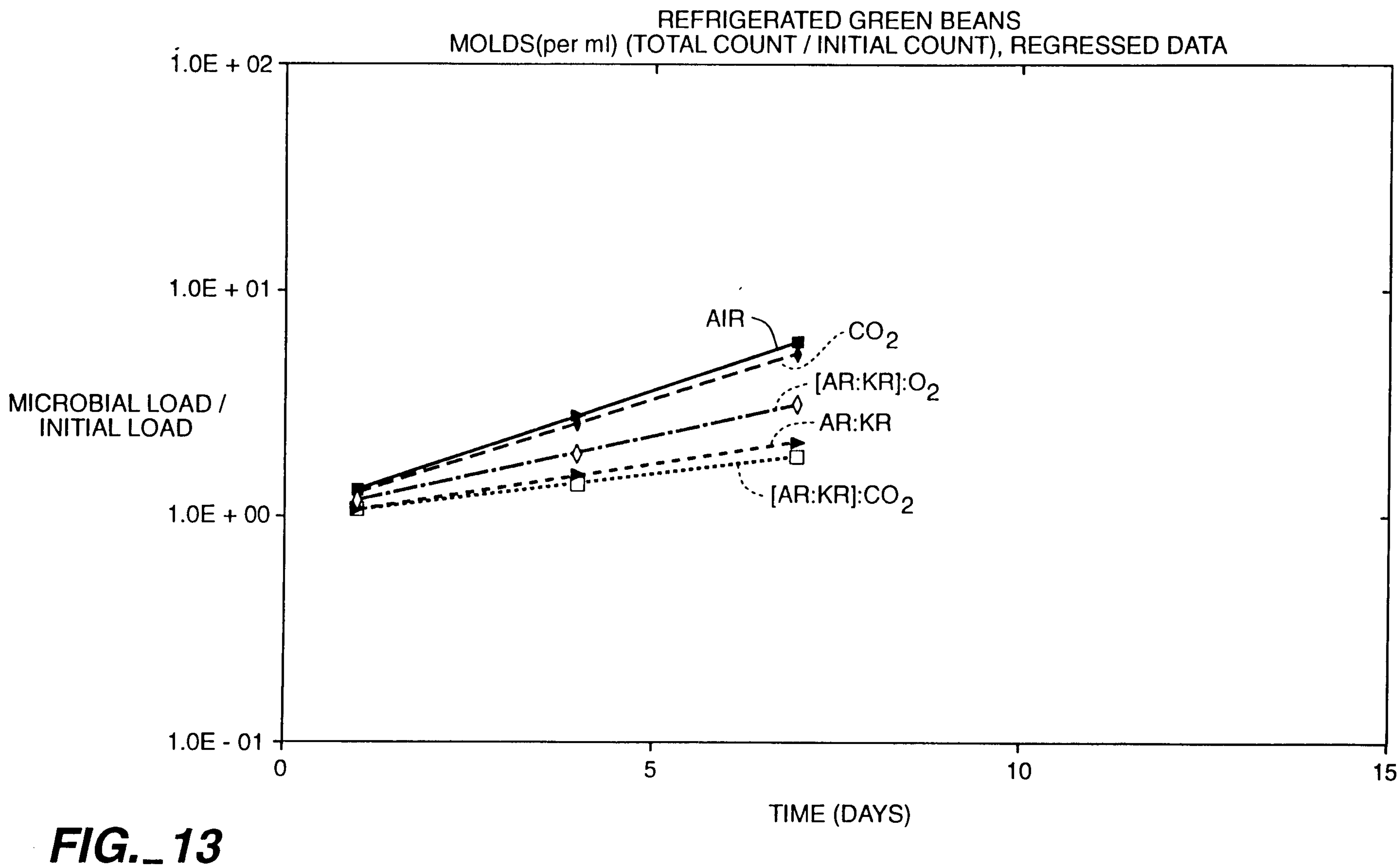
REFRIGERATED GREEN BEANS
MOLDS(per ml) (TOTAL COUNT / INITIAL COUNT), REGRESSED DATA
MICROBIAL LOAD / INITIAL LOAD
1.0E + 02
1.0E + 01
1.0E + 00
1.0E - 01
AIR
$CO_2$
$[AR:KR]:O_2$
AR:KR
$[AR:KR]:CO_2$
0
5
10
15
TIME (DAYS)

*FIG._13*

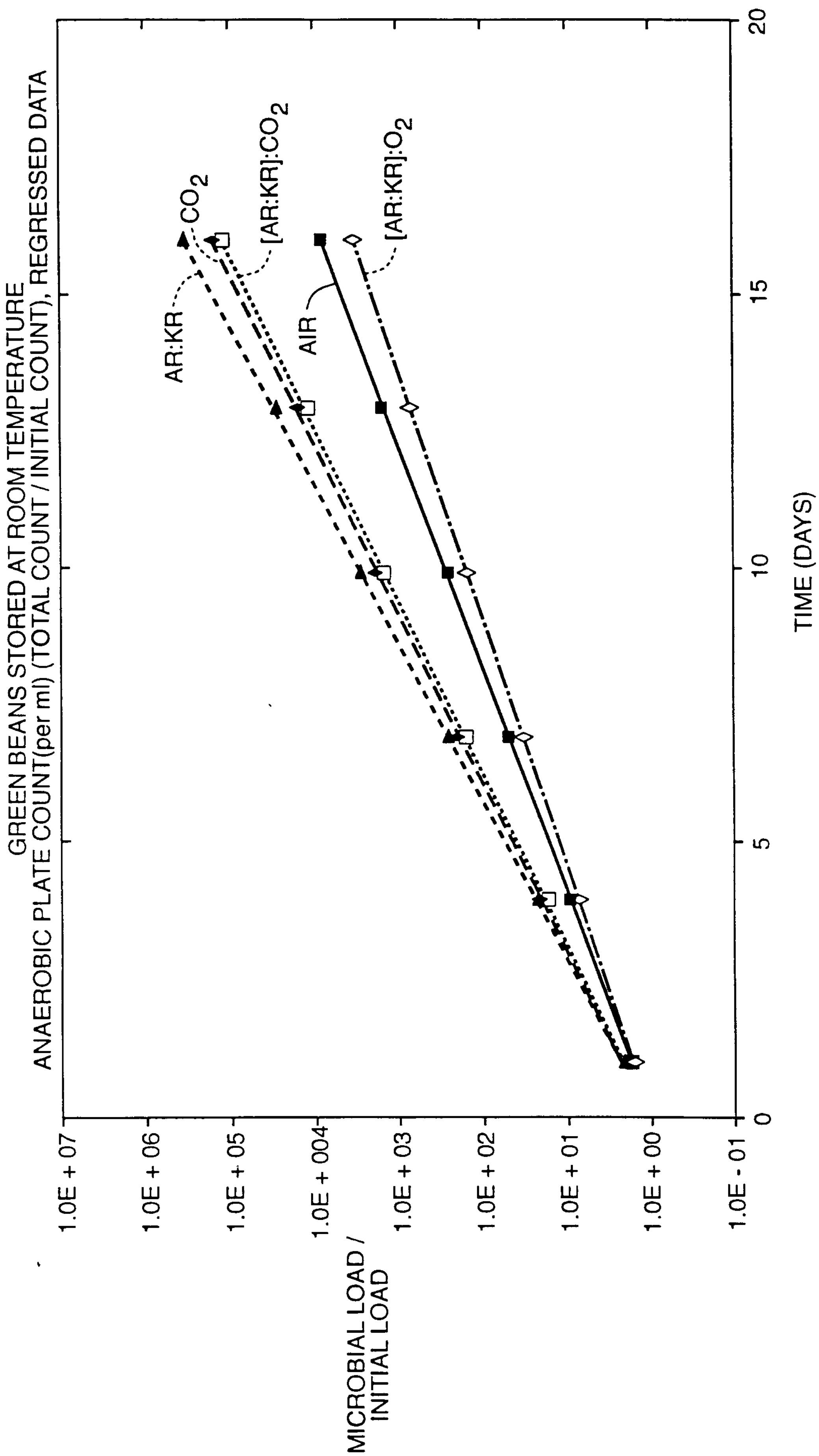
GREEN BEANS STORED AT ROOM TEMPERATURE
ANAEROBIC PLATE COUNT(per ml) (TOTAL COUNT / INITIAL COUNT), REGRESSED DATA
MICROBIAL LOAD / INITIAL LOAD
1.0E + 07
1.0E + 06
1.0E + 05
1.0E + 004
1.0E + 03
1.0E + 02
1.0E + 01
1.0E + 00
1.0E - 01
0
5
10
15
20
TIME (DAYS)
AR:KR
$CO_2$
[AR:KR]:$CO_2$
AIR
[AR:KR]:$O_2$

*FIG._14*

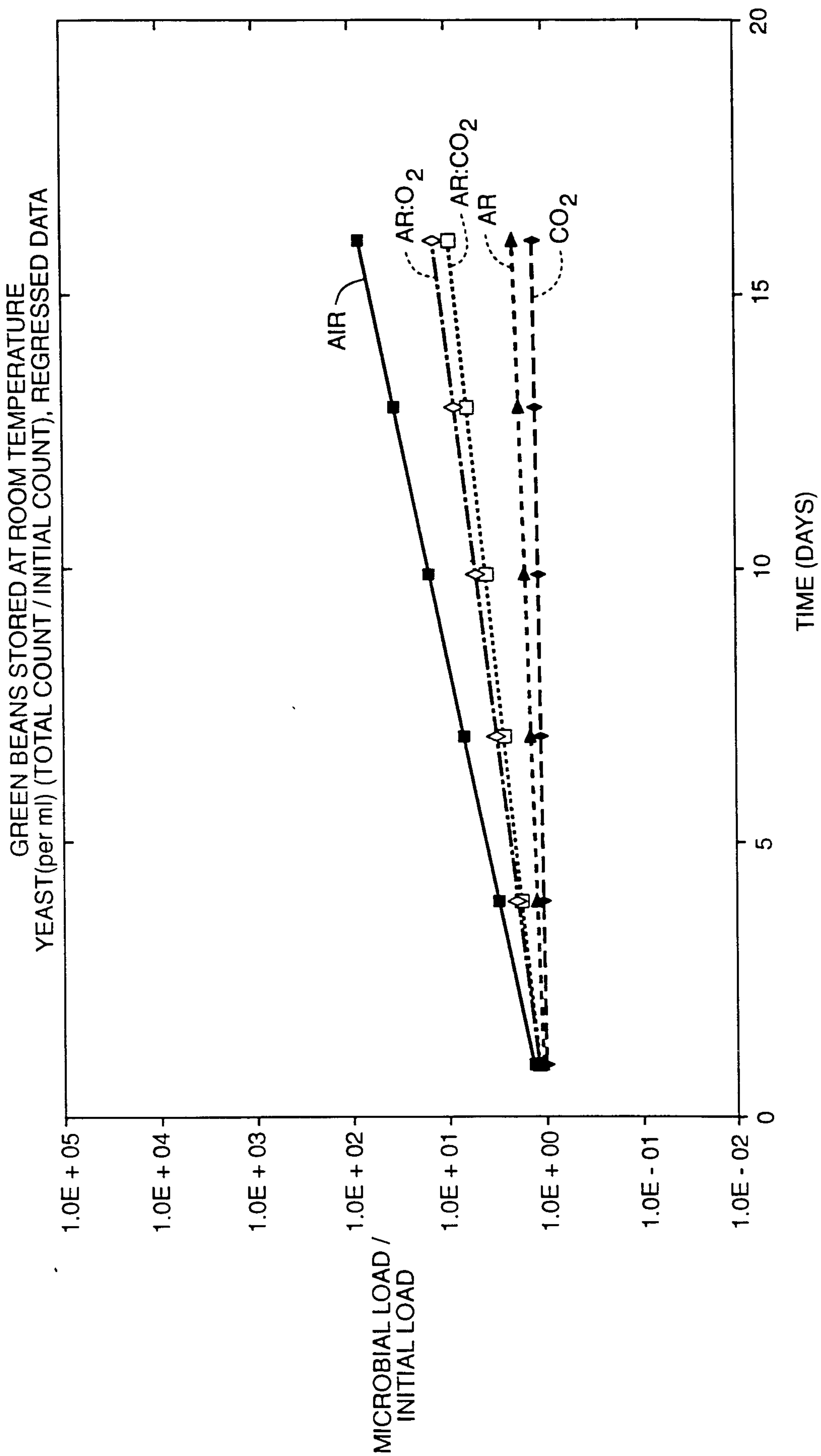
GREEN BEANS STORED AT ROOM TEMPERATURE
YEAST(per ml) (TOTAL COUNT / INITIAL COUNT), REGRESSED DATA
MICROBIAL LOAD / INITIAL LOAD
1.0E + 05
1.0E + 04
1.0E + 03
1.0E + 02
1.0E + 01
1.0E + 00
1.0E - 01
1.0E - 02
0
5
10
15
20
TIME (DAYS)
AIR
AR:O2
AR:CO2
AR
CO2

*FIG._15*

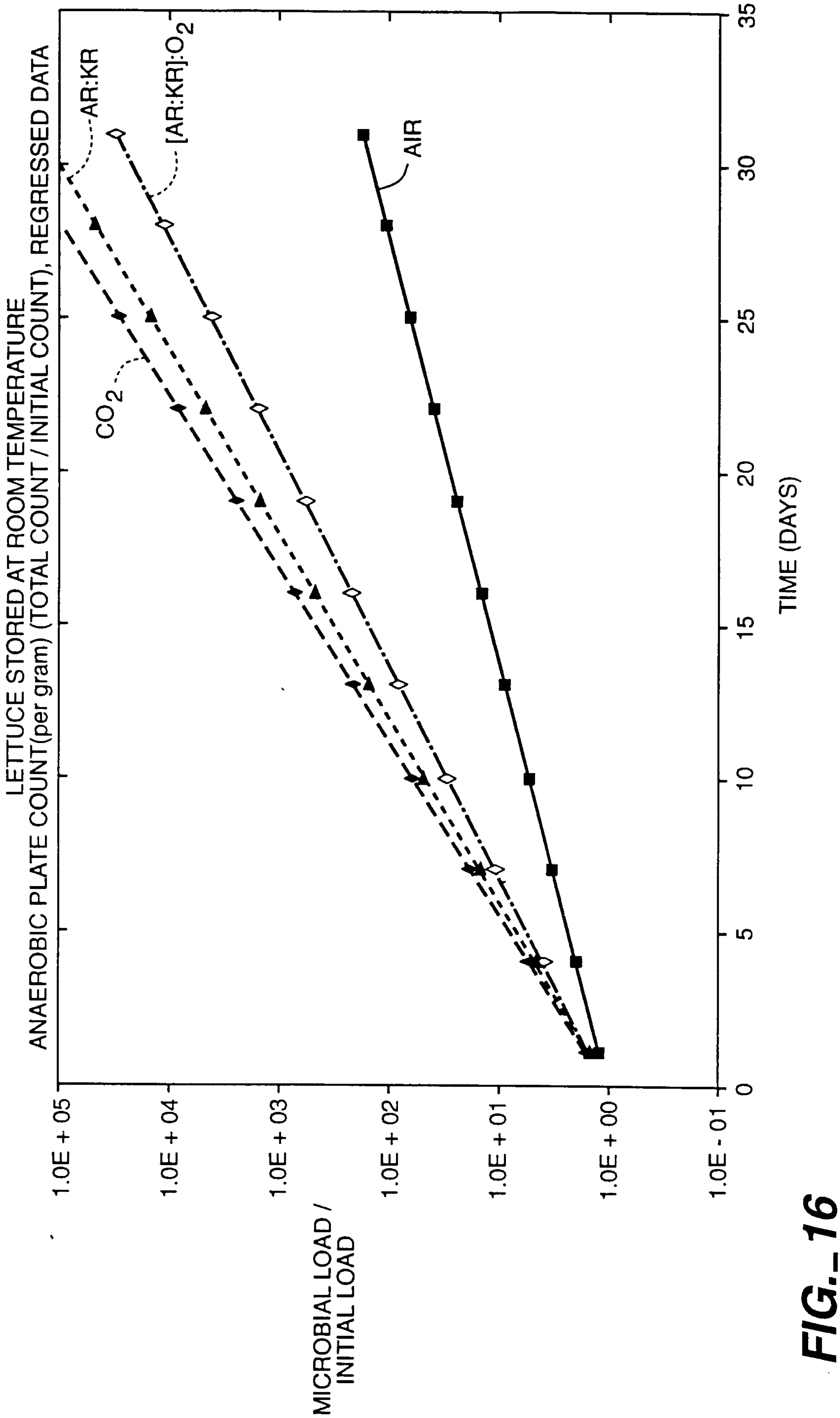
LETTUCE STORED AT ROOM TEMPERATURE
ANAEROBIC PLATE COUNT(per gram) (TOTAL COUNT / INITIAL COUNT), REGRESSED DATA
AR:KR
[AR:KR]:O2
CO2
AIR
1.0E + 05
1.0E + 04
1.0E + 03
1.0E + 02
1.0E + 01
1.0E + 00
1.0E - 01
MICROBIAL LOAD / INITIAL LOAD
0
5
10
15
20
25
30
35
TIME (DAYS)

*FIG._16*

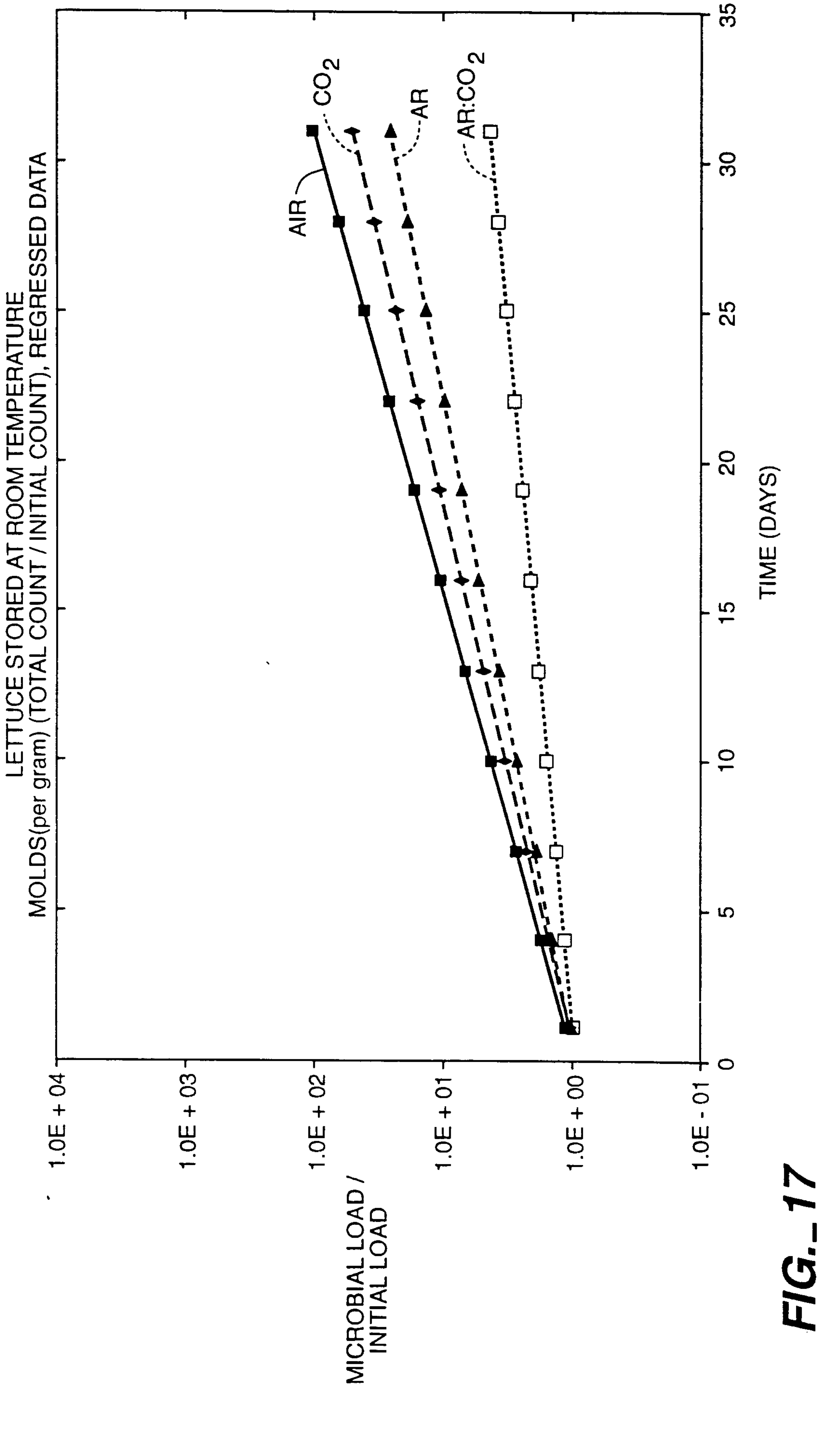
LETTUCE STORED AT ROOM TEMPERATURE
MOLDS(per gram) (TOTAL COUNT / INITIAL COUNT), REGRESSED DATA
MICROBIAL LOAD / INITIAL LOAD
1.0E + 04
1.0E + 03
1.0E + 02
1.0E + 01
1.0E + 00
1.0E - 01
0
5
10
15
20
25
30
35
TIME (DAYS)
AIR
CO2
AR
AR:CO2

*FIG._17*

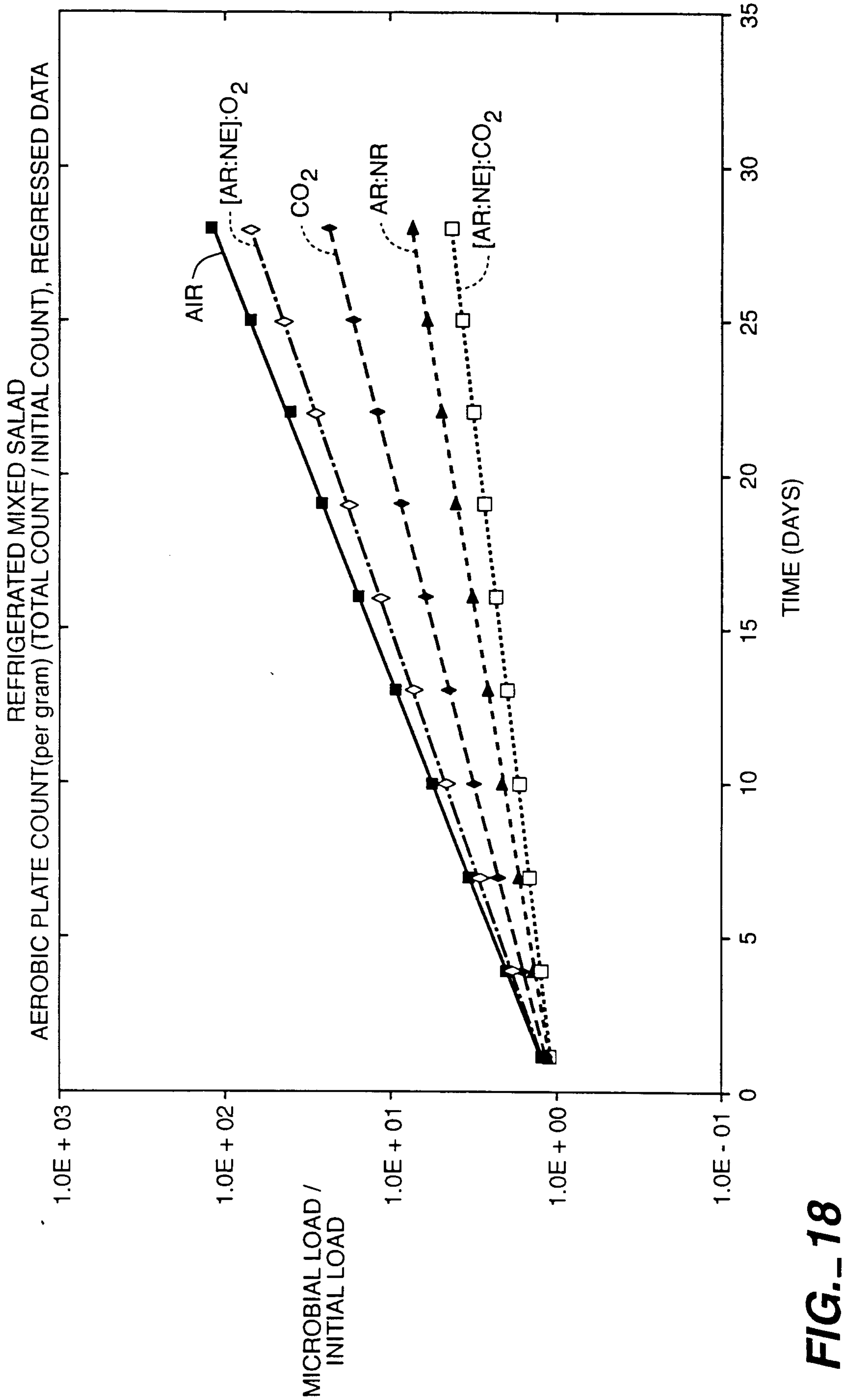
REFRIGERATED MIXED SALAD
AEROBIC PLATE COUNT(per gram) (TOTAL COUNT / INITIAL COUNT), REGRESSED DATA
MICROBIAL LOAD / INITIAL LOAD
1.0E + 03
1.0E + 02
1.0E + 01
1.0E + 00
1.0E - 01
0
5
10
15
20
25
30
35
TIME (DAYS)
AIR
[AR:NE]:O2
CO2
AR:NR
[AR:NE]:CO2

FIG._18

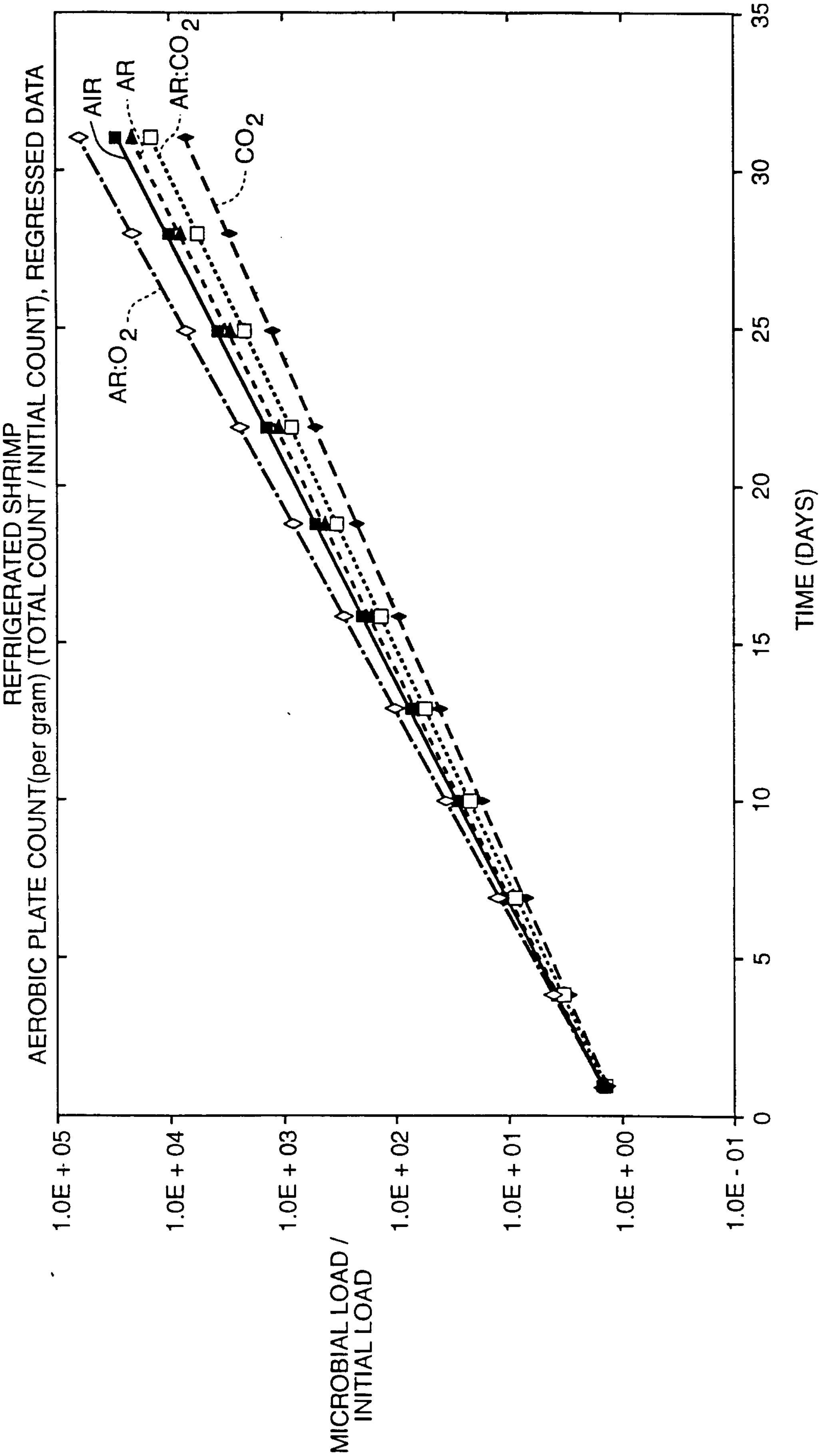
REFRIGERATED SHRIMP
AEROBIC PLATE COUNT(per gram) (TOTAL COUNT / INITIAL COUNT), REGRESSED DATA
MICROBIAL LOAD / INITIAL LOAD
1.0E + 05
1.0E + 04
1.0E + 03
1.0E + 02
1.0E + 01
1.0E + 00
1.0E - 01
0
5
10
15
20
25
30
35
TIME (DAYS)
AIR
AR
$AR:CO_2$
$CO_2$
$AR:O_2$

FIG._19

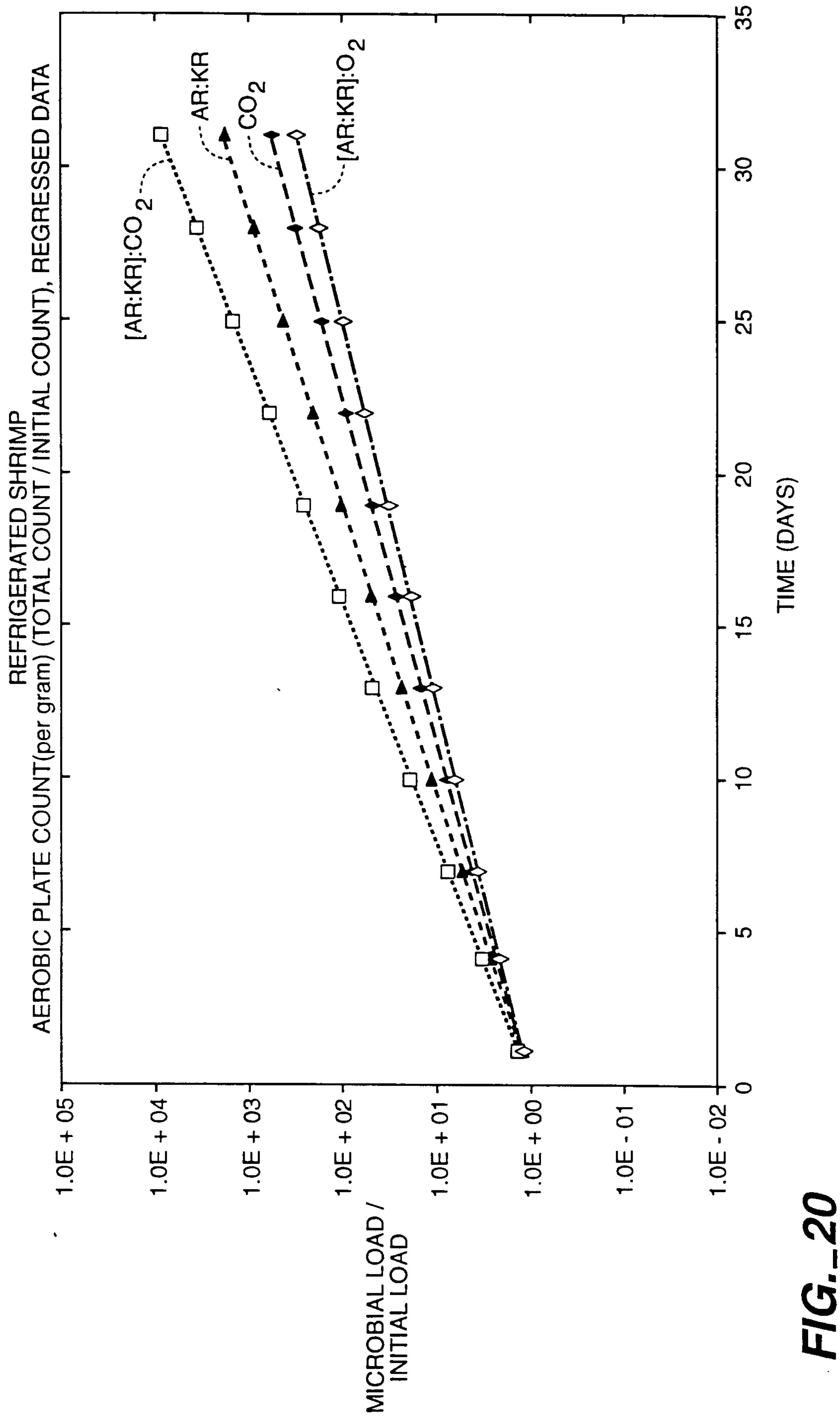
REFRIGERATED SHRIMP
AEROBIC PLATE COUNT(per gram) (TOTAL COUNT / INITIAL COUNT), REGRESSED DATA
MICROBIAL LOAD / INITIAL LOAD
1.0E + 05
1.0E + 04
1.0E + 03
1.0E + 02
1.0E + 01
1.0E + 00
1.0E - 01
1.0E - 02
0
5
10
15
20
25
30
35
TIME (DAYS)
[AR:KR]:CO2
AR:KR
CO2
[AR:KR]:O2

*FIG._20*

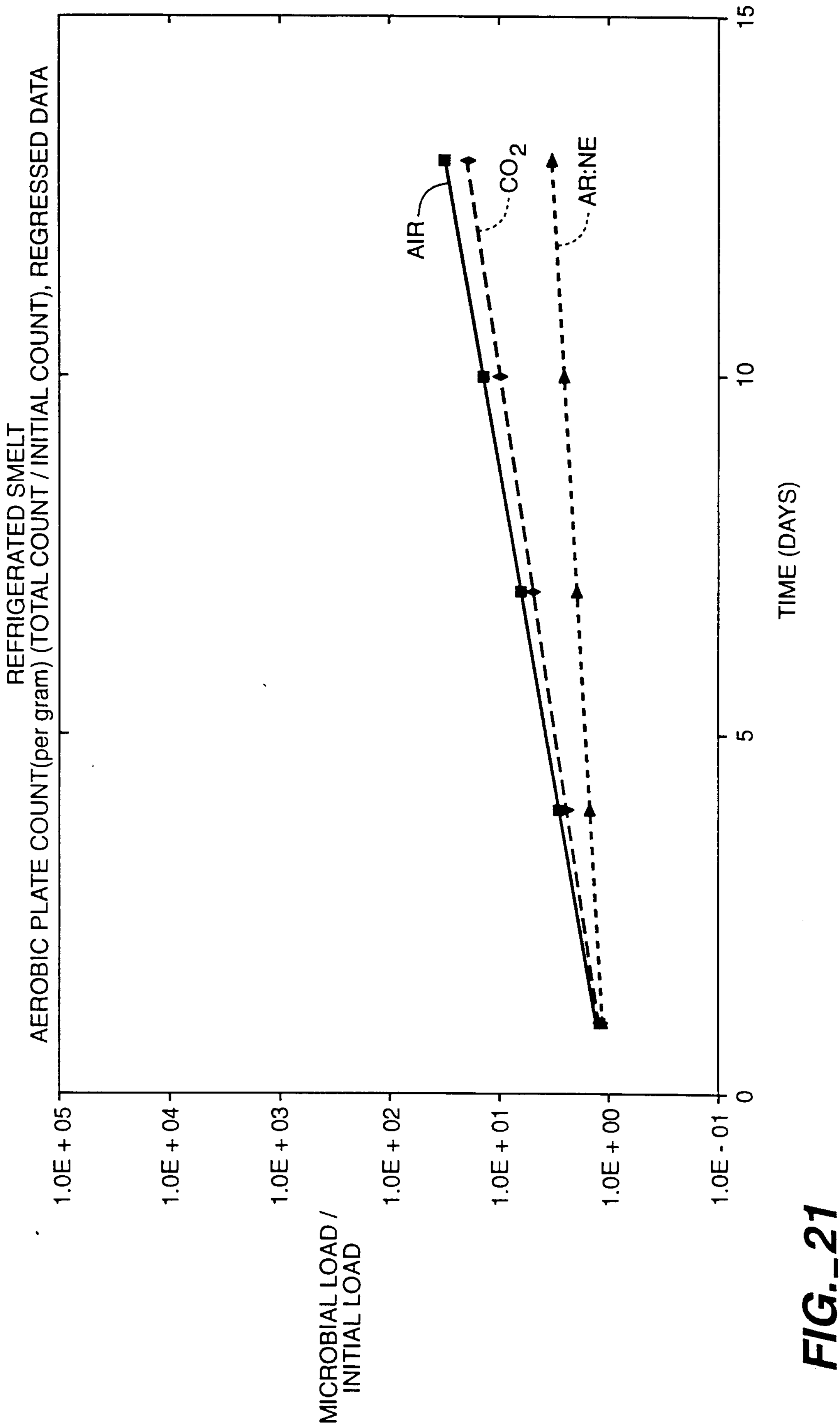
REFRIGERATED SMELT
AEROBIC PLATE COUNT(per gram) (TOTAL COUNT / INITIAL COUNT), REGRESSED DATA
MICROBIAL LOAD / INITIAL LOAD
1.0E + 05
1.0E + 04
1.0E + 03
1.0E + 02
1.0E + 01
1.0E + 00
1.0E - 01
0
5
10
15
TIME (DAYS)
AIR
$CO_2$
AR:NE

*FIG._21*

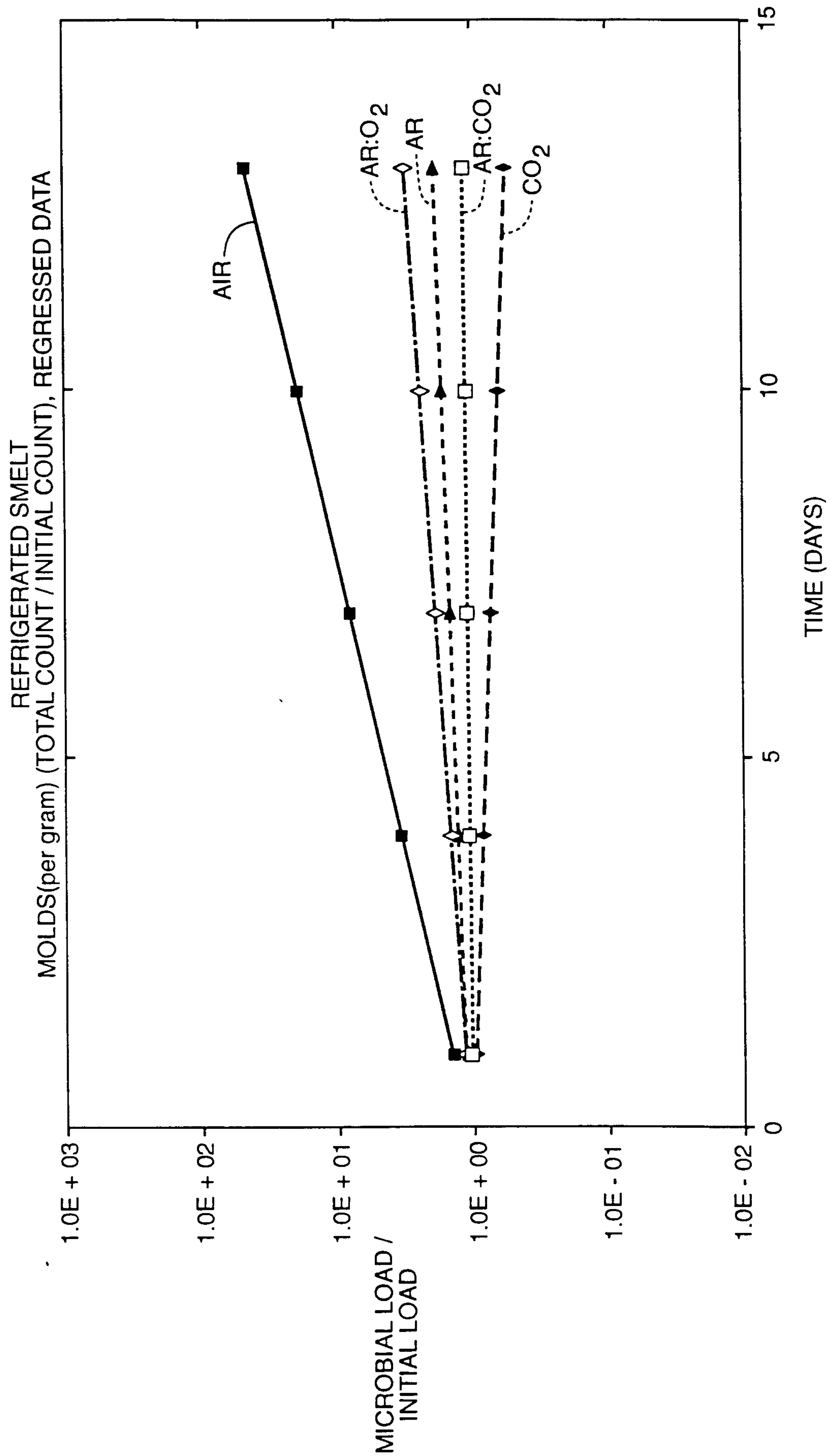
REFRIGERATED SMELT
MOLDS(per gram) (TOTAL COUNT / INITIAL COUNT), REGRESSED DATA
MICROBIAL LOAD / INITIAL LOAD
1.0E + 03
1.0E + 02
1.0E + 01
1.0E + 00
1.0E - 01
1.0E - 02
TIME (DAYS)
0
5
10
15
AIR
AR:O2
AR
AR:CO2
CO2

FIG._22

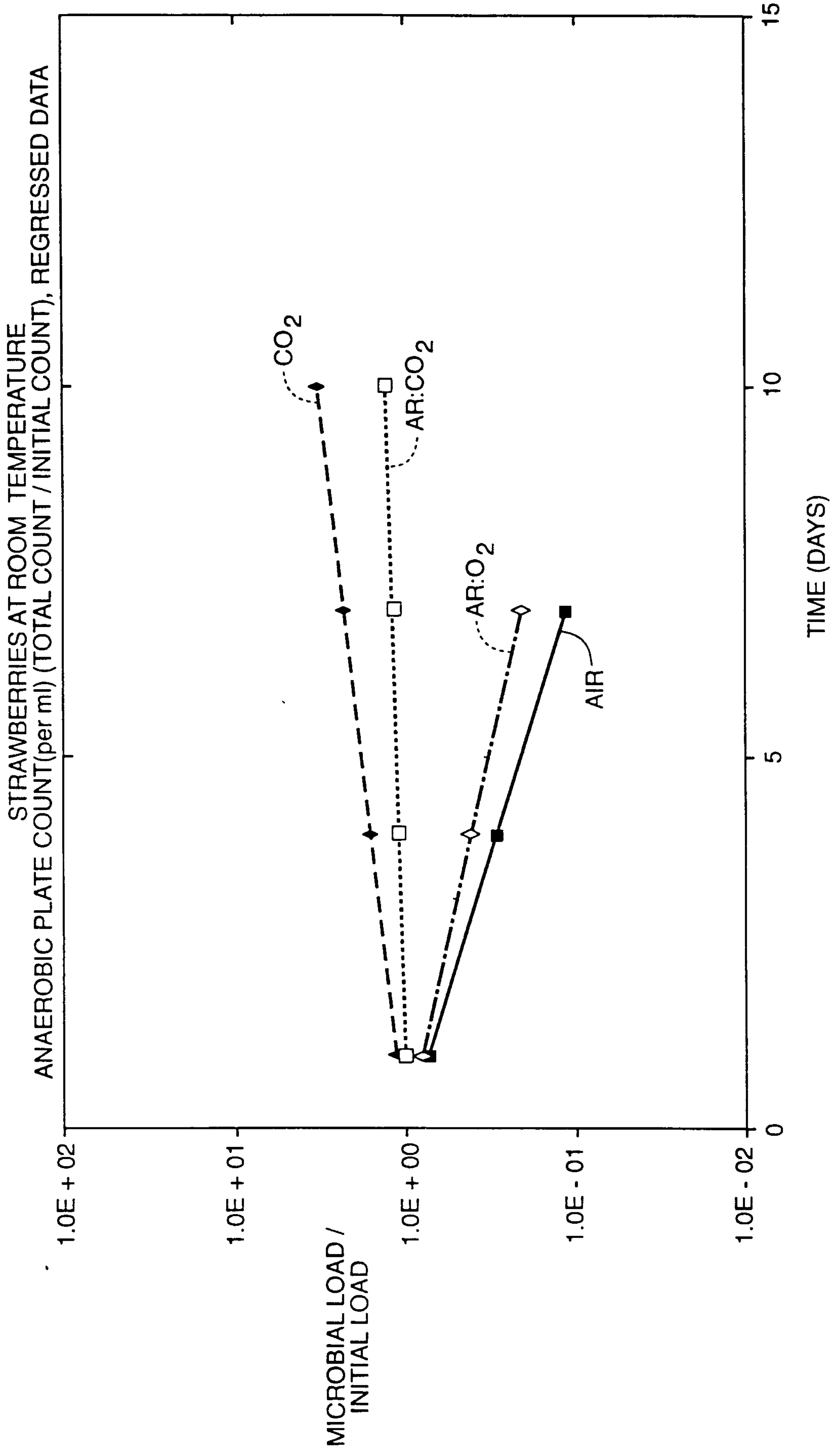
STRAWBERRIES AT ROOM TEMPERATURE
ANAEROBIC PLATE COUNT(per ml) (TOTAL COUNT / INITIAL COUNT), REGRESSED DATA
MICROBIAL LOAD / INITIAL LOAD
1.0E + 02
1.0E + 01
1.0E + 00
1.0E - 01
1.0E - 02
0
5
10
15
TIME (DAYS)
CO2
AR:CO2
AR:O2
AIR

*FIG._23*

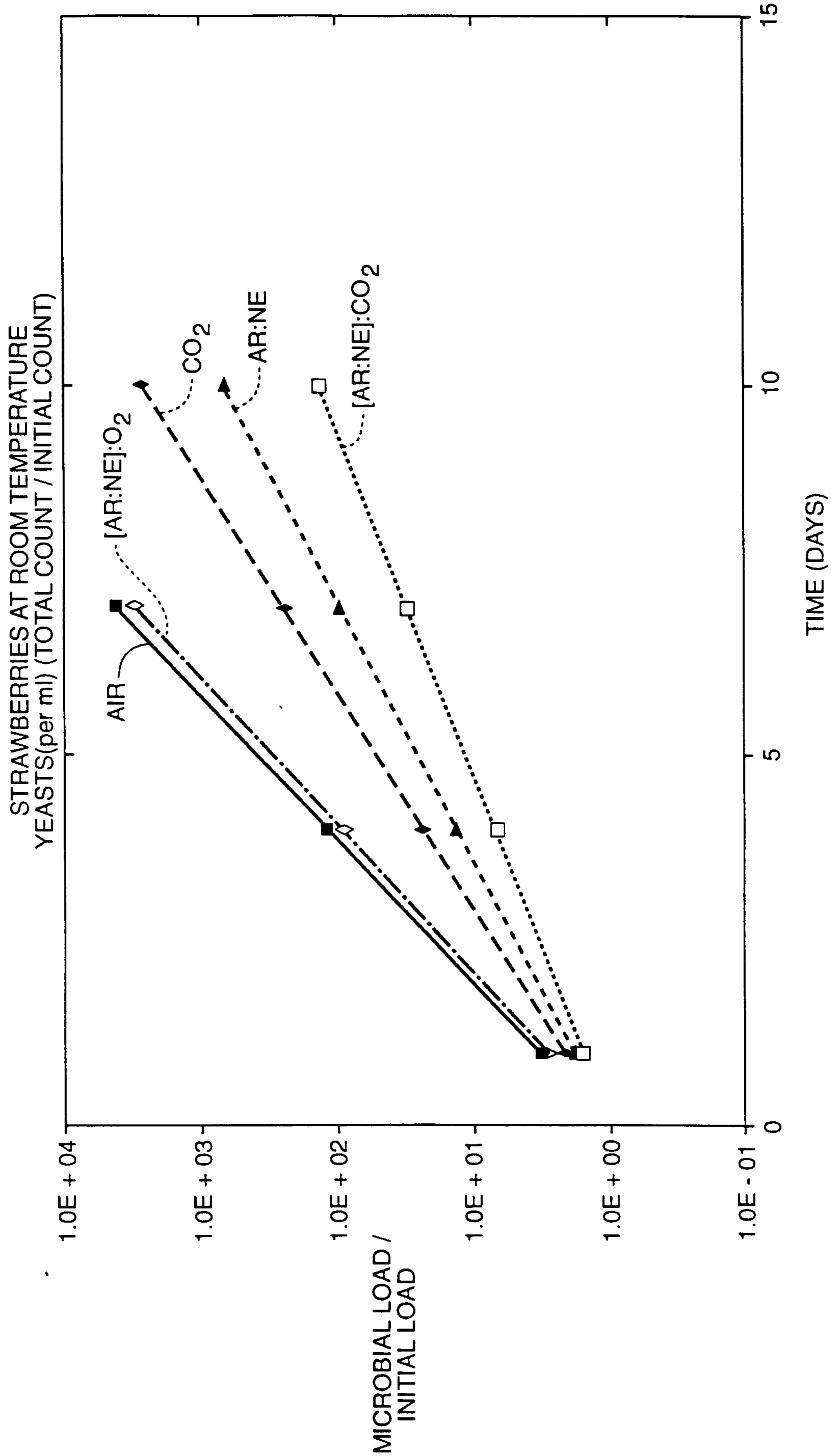
STRAWBERRIES AT ROOM TEMPERATURE
YEASTS(per ml) (TOTAL COUNT / INITIAL COUNT)
MICROBIAL LOAD /
INITIAL LOAD
1.0E + 04
1.0E + 03
1.0E + 02
1.0E + 01
1.0E + 00
1.0E - 01
0
5
10
15
TIME (DAYS)
AIR
[AR:NE]:O2
CO2
AR:NE
[AR:NE]:CO2

FIG._24

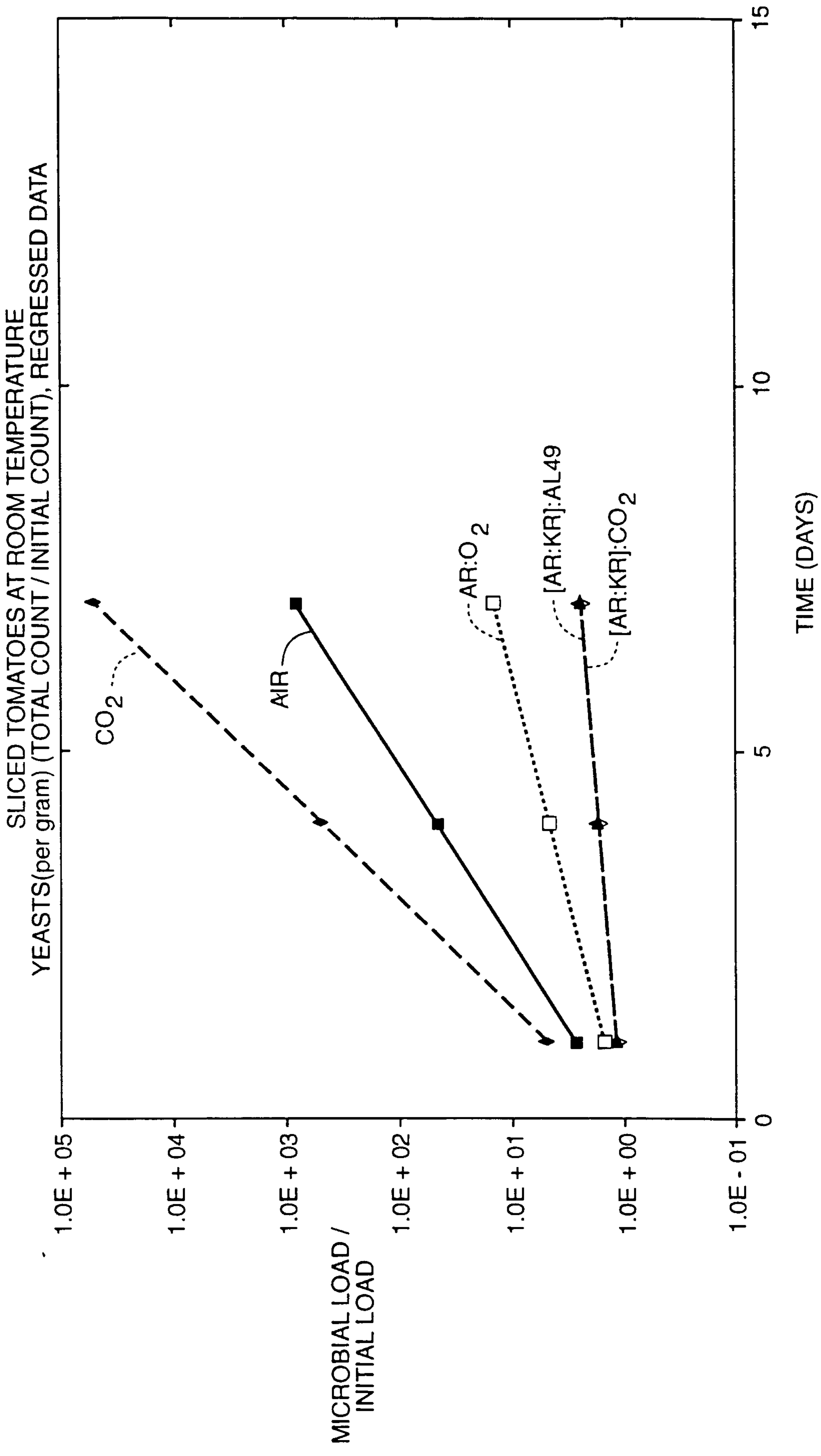
SLICED TOMATOES AT ROOM TEMPERATURE
YEASTS(per gram) (TOTAL COUNT / INITIAL COUNT), REGRESSED DATA
MICROBIAL LOAD / INITIAL LOAD
1.0E + 05
1.0E + 04
1.0E + 03
1.0E + 02
1.0E + 01
1.0E + 00
1.0E - 01
0
5
10
15
TIME (DAYS)
$CO_2$
AIR
AR:$O_2$
[AR:KR]:AL49
[AR:KR]:$CO_2$

*FIG._25*

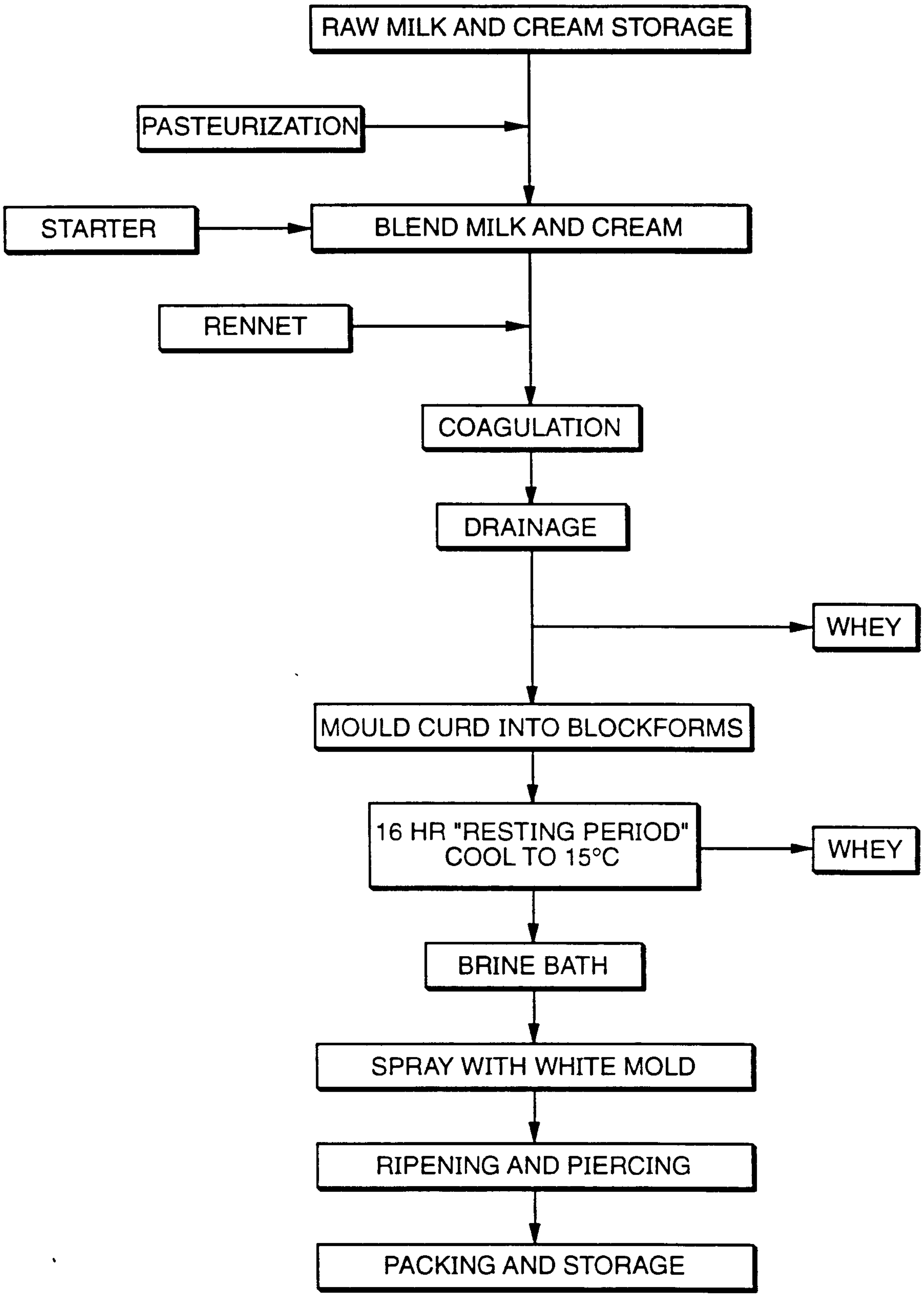
RAW MILK AND CREAM STORAGE
PASTEURIZATION
STARTER
BLEND MILK AND CREAM
RENNET
COAGULATION
DRAINAGE
WHEY
MOULD CURD INTO BLOCKFORMS
16 HR "RESTING PERIOD"
COOL TO 15°C
WHEY
BRINE BATH
SPRAY WITH WHITE MOLD
RIPENING AND PIERCING
PACKING AND STORAGE

FIG._26

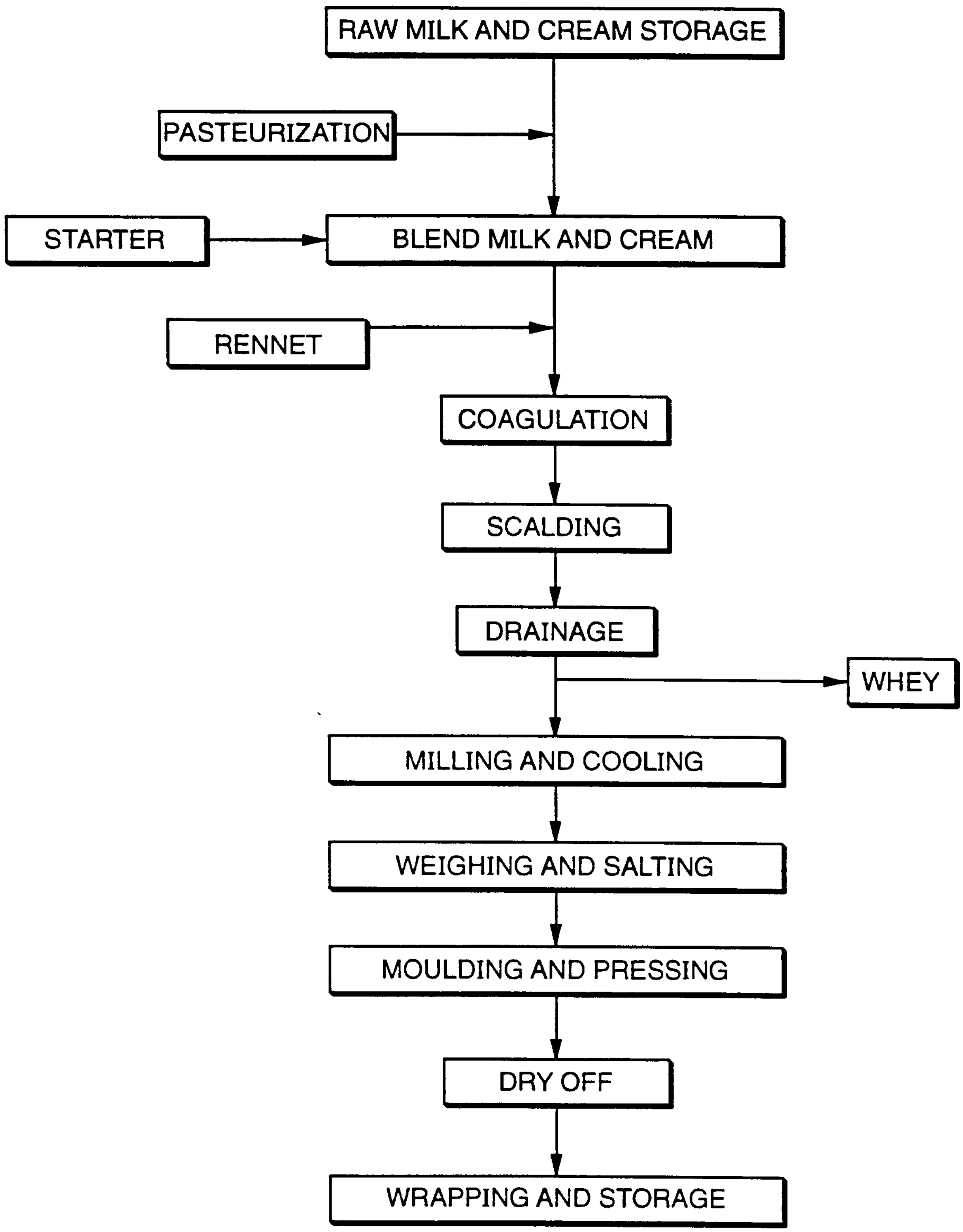
RAW MILK AND CREAM STORAGE
PASTEURIZATION
STARTER
BLEND MILK AND CREAM
RENNET
COAGULATION
SCALDING
DRAINAGE
WHEY
MILLING AND COOLING
WEIGHING AND SALTING
MOULDING AND PRESSING
DRY OFF
WRAPPING AND STORAGE

FIG._27

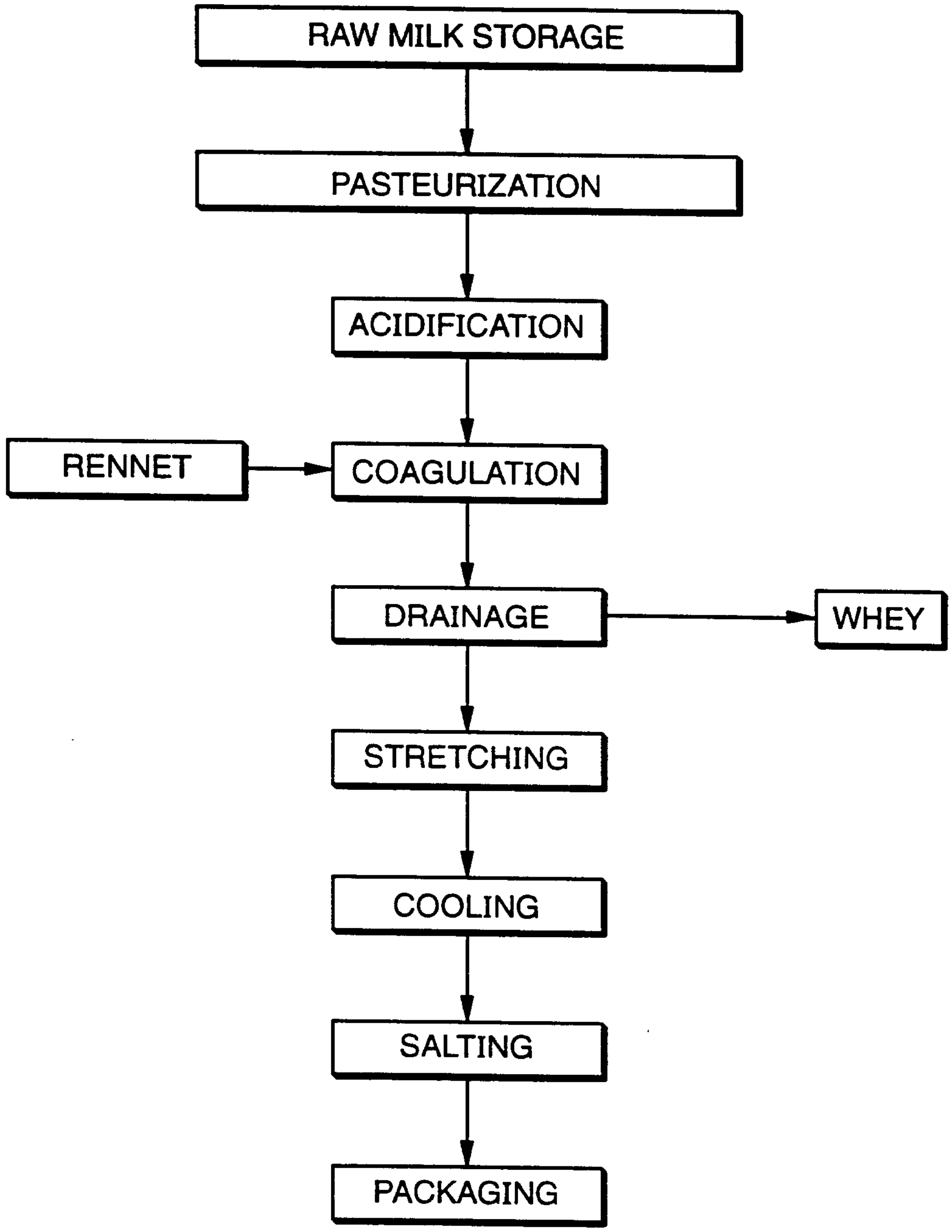
RAW MILK STORAGE
PASTEURIZATION
ACIDIFICATION
RENNET
COAGULATION
DRAINAGE
WHEY
STRETCHING
COOLING
SALTING
PACKAGING

FIG._28

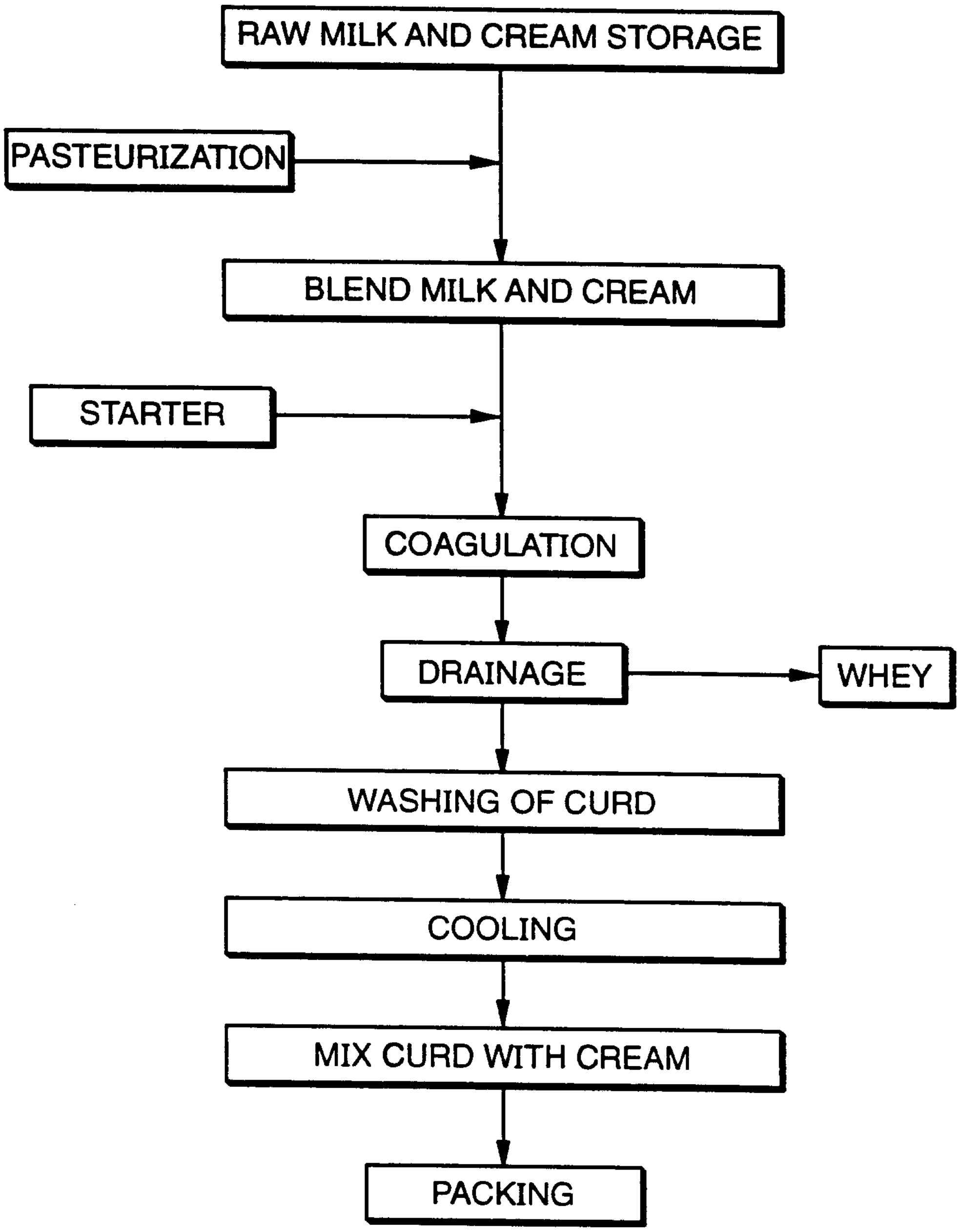
RAW MILK AND CREAM STORAGE
PASTEURIZATION
BLEND MILK AND CREAM
STARTER
COAGULATION
DRAINAGE
WHEY
WASHING OF CURD
COOLING
MIX CURD WITH CREAM
PACKING

FIG._29

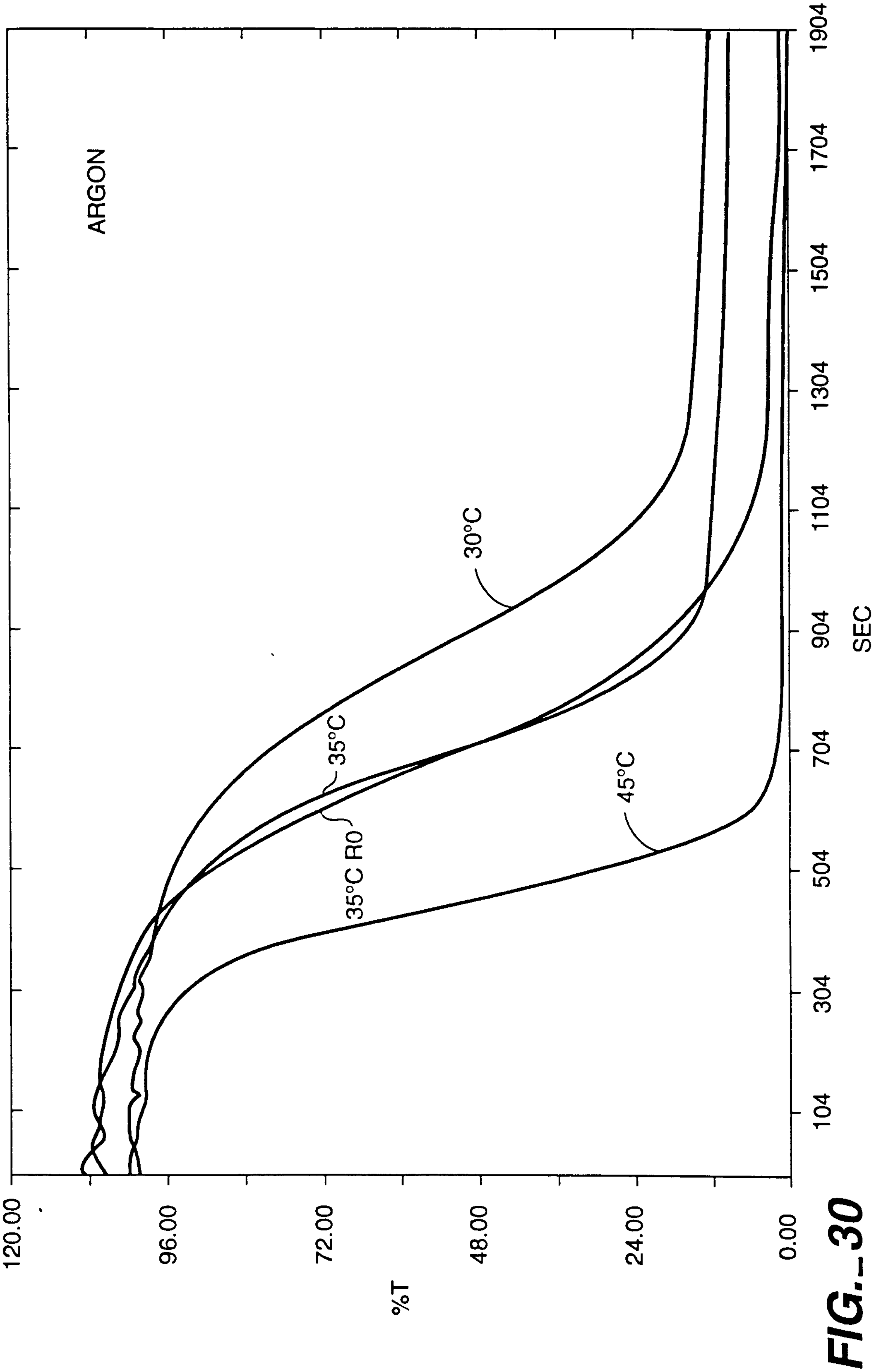
ARGON
%T
120.00
96.00
72.00
48.00
24.00
0.00
104
304
504
704
904
1104
1304
1504
1704
1904
SEC
30°C
35°C
35°C R0
45°C

FIG._30

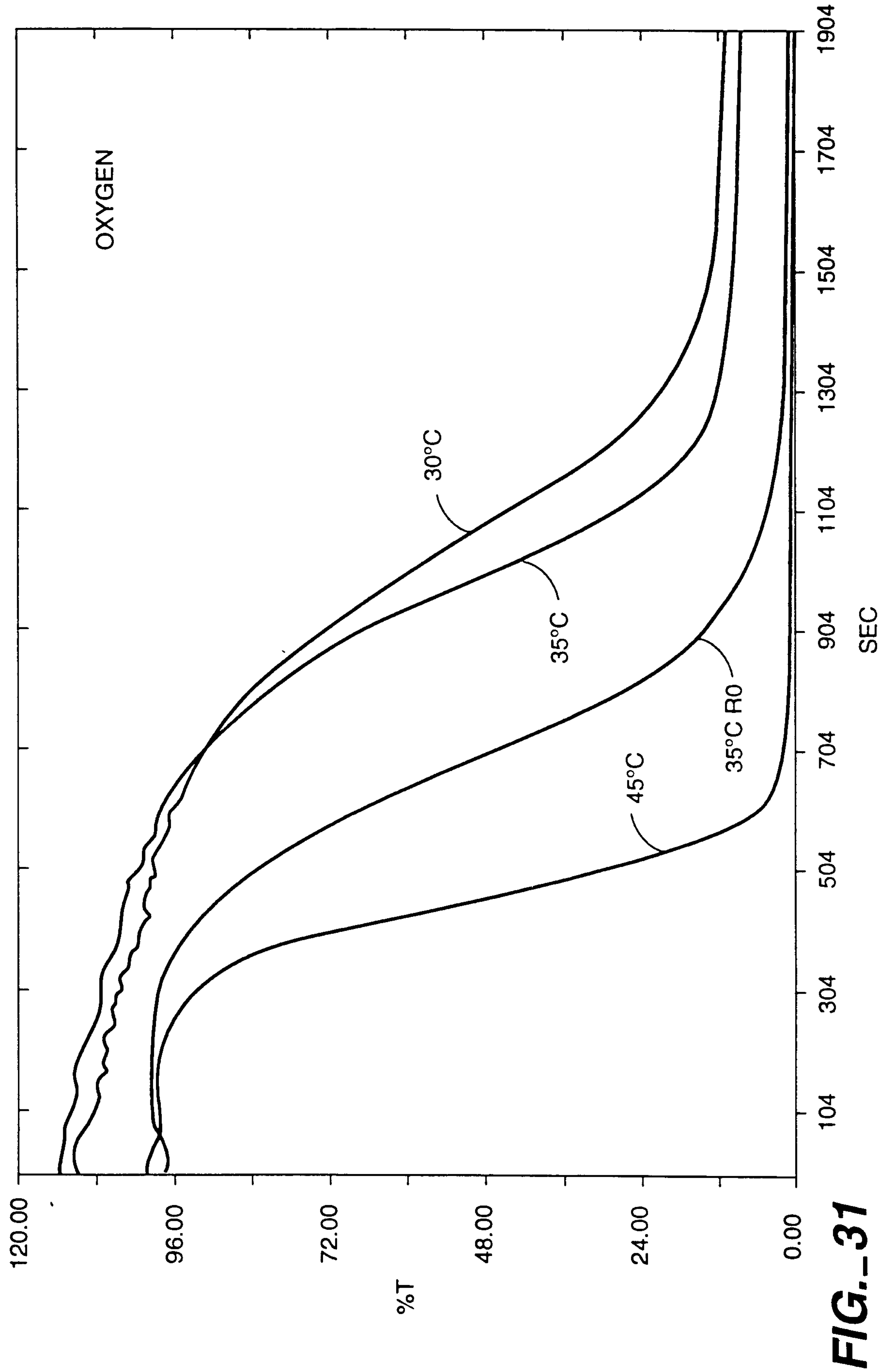
OXYGEN
30°C
35°C
35°C R0
45°C
120.00
96.00
72.00
48.00
24.00
0.00
%T
104
304
504
704
904
1104
1304
1504
1704
1904
SEC

FIG._31

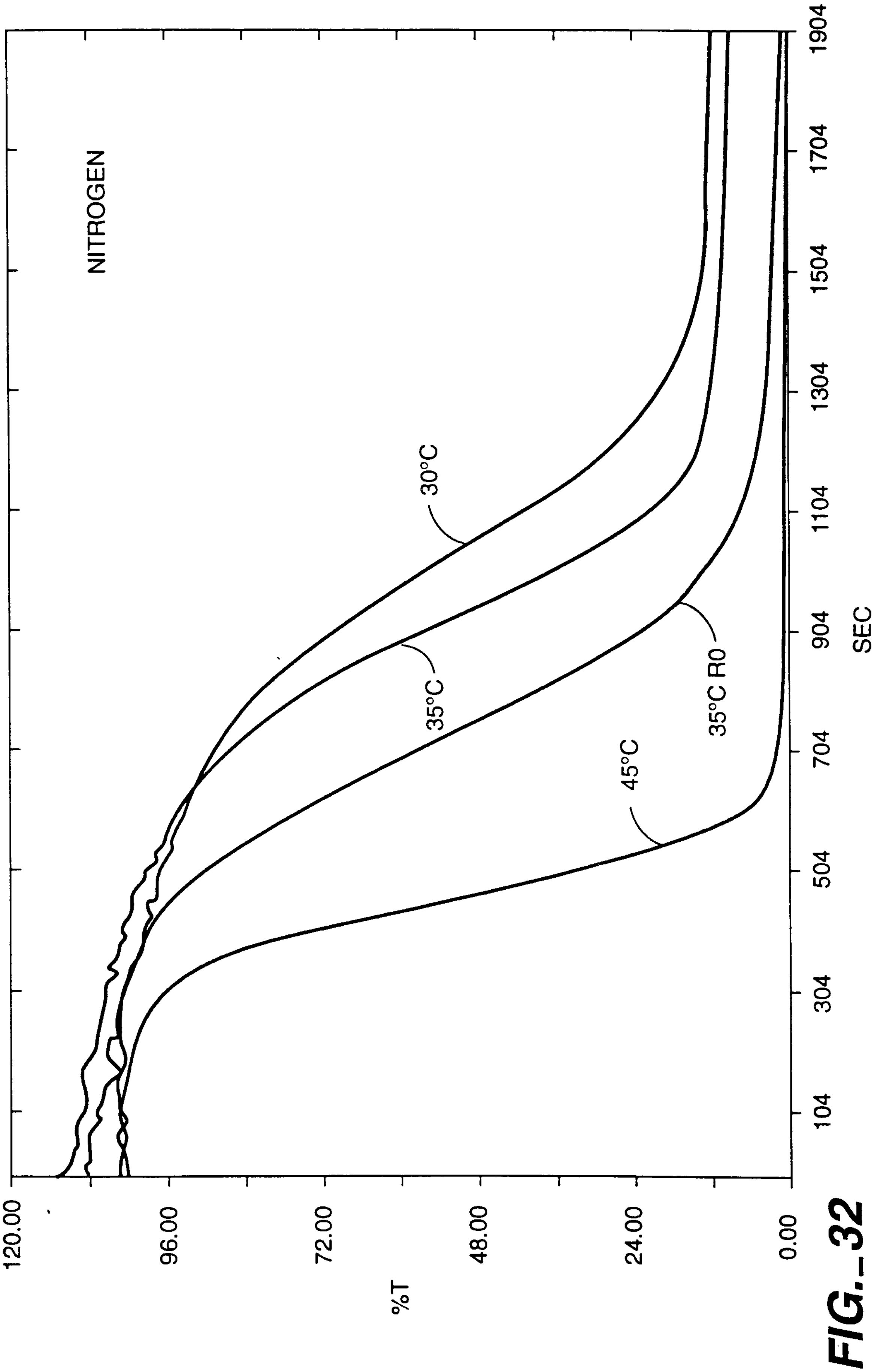
NITROGEN
%T
120.00
96.00
72.00
48.00
24.00
0.00
104
304
504
704
904
1104
1304
1504
1704
1904
SEC
30°C
35°C
35°C R0
45°C

FIG._32

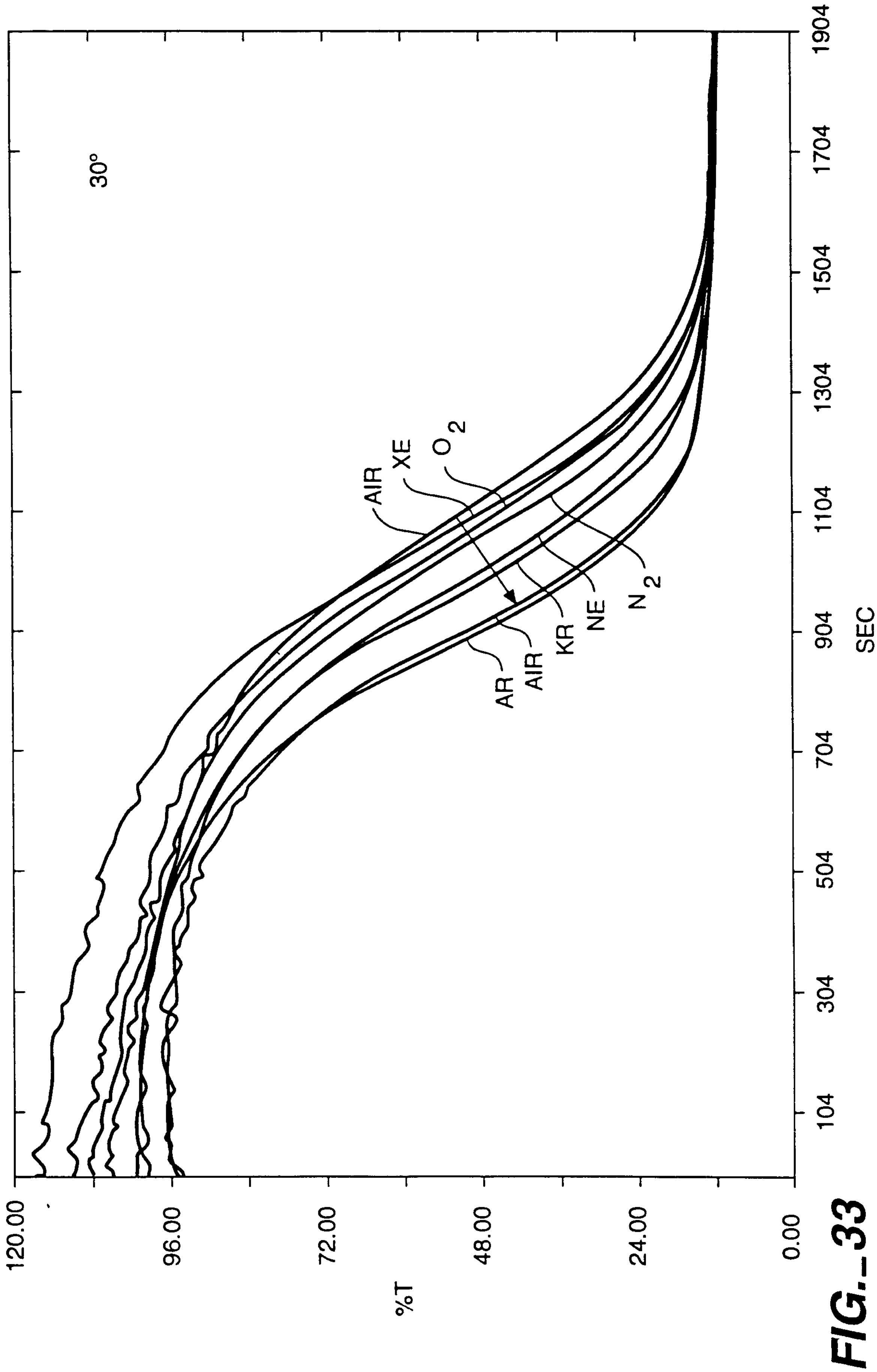
30°
%T
120.00
96.00
72.00
48.00
24.00
0.00
104
304
504
704
904
1104
1304
1504
1704
1904
SEC
AIR
XE
$O_2$
$N_2$
NE
KR
AIR
AR

FIG._33

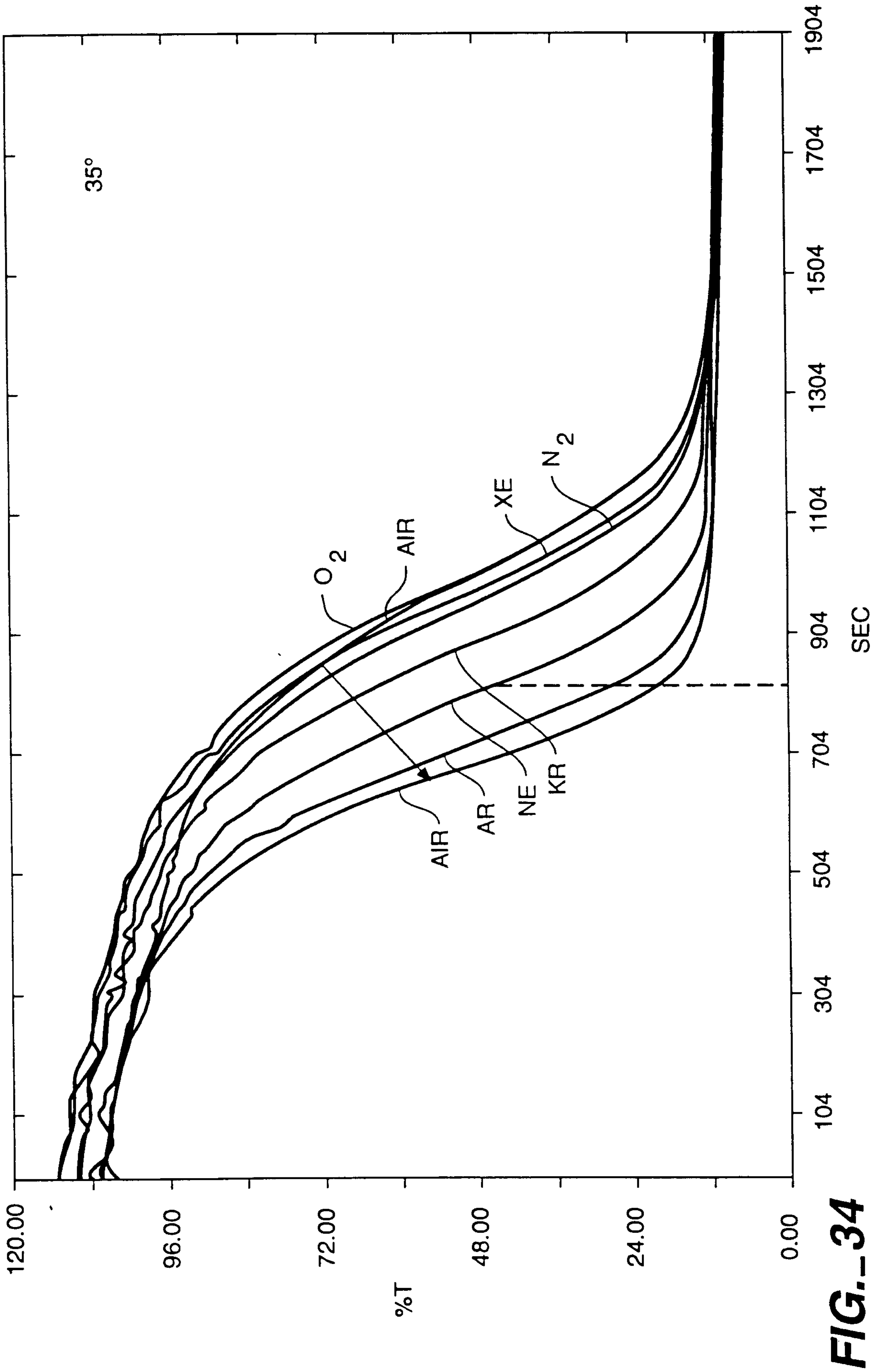
35°
%T
120.00
96.00
72.00
48.00
24.00
0.00
104
304
504
704
904
1104
1304
1504
1704
1904
SEC
O 2
AIR
XE
N 2
AIR
AR
NE
KR

FIG._34